(19) Europäisches Patentamt
European Patent Office
Office européen des brevets

(11) EP 4 484 536 A1

(12) EUROPEAN PATENT APPLICATION

(43) Date of publication:
**01.01.2025 Bulletin 2025/01**

(21) Application number: **23181577.0**

(22) Date of filing: **26.06.2023**

(51) International Patent Classification (IPC):
***C11D 3/37*** (2006.01) ***C08G 65/26*** (2006.01)
***C08F 218/04*** (2006.01) ***C08F 226/10*** (2006.01)
***C08F 283/06*** (2006.01) ***C08L 51/08*** (2006.01)

(52) Cooperative Patent Classification (CPC):
**C11D 3/3788; C08F 283/06; C08L 51/08; C11D 3/3707**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **The Procter & Gamble Company**
**Cincinnati, OH 45202 (US)**

(72) Inventors:
- **CHILTON, Ruth**
**Newcastle upon Tyne, NE12 9BZ (GB)**
- **EBERT, Sophia Rosa**
**D-67056 Ludwigshafen (DE)**
- **GORCZYNSKA-COSTELLO, Katarzyna**
**Newcastle upon Tyne, NE12 9BZ (GB)**
- **HUELSKOETTER, Frank**
**65824 SCHWALBACH AM TAUNUS (DE)**
- **JEHN-RENDU, Christian**
**D-67056 Ludwigshafen (DE)**
- **NIEBERLE, Joerg**
**D-67056 Ludwigshafen (DE)**
- **SCHOEN, Florian**
**D-67056 Ludwigshafen (DE)**
- **SI, Gang**
**Newcastle upon Tyne, NE12 9BZ (GB)**

(74) Representative: **P&G Patent Belgium UK**
**N.V. Procter & Gamble Services Company S.A.**
**Temselaan 100**
**1853 Strombeek-Bever (BE)**

(54) **FABRIC AND HOME CARE COMPOSITION**

(57) The present invention relates to fabric and home care compositions comprising a fabric and home care ingredient, a graft polymer and a propoxylated polyol.

EP 4 484 536 A1

## Description

FIELD OF THE INVENTION

The present invention relates to fabric and home care composition comprising a fabric and home care ingredient, a graft polymer and a propoxylated polyol.

BACKGROUND OF THE INVENTION

In fabric and home care industry, there is a strong need for new biodegradable cleaning polymers to provide both excellent primary (i.e., soil removal) and secondary (i.e., whiteness maintenance) cleaning benefits for both hydrophobic and hydrophilic stains, particularly under quick and cold wash conditions. In additional to the cleaning benefit, fabric and home care composition comprising the new biodegradable polymers should also provide delightful sensorial experiences for consumer, including suds profile during wash, freshness profile during wash and after wash, fabric feel during wash during wash and after wash.

The objective of the present invention is to provide a fabric and home care composition comprising a fabric and home care ingredient, a biodegradable graft polymer, and a biodegradable propoxylated polyol. The composition of the present inventions not only delivers strong cleaning benefit, but also delivers delightful sensorial experience, particularly good flash suds in the presence of soil.

DETAILED DESCRIPTION OF THE INVENTION

Fabric and Home Care Composition:

Any fabric and home care composition are suitable. Composition may or may not include surfactant. Preferred composition are detergents and cleaning compositions. Especially preferred are fabric treatment compositions, even more preferred are laundry detergent compositions.

Fabric and home care compositions are typically suitable for: (a) the care of finished textiles, cleaning of finished textiles, sanitization of finished textiles, disinfection of finished textiles, detergents, stain removers, softeners, fabric enhancers, stain removal or finished textiles treatments, pre and post wash treatments, washing machine cleaning and maintenance, with finished textiles intended to include garments and items made of cloth; (b) the care of dishes, glasses, crockery, cooking pots, pans, utensils, cutlery and the like in automatic, in-machine washing, including detergents, preparatory post treatment and machine cleaning and maintenance products for both the dishwasher, the utilized water and its contents; or (c) manual hand dish washing detergents.

The composition may comprise from 0.1 to 10.0 wt% of the graft polymer, preferably from 0.2 to 8.0 wt%, more preferably from 0.3 to 6.0 wt%, more preferably from 0.4 to 4 wt%, mostly preferably in the range of from 0.5 to 3 wt%.

The composition may comprise from 0.1 to 10.0 wt% of the propoxylated polyol, preferably from 0.2 to 8.0 wt%, more preferably from 0.3 to 6.0 wt%, more preferably from 0.4 to 4 wt%, mostly preferably in the range of from 0.5 to 3 wt%.

The weight ratio of the graft polymer and the propoxylated polyol in the composition is between 99:1 to 1:99, preferably between 90:10 to 10:90, more preferably between 80:20 to 20:80, more preferably between 70:30, and most preferably between 65:35 to 35:65, such as 60:40, 50:50, 40:60.

The composition comprises at least one fabric and home care ingredient, more details are described in the description.

The composition may comprise from 1.0wt% to 70wt% detersive surfactant.

Fabric and home care compositions include, but not limit to:

Laundry Detergent Composition: Suitable laundry detergent compositions include laundry detergent powder compositions, laundry beads, laundry detergent liquid compositions, laundry detergent gel compositions, laundry sheets, fibrous articles and water-soluble unit dose laundry detergent compositions.

Fabric Enhancers: Suitable fabric enhancers are liquid fabric enhancers including compact liquid fabric enhancers, and solid fabric enhancers including fabric enhancer beads and sheets.

Dish-washing Detergent Composition: Suitable dish-washing detergent compositions include hand dish-washing detergent compositions and automatic dish-washing detergent compositions. Such as automatic dish-washing powder, tablet and pouches.

Hard Surface Cleaner Compositions: Suitable hard surface cleaner compositions include product that can be directly applied onto hard surface, eg. by a spray, and products that can be diluted in water before been applied onto hard surface.

The graft polymer:

The graft polymer of the present invention comprises:

(A) a polyalkylene oxide backbone (A) comprises structural units derived from monomers selected from the group of ethylene oxide, 1,2-propylene oxide, 1,2-butylene oxide, 2,3-butylene oxide, 1,2-pentene oxide or 2,3-pentene oxide, and
(B) polymeric sidechains grafted onto the block copolymer backbone, wherein said polymeric sidechains (B) comprises at least one vinyl ester monomer (B 1) and optionally N-vinylpyrrolidone as optional further monomer (B2).

The graft polymer of the present invention includes Type I, Type II and Type III depending on the type of the polyalkylene oxide backbone (A).

Type I:

The graft polymer comprising:

(A) a block copolymer backbone as a graft base, wherein said block copolymer backbone (A) comprises structural units derived from at least two types of monomers selected from the group of ethylene oxide, 1,2-propylene oxide, 1,2-butylene oxide, 2,3-butylene oxide, 1,2-pentene oxide or 2,3-pentene oxide, and
(B) polymeric sidechains grafted onto the block copolymer backbone, wherein said polymeric sidechains (B) are obtainable by polymerization of at least one vinyl ester monomer (B 1) and optionally N-vinylpyrrolidone as optional further monomer (B2).

The ratio of the block copolymer backbone (A) versus the polymeric side chains (B) within the graft polymers according to the present invention is not limited to specific values. Any ratio known to a person skilled in the art can be employed. However, graft polymers are preferred that comprise 20 to 95% by weight of the block copolymer backbone (A) and 5 to 80% by weight of the polymeric sidechains (B) (in relation to the total weight of the graft polymer).
Preferably the graft polymer comprises 40 to 85% by weight, more preferably 50 to 75% by weight of the block copolymer backbone (A), and preferably 15 to 60% by weight, more preferably 25 to 50% by weight of the polymeric sidechains (B) (in relation to the total weight of the graft polymer).
Block copolymer backbones (A) as such are known to a person skilled in the art as well as methods for producing such block copolymers backbones. Various types of such block copolymer backbones are commercially available, for example under the trademark series "Pluronic" (BASF SE, Ludwigshafen, Germany). Specific examples are Pluronic PE 6100, Pluronic PE 6800 or Pluronic PE 3100.
Suitable block copolymer backbones (A) to be employed within the present invention are described, for example, within EP-A 0 362 688. Within the present invention, it is preferred that the respective monomer to be employed for preparing the individual blocks of the block copolymer backbone (A) are added in sequence. However, it is possible at the transition of the feed from one monomer to the other to produce so called "dirty structures" wherein at the edge/border of the respective block a small number of monomers of the respective neighboring block may be contained within the individual block to be considered. However, it is preferred that the block copolymer backbones (A) according to the present invention do not contain any so called "dirty structures" or "dirty passages" at the respective border of the blocks.
In respect of the block copolymer backbone (A) of the graft polymers according to the present invention, it is preferred that the block copolymer backbone (A) is obtainable by polymerization of

i) at least two monomers selected from the group of ethylene oxide, 1,2 propylene oxide or 1,2-butylene oxide, preferably by polymerization of ethylene oxide and 1,2-propylene oxide as monomers, and/or
ii) one of the at least two monomers employed is ethylene oxide, preferably the second monomer employed is 1,2-propylene oxide, and/or

wherein, the number (x) of individual blocks within the block copolymer backbone (A) is an integer, wherein x has a value from 2 to 10, preferably x has a value from 2 to 5, more preferably x is 2 or 3, most preferably x is 3.
The graft polymer according to the present invention may have any molecular weight known to a person skilled in the art. However, it is preferred that the graft polymer has a mean molecular weight $M_w$ of from 1 000 to 100 000 g/mol, preferably from 2 000 to 45 000 g/mol and more preferably from 3 000 to 30 000 g/mol.
The graft polymers according to the present invention preferably have a low polydispersity. It is preferred that the graft polymer has a polydispersity $M_w/M_n$ of < 3, preferably < 2.5, more preferably < 2.3, and most preferably in the range

from 1.0 to 2.2 (with $M_w$ = mean molecular weight and $M_n$ = mean molecular mass $[g/_{mol} / g/_{mol}]$). The respective values of $M_w$ and/or $M_n$ can be determined as described within the experimental section below.

The block copolymer backbone (A) contained within the graft polymer according to the present invention may either be capped or not capped (uncapped) at the respective endgroups of the backbone. By consequence, within the present invention, it is possible that the block copolymer backbone (A) is optionally capped at one or both endgroups, preferably the block copolymer backbone (A) is not capped at both endgroups or, if the block copolymer backbone (A) is capped, the capping is done by $C_1$-$C_{25}$-alkyl groups.

In one embodiment of the present invention, it is preferred that the block copolymer backbone (A) is a triblock copolymer of polyethylene oxide (PEG) and polypropylene oxide (PPG).

Within the context of the present invention, it is generally preferred that the graft polymer has a block copolymer backbone (A) having the structure according to formula (A1) or formula (A2) with formula (A1) is defined as follows:

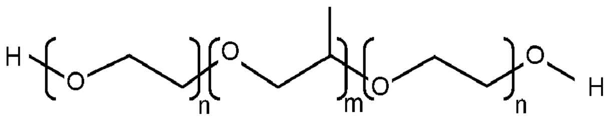

(A1)

with

n is an integer in the range of 2 to 100, preferably of 3 to 80, and
m is an integer in the range of 2 to 100, preferably of 10 to 70, more preferably of 14 to 54, or

formula (A2) is defined as follows:

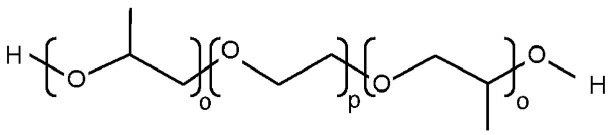

(A2)

with

o is an integer in the range of 2 to 100, preferably of 5 to 50, more preferably of 8 to 27, and
p is an integer in the range of 2 to 100, preferably of 5 to 50, more preferably of 7 to 24.

Block copolymers (A) can contain different levels of hydrophilic ethylene glycol which influences the overall properties of the graft polymer. The total EO content (%EO) describing the total amount of ethylene glycol units in the block copolymer is defined as:

$$\%EO = m(EO) / (m(\text{total backbone}))$$

wherein m(EO) is the total mass of the ethylene glycol units and m(total backbone) is the total mass of the backbone. The block copolymers can be low, medium or high respective %EO which has effects on the biodegradation properties as well as the performance in laundry formulations. The ranges are defined as follows:

- Low: 5 - 20 %EO
- Medium: 21 - 50 %EO
- High: 51 - 90 %EO

In respect of the polymeric sidechains (B) contained within the graft polymer according to the present invention, it is preferred that the polymeric sidechains (B) are obtained by radical polymerization and/or the at least one vinyl ester monomer (B1) is vinyl acetate or vinyl propionate, more preferably vinyl acetate.

As vinyl ester monomer (B1) any further vinyl ester besides vinyl acetate or vinyl propionate may be employed which are known to a person skilled in the art. In case N-vinylpyrrolidone as optional further monomer (B2) is employed for preparing the polymeric sidechains (B) within the graft polymers according to the present invention, the ratio of the mandatory vinyl ester monomer (B1) versus said further monomer (B2) may have any value known to a person skilled in

the art. However, the amount of vinyl ester monomer (B1) is usually not smaller than 1% by weight (in relation to the sum of (B1) and (B2)). By consequence, the polymeric sidechains (B) may be obtained by, preferably, radical polymerization of 1 to 100% by weight of monomer (B1), which is most preferably vinyl acetate, and 0 to 99% by weight of N-vinylpyrrolidone as optional further monomer (B2).

However, it is preferred within the context of the present invention that the polymeric sidechains (B) are obtained by free radical polymerization of

(B 1) 10 to 100% by weight (in relation to the sum of (B1) and (B2)) of at least one vinyl ester monomer (B1), preferably 50 to 100% by weight, more preferably 75 to 100% by weight, and

(B2) 0 to 90% by weight (in relation to the sum of (B1) and (B2)) of N-vinylpyrrolidone as further monomer (B2), preferably 0 to 50% by weight, more preferably 0 to 25% by weight.

It is even more preferred within the context of the present invention that the polymeric sidechains (B) are obtained by radical polymerization of 100% by weight (in relation to the total amount of monomers employed) of at least one vinyl ester monomer (B1), which is preferably vinyl acetate or vinyl propionate, more preferably vinyl acetate.

In another embodiment of the present invention, the polymeric sidechains (B) of the graft polymer according to the present invention are fully or at least partially hydrolyzed after the graft polymer as such is obtained. This means that the full or at least partial hydrolyzation of the polymeric sidechains (B) of the graft polymer is carried out after the polymerization process of the polymeric sidechains (B) is finished.

Due to this full or at least partial hydrolyzation of the polymeric sidechains (B) of the graft polymers according to the present invention, the respective sidechain units originating from the at least one vinyl ester monomer (B1) are changed from the respective ester function into the alcohol function within the polymeric sidechain (B). It has to be noted that the corresponding vinyl alcohol is not suitable to be employed as monomer within the polymerization process of the polymeric sidechains (B) due to stability aspects. In order to obtain an alcohol function (hydroxy substituent) within the polymeric sidechains (B) of the graft polymers according to the present invention, the alcohol function has to be introduced by hydrolyzing the ester function of the sidechains.

From a theoretical point of view, each ester function of the polymeric sidechain (B) may be replaced by an alcohol function (hydroxy group). In such a case, the polymeric sidechain is fully hydrolyzed (saponified). It has to be noted that in case N-vinylpyrrolidone is employed as further monomer, no hydrolyzation takes place at those units of the polymeric sidechain (B) which originates from N-pyrrolidone employed as further monomer (B).

The hydrolysis can be carried out by any method known to a person skilled in the art. For example, the hydrolysis can be induced by addition of a suitable base, such as sodium hydroxide or potassium hydroxide. However, within this embodiment of the present invention it is preferred that the hydrolyzation of the polymeric sidechains (B) is only carried out partially, for example, to an extend of up to 20%, 40% or 60%. Within this embodiment, it is preferred that the polymeric sidechains (B) are fully or partially hydrolyzed after polymerization, preferably to an extent of up to 50% in relation to the amount of the at least one vinyl ester monomer (B1) employed within the polymerization.

Within the context of the present invention, it is preferred that no other monomers besides those as defined above in connection with the at least one vinyl ester monomer (B1) and the optionally present N-vinylpyrrolidone as optional further monomer (B2) are employed within the respective polymerization process for obtaining the polymeric sidechains (B). However, if any further polymeric monomers besides the monomers according to (B1) and optionally (B2) are present, such monomers are present in an amount of less than 1% of the total amount of monomers employed for obtaining the polymeric sidechains (B). Preferably, the amount of said additional monomers is less than 0.5% by weight, even more preferably less than 0.01% by weight, most preferably, there is a total absence of any additional monomer besides the monomers (B1) and optionally (B2).

Within the present invention, it is particularly preferred that no monomers are employed comprising an acid function. In particular, the monomers employed for obtaining the polymeric sidechains (B) of the graft polymers according to the present invention do not comprise any acidfunctional monomers selected from acrylic acid, methacrylic acid, maleic acid, itaconic acid, crotonic acid, vinyl-acetic acid or acryloxy-propionic acid.

Type II:

The graft polymer comprising:

(A) a polyalkylene oxide backbone (A) comprises structural units derived from at least two types of monomers selected from the group of ethylene oxide, 1,2-propylene oxide, 1,2-butylene oxide, 2,3-butylene oxide, 1,2-pentene oxide or 2,3-pentene oxide,

a. wherein the distribution of the alkylene oxide moieties within the copolymer backbone is in random order, and

b. wherein the molecular weight of the copolymer backbone Mn in g/mol is within 500 to 7000, preferably not more than 6000, more preferably not more than 5000, even more preferably not more than 4500, even more preferably not more than 4000, even more preferably not more than 3500 and most preferably not more than 3000, and preferably at least 1000, more preferably at least 1200,
and

(B) polymeric sidechains grafted onto the copolymer backbone, wherein said polymeric sidechains (B) are obtainable by polymerization of at least one vinyl ester monomer (B 1), and optionally at least one other monomer (B2), wherein - if present - the weight ratio of monomer (B2) to monomer (B1) is less than 0.5, preferably less than 0.4, more preferably less than 0.3, even more preferably less than 0.2, and most preferably less than 0.1,

comprising in percent by weight in relation to the total weight of the graft polymer 25 to 85%, preferably 30 to 80%, more preferably 35 to 80%, even more preferably 40 to 75%, and most preferably 55 to 75%, of the copolymer backbone (A), And
15 to 75%, preferably 20 to 70%, more preferably 20 to 65 %, even more preferably 25 to 60%, most preferably 25 to 45%, of the polymeric sidechains (B).

The ratio of the random copolymer backbone (A) versus the polymeric side chains (B) within the graft polymers as exemplified in the present invention may not be limited to specific values; any ratio known to a person skilled in the art can in principle be employed. However, good results are obtained when using the ratios as detailed before.

Copolymer backbones (A) as such are known to a person skilled in the art as well as methods for producing such copolymers backbones, e.g., in EP362688. Such methods are typically the co-polymerization of at least two alkylene oxides using known means.

Hence, suitable copolymer backbones (A) with the alkylene oxides arranged in random order to be employed within the present invention can be obtained easily by standard alkoxylation polymerization processes employing the required alkylene oxides in the required ratios.

In respect of the copolymer backbone (A) of the graft polymers according to the present invention, it is preferred that the copolymer backbone (A) is obtainable by polymerization of

i) at least two monomers selected from the group of ethylene oxide, 1,2-propylene oxide or 1,2-butylene oxide, preferably at least ethylene oxide being selected as one of the monomers, more preferably only ethylene oxide and propylene oxide being selected as monomers, and/or
ii) the relative amount of EO in the polymer backbone A is within 5 to 95%, preferably 10 to 90%, more preferably 15 to 85%, even more preferably at least 20 to 80% (all as weight percent in relation to the total mass of alkylene oxides in the polymer backbone (A)).

In respect of the graft polymer, it is further preferred that any of the previously defined preferred options i) and ii) for the polymer backbone may be combined with a third preferred option, i.e. that
iii) essentially no monomer (B2) is employed for the polymerization to obtain the side chains (B).

The graft polymers according to the present invention preferably have a low polydispersity. It is preferred that the graft polymer of the invention and/or as detailed before has a polydispersity $M_w/M_n$ of < 5, preferably <3.5, more preferably <3, and most preferably in the range from 1.0 to 2.5 (with $M_w$ = weight average molecular weight and $M_n$ = number average molecular weight; with polydispersity being without unit $[{}^{g}/_{mol}\ /\ {}^{g}/_{mol}]$). The respective values of $M_w$ and/or $M_n$ can be determined as described within the experimental section below.

The copolymer backbone (A) contained within the graft polymer according to the present invention and/or as detailed before may either be capped or not capped (uncapped) at the respective end-groups of the backbone. By consequence, within the present invention, it is possible that the copolymer backbone (A) is optionally capped at one or both end-groups, preferably the copolymer backbone (A) is not capped at both end-groups or, if the copolymer backbone (A) is capped, the capping is done by $C_1$-$C_{25}$-alkyl groups, preferably $C_1$ to $C_4$-alkyl groups.

In one specifically preferred embodiment of the present invention, the graft polymer of the invention and/or as detailed before comprises

(A) 55 to 75% by weight (in relation to the total weight of the graft polymer) of the copolymer backbone (A) which is obtainable by polymerization of ethylene oxide and 1,2-propylene oxide as alkylene oxide monomers, the alkylene oxide monomer distribution in the backbone is in random order, and the molecular weight of the copolymer backbone Mn in g/mol is within 1200 to 2500, with the relative amount of EO in the polymer backbone (A) being within 20 to 80% (by weight in relation to the total mass of alkylene oxides in the polymer backbone (A))

and

(B) 25 to 45% by weight (in relation to the total weight of the graft polymer) of the polymeric sidechains grafted onto the copolymer backbone which are obtained from vinyl acetate as the sole vinyl ester monomer (B 1), with essentially no other monomer (B2) being employed

Copolymers (A) can contain different levels of hydrophilic ethylene glycol which influences the overall properties of the graft polymer. The copolymers can be low, medium or high respective %EO which has effects on the biodegradation properties as well as the performance in laundry formulations. Hence, to achieve a good performance upon application but also upon biodegradation, it is preferred that the relative amount of EO in the polymer backbone (A) being within 20 to 80% (by weight in relation to the total mass of alkylene oxides in the polymer backbone (A)).

In respect of the polymeric sidechains (B) contained within the graft polymer according to the present invention, it is preferred that the polymeric sidechains (B) are obtained by radical polymerization and/or the at least one vinyl ester monomer (B 1).

As vinyl ester monomer (B 1) any further vinyl ester besides vinyl acetate, vinyl propionate or vinyl laurate may be employed which are known to a person skilled in the art, such as vinyl valerate, vinyl pivalate, vinyl neodecanoate, vinyl decanoate or vinyl benzoate.

In case an optional further monomer (B2) is employed for preparing the polymeric sidechains (B) within the graft polymers according to the present invention, the ratio of the mandatory vinyl ester monomer (B 1) versus said further monomer (B2) may in principle have any value known to a person skilled in the art. The amount of vinyl ester monomer (B 1) is usually not smaller than 1% by weight (in relation to the sum of (B 1) and (B2)).

However, in a preferred embodiment the graft polymer of the invention and/or as detailed before comprises polymeric sidechains (B) which are obtained or obtainable by radical polymerization of the at least one vinyl ester monomer (B 1) and optionally at least one other monomer (B2), in the presence of the polymer backbone A,

wherein preferably at least 10 weight percent of the total amount of vinyl ester monomer (B 1) is selected from vinyl acetate, vinyl propionate and vinyl laurate, more preferably from vinyl acetate and vinyl laurate, and most preferably vinyl acetate, and wherein the remaining amount of vinyl ester may be any other known vinyl ester, wherein preferably at least 60, more preferably at least 70, even more preferably at least 80, even more preferably at least 90 weight percent, and most preferably essentially only (i.e. about 100wt.% or even 100 wt.%) vinyl acetate is employed as vinyl ester (weight percent being based on the total weight of vinyl ester monomers B 1 being employed), and wherein preferably essentially no monomer (B2) is employed.

Even more so, in a more preferred embodiment, the graft polymer of the invention and/or as detailed before comprises

(A) 55 to 75% by weight (in relation to the total weight of the graft polymer) of the copolymer backbone (A) which is obtainable by polymerization of ethylene oxide and 1,2-propylene oxide as alkylene oxide monomers, the alkylene oxide monomer distribution in the backbone is in random order, and the molecular weight of the copolymer backbone Mn in g/mol is within 1200 to 2500, with the relative amount of EO in the polymer backbone (A) being within 20 to 80% (by weight in relation to the total mass of alkylene oxides in the polymer backbone (A)) and

(B) 25 to 45% by weight (in relation to the total weight of the graft polymer) of the polymeric sidechains grafted onto the copolymer backbone which are obtained from vinyl acetate as the sole vinyl ester monomer (B 1), with essentially no monomer (B2) being employed.

The graft polymers of the invention may contain a certain amount of ungrafted polymers ("ungrafted side chains") made of vinyl ester(s), e.g. poly vinyl acetate in case only vinyl acetate is employed, and/or - when further monomers are employed - homo- and copolymers of vinyl ester(s) with the other monomers. The amount of such ungrafted vinylacetate-homo- and copolymers may be high or low, depending on the reaction conditions, but is preferably to be lowered and thus low. By this lowering, the amount of grafted side chains is preferably increased. Such lowering can be achieved by suitable reaction conditions, such as dosing of vinyl ester and radical initiator and their relative amounts and also in relation to the amount of backbone being present. This is generally known to a person of skill in the present field.

The inventive graft polymers maybe characterized by their degree of grafting (number of graft sites of the polymeric sidechains (B) on the copolymer backbone (A)). The degree of graft may be high or low, depending on the reaction conditions. Preferably, the degree of grafting is low to medium, more preferably low. "Low" in this aspect means that statistically less than 2 graft sites per 50 alkylene oxide units are present.

This adjustment of the degree of grafting and this amount of ungrafted polymers can be used to optimize the performance in areas of specific interest, e.g. certain (e.g. detergent-) formulations, application areas or desired cleaning etc. performance.

In another - not preferred - embodiment of the present invention, the polymeric sidechains (B) of the graft polymer according to the present invention are fully or - more preferred - at least partially hydrolyzed after the graft polymer as such

is obtained. This means that the full or at least partial hydrolyzation of the polymeric sidechains (B) of the graft polymer is carried out after the polymerization process of the polymeric sidechains (B) is finished.
Due to this full or at least partial hydrolyzation of the polymeric sidechains (B) of the graft polymers according to the present invention, the respective sidechain units originating from the at least one vinyl ester monomer (B 1) are changed from the respective ester function into the alcohol function within the polymeric sidechain (B). It has to be noted that the corresponding vinyl alcohol is not suitable to be employed as monomer within the polymerization process of the polymeric sidechains (B) due to stability aspects. In order to obtain an alcohol function (hydroxy substituent) within the polymeric sidechains (B) of the graft polymers according to the present invention, the alcohol function is typically introduced by hydrolyzing the ester function of the sidechains.

From a theoretical point of view, each ester function of the polymeric sidechain (B) may be replaced by an alcohol function (hydroxy group). In such a case, the polymeric sidechain is fully hydrolyzed ("saponified").

The hydrolysis can be carried out by any method known to a person skilled in the art. For example, the hydrolysis can be induced by addition of a suitable base, such as sodium hydroxide or potassium hydroxide.

However, within this embodiment of the present invention it is preferred that the hydrolyzation of the polymeric sidechains (B) is only carried out partially, for example, to an extend of up to 20 wt.%, 40 wt.% or 60 wt.% (in relation to the total weight of the polymeric sidechains). Even more preferred within this embodiment, the polymeric sidechains (B) are fully or partially hydrolyzed after polymerization, preferably to an extent of up to 50% in relation to the amount of the at least one vinyl ester monomer (B 1) employed within the polymerization.

However, in a most preferred embodiment of this invention, the polymeric sidechains (B) are not hydrolyzed after polymerization.

It is preferred that in the graft polymers of the invention and/or as detailed before no other monomers besides those as defined above in connection with the at least one vinyl ester monomer (B 1) and the optionally present further monomer (B2) are employed within the respective polymerization process for obtaining the polymeric sidechains (B). However, if any further polymeric monomers besides the monomers according to (B 1) and optionally (B2) are present, such monomers (other than B 1 and B2) are present in an amount of less than 1% of the total amount of monomers employed for obtaining the polymeric sidechains (B). Preferably, the amount of said additional monomers is less than 0.5% by weight, even more preferably less than 0.01% by weight, most preferably, there is a total absence of any additional monomer besides the monomers (B1) and optionally (B2).

In a more preferred embodiment thereof, the weight ratio of monomer (B2) to monomer (B 1) is less than 0.5, preferably less than 0.4, more preferably less than 0.3, even more preferably less than 0.2, and most preferably less than 0.1; even more preferably also monomers (B2) are present in an amount of less than 1% of the total amount of monomers employed for obtaining the polymeric sidechains (B). Even more preferably, the amount of monomers (B2) is less than 0.5% by weight, even more preferably less than 0.01% by weight, most preferably, there are essentially no monomers (B2) present besides the monomers (B 1).

Monomers (B2) may in principle any monomer polymerizable with vinyl ester-monomers (B 1).

Within the present invention, it is particularly preferred that no monomers are employed comprising an acid function. In particular, the monomers employed for obtaining the polymeric sidechains (B) of the graft polymers according to the present invention do not comprise any acidfunctional monomers such as acrylic acid, methacrylic acid, maleic acid, itaconic acid, crotonic acid, vinyl-acetic acid or acryloxy-propionic acid and the like.

Inventive polymers have at least one of the following properties, preferably two or more, to be successfully employed in the various fields of applications targeted with this present invention:

a) biodegradability of a certain level, such biodegradability of the graft polymer being at least 15, preferably at least 20, preferably at least 25, preferably at least 30, preferably at least 35, even more preferably at least 40 % within 28 days when tested under OECD301F (measurement method see also experimental section).

b) Water-solubility of the polymers to a certain extent, to be able to employ the polymers within the aqueous environment typically present in the fields of applications as generally targeted with this present invention. Preferably inventive polymers should exhibit a medium to good, more preferably a very good solubility in the environment of an aqueous formulation as typically employed in such fields for the various kinds of formulations, e.g. dish washing, automatic dish-washing, hard surface cleaning, fabric cleaning, fabric care, cosmetic formulations etc.

c) Viscosities of the polymer solutions should optionally be such that at reasonably high solid concentrations of the polymer as to be handled in and after production and to be provided to the user, which could be e.g. as a "pure" (then typically liquid) product, dissolved in a solvent, typically an aqueous solution containing water and organic solvents, only water or only organic solvents, the viscosity of such polymer or polymer solution being in a range that allows typical technical process steps such as pouring, pumping, dosing etc. Hence, the viscosities should be preferably in a range of about up to less than 4000 mPas, more preferably up to 3500 mPas, even more preferably up to 3000 mPas, such as up to 4500, 3750, 3250, 2750 or even 2600 or below such as 2500, 2000, 1750, 1500, 1250, 1000, 750, 500, 250, 200, 150, or 100 mPas, at concentrations of the polymer (based on the total solid content of the polymer in

solution, as defined by weight percent of the dry polymer within the total weight of the polymer solution) of preferably at least 10 wt.%, more preferably at least 20, and even more preferably at least 40 wt.%, and most preferably at least 50 wt.%, such as at least 60, 70, 80 or even 90 wt.%. The viscosity may be measured at either 25 °C or at elevated temperature, e.g. temperatures of 50 or even 60 °C. By this a suitable handling of the polymer solutions in commercial scales is possible. It is of course evident that depending on the amount of solvent being added the viscosity is lower when the amount of solvent increases and vice versa, thus allowing for adjustment in case desired. It is also evident that the viscosity being measured depends on the temperature at which it is being measured, e.g. the viscosity of a given polymer with a given solid content of e.g. 80 wt.% will be higher when measured at lower temperature and lower when measured at a higher temperature. In a preferred embodiment the solid content is in between 70 and 99 wt.%, more preferably in between 75 and 85 wt.%, with no additional solvent being added but the polymer as prepared. In a more preferred embodiment, the solid content is in between 70 and 99 wt.%, more preferably in between 75 and 95 wt.%, with no additional solvent being added but the polymer as prepared, and the viscosity is lower than 3000 mPas, more preferably 3250, or even below 2750, 2600, 2500, 2000, 1750, 1500, 1250, 1000, 750, 500 or even 250 mPas, when measured at 60 °C. The viscosity may be determined as generally known for such polymers, preferably as described below in the experimental part.

To achieve these requirements, the following guidance can be given on how to achieve such properties of the inventive polymers:
Biodegradability increases generally with at least one of the following conditions:

- lower molecular weight $M_n$ of the random copolymer backbone (A) compared to higher molecular weight;
- lower weight percentage of polymeric side chains (monomer B) being grafted onto the backbone compared to higher weight percentages.

As further criteria of course the individual performance of a specific polymer needs to be evaluated and thus ranked for each individual formulation in a specific field of application. Due to the broad usefulness of the inventive polymers an exhaustive overview is not possible, but the present specification and examples give a guidance on how to prepare and select useful polymers of desired properties and how to tune the properties to the desired needs. One such criteria for the area of home care and especially fabric care of course it he performance upon washing, e.g. subjecting a certain material exhibiting stains of certain materials to a defined washing procedure.
The examples give some guidance for the application for washing of fabrics, i.e. the general area of fabric care.
Depending on the individual needs for a polymer exhibiting a defined degree of biodegradation, water solubility and viscosity (i.e. handling properties) the general and specific teachings herein - without being intended to be limited to the specific examples being given - will guide on how to obtain such polymer.

Type III:

The graft polymer comprising:

(A) 20 to 95%, preferably 30 to 90%, more preferably 40 to 85%, most preferably 50 to 80% of a polyalkylene oxide backbone (A) as a graft base,

which is obtainable by polymerization of ethylene oxide,
wherein the molecular weight of the polymer backbone Mn in g/mol is within 500 to 5000, preferably not more than 3500, more preferably not more than 3000, even more preferably not more than 2500, and most preferably not more than 2000, such as not more than 1800,
and

(B) 5 to 80%, preferably 10 to 70%, more preferably 15 to 60 %, most preferably 20 to 50%, of polymeric sidechains (B) grafted onto the polymer backbone, wherein said polymeric sidechains (B) are obtainable by polymerization of at least one vinyl ester monomer (B1), and optionally at least one other monomer (B2), wherein - if present - the weight ratio of monomer (B2) to monomer (B1) is less than 0.5, preferably less than 0.4, more preferably less than 0.3, even more preferably less than 0.2, and most preferably less than 0.1

(with all percentages as weight percent in relation to the total weight of the graft polymer).

Graft Polymers

Thus, the first subject-matter of the present invention relates to a graft polymer comprising:

(A) 20 to 95%, preferably 30 to 90%, more preferably 40 to 85%, most preferably 50 to 80% of a polymer backbone as a graft base,

which is obtainable by polymerization of ethylene oxide,
wherein the molecular weight of the polymer backbone Mn in g/mol is within 500 to 5000, preferably not more than 3500, more preferably not more than 3000, even more preferably not more than 2500, and most preferably not more than 2000, such as not more than 1800, and

(B) 5 to 80%, preferably 10 to 70%, more preferably 15 to 60 %, most preferably 20 to 50%, of polymeric sidechains (B) grafted onto the polymer backbone, wherein said polymeric sidechains (B) are obtainable by polymerization of at least one vinyl ester monomer (B1), and optionally at least one other monomer (B2), wherein - if present - the weight ratio of monomer (B2) to monomer (B1) is less than 0.5, preferably less than 0.4, more preferably less than 0.3, even more preferably less than 0.2, and most preferably less than 0.1, and - most preferably - essentially no monomer(s) (B2) are present.

(with all percentages as weight percent in relation to the total weight of the graft polymer).

The ratio of the polymer backbone (A) versus the polymeric side chains (B) within the graft polymers as exemplified in the present invention may not be limited to specific values; any ratio known to a person skilled in the art can in principle be employed. However, good results are obtained when using the ratios as detailed before.

Polymer backbones (A) as such are known to a person skilled in the art as well as methods for producing such copolymers backbones. Such methods are typically the polymerization of ethylene oxide using known means.

Hence, suitable polymer backbones (A) to be employed within the present invention can be obtained easily by standard alkoxylation polymerization processes employing ethylene oxide.

In alternative embodiment the invention also encompasses a graft polymer comprising:

(A) a polymer backbone as a graft base, which is obtainable by polymerization of ethylene oxide,
and
(B) polymeric sidechains grafted onto the polymer backbone, wherein said polymeric sidechains (B) are obtainable by polymerization of at least one vinyl ester monomer (B1), and optionally at least one other monomer (B2), wherein - if present - the weight ratio of monomer (B2) to monomer (B1) is less than 0.5, preferably less than 0.4, more preferably less than 0.3, even more preferably less than 0.2, and most preferably less than 0.1, and

Wherein the product of formula

P = [molecular weight of the polymer backbone Mn in g/mol] x [percentage of amount of polymeric sidechains (B) based on total polymer weight, with polymer weight being set to "1" and the percentage of amount of (B) as fraction thereof]
is in the range of from 50 to 1500, preferably not more than 1200, more preferably not more than 1000, even more preferably not more than 800, and most preferably not more than 600 such as not more than 400, or even not more than 300, and
preferably at least 100, and more preferably at least 120.

The graft polymers according to the present invention preferably have a low polydispersity.

It is preferred that the graft polymer of the invention and/or as detailed before has a polydispersity $M_w/M_n$ of < 5, preferably < 3.5, more preferably < 3, and most preferably in the range from 1.0 to 2.5 (with $M_w$ = weight average molecular weight and $M_n$ = number average molecular weight; with polydispersity being without unit $[{}^{g}/_{mol}\ /\ {}^{g}/_{mol}]$). The respective values of $M_w$ and/or $M_n$ can be determined as described within the experimental section below.

In respect of the graft polymer of the previous embodiments and/or as detailed before, it is further preferred that monomer (B2) is not employed for the polymerization to obtain the side chains (B).

The polymer backbone (A) contained within the graft polymer according to the present invention and/or as detailed before may either be capped or not capped (uncapped) at the respective end-groups of the backbone. By consequence, within the present invention, it is possible that the copolymer backbone (A) is optionally capped at one or both end-groups, preferably the copolymer backbone (A) is not capped at both end-groups. Capping is done by $C_1$-$C_{25}$-

alkyl groups, preferably $C_1$ to $C_4$-groups.

In respect of the polymeric sidechains (B) contained within the graft polymer according to the present invention, it is preferred that the polymeric sidechains (B) are obtained by radical polymerization of at least one vinyl ester monomer (B 1).

As vinyl ester monomer (B 1) at least one of vinyl acetate, vinyl propionate and vinyl laurate is selected. Besides the mentioned at least one vinyl ester monomer (B 1) further vinyl ester monomers (B 1) may be employed which are known to a person skilled in the art, such as vinyl valerate, vinyl pivalate, vinyl neodecanoate, vinyl decanoate and/or vinyl benzoate.

However, in a preferred embodiment, the graft polymer of the invention and/or as detailed before comprises polymeric sidechains (B) which are obtained or obtainable by radical polymerization of the at least one vinyl ester monomer (B 1) and optionally at least one other monomer (B2), in the presence of the polymer backbone (A), wherein at least 10 weight percent of the total amount of vinyl ester monomer (B 1) is selected from vinyl acetate, vinyl propionate and vinyl laurate, more preferably from vinyl acetate and vinyl laurate, and most preferably vinyl acetate, and wherein the remaining amount of vinyl ester may be any other known vinyl ester, wherein preferably at least 60, more preferably at least 70, even more preferably at least 80, even more preferably at least 90 weight percent, and most preferably essentially only (i.e. about 100wt.% or even 100 wt.%) vinyl acetate is employed as vinyl ester (weight percent being based on the total weight of vinyl ester monomers B 1 being employed), and wherein preferably essentially no other monomer (B2) is employed.

Even more so, in an even more preferred embodiment, the graft polymer of the invention and/or as detailed before comprises

(A) 20 to 95%, preferably 30 to 90%, more preferably 40 to 85%, most preferably 50 to 80% of a polymer backbone as a graft base,

which is obtainable by polymerization of ethylene oxide,
wherein the molecular weight of the polymer backbone Mn in g/mol is within 500 to 5000, preferably not more than 3500, more preferably not more than 3000, even more preferably not more than 2500, and most preferably not more than 2000, such as not more than 1800,
and

(B) 5 to 80%, preferably 10 to 70%, more preferably 15 to 60 %, most preferably 20 to 50%, of polymeric sidechains (B) grafted onto the polymer backbone, wherein said polymeric sidechains (B) are obtainable by polymerization of at least one vinyl ester monomer (B 1), and optionally at least one other monomer (B2), wherein - if present - the weight ratio of monomer (B2) to monomer (B1) is less than 0.5, preferably less than 0.4, more preferably less than 0.3, even more preferably less than 0.2, and most preferably less than 0.1,

(with all percentages as weight percent in relation to the total weight of the graft polymer), wherein at least 10 weight percent of the total amount of the at least one vinyl ester monomer (B 1) is selected from vinyl acetate, vinyl propionate and vinyl laurate, more preferably from vinyl acetate and vinyl laurate, and most preferably vinyl acetate, and wherein the remaining amount of vinyl ester may be any other known vinyl ester, wherein preferably at least 60, more preferably at least 70, even more preferably at least 80, even more preferably at least 90 weight percent, and most preferably essentially only (i.e. about 100wt.% or even 100 wt.%) vinyl acetate is employed as vinyl ester (weight percent being based on the total weight of vinyl ester monomers B 1 being employed),
and wherein - more preferably - essentially no other monomer (B2) is employed.

In an alternative (to the preceding embodiment) more preferred embodiment, the graft polymer of the invention and/or as detailed before comprises

(A) a polymer backbone as a graft base (A),
which is obtainable by polymerization of ethylene oxide,
and
(B) polymeric sidechains grafted onto the polymer backbone, wherein said polymeric sidechains (B) are obtainable by polymerization of at least one vinyl ester monomer (B 1), and optionally at least one other monomer (B2), wherein - if present - the weight ratio of monomer (B2) to monomer (B 1) is less than 0.5, preferably less than 0.4, more preferably less than 0.3, even more preferably less than 0.2, and most preferably less than 0.1, and

Wherein the product of formula

P = [molecular weight of the polymer backbone Mn in g/mol] x [percentage of amount of polymeric sidechains (B) based on total polymer weight, with polymer weight being set to "1" and the percentage of amount of (B) as fraction thereof]

Is in the range of from 50 to 1500, preferably not more than 1200, more preferably not more than 1000, even more preferably not more than 800, and most preferably not more than 600 such as not more than 400, or even not more than 300, and preferably at least 100, and more preferably at least 120,

wherein at least 10 weight percent of the total amount of the at least one vinyl ester monomer (B1) is selected from vinyl acetate, vinyl propionate and vinyl laurate, more preferably from vinyl acetate and vinyl laurate, and most preferably vinyl acetate, and wherein the remaining amount of vinyl ester may be any other known vinyl ester, wherein preferably at least 60, more preferably at least 70, even more preferably at least 80, even more preferably at least 90 weight percent, and most preferably essentially only (i.e. about 100wt.% or even 100 wt.%) vinyl acetate is employed as vinyl ester (weight percent being based on the total weight of vinyl ester monomers B 1 being employed),
and wherein - more preferably - essentially no other monomer (B2) is employed.

The graft polymers of the invention may contain a certain amount of ungrafted polymers ("ungrafted side chains") made of vinyl ester(s), e.g. poly vinyl acetate in case only vinyl acetate is employed, and/or - when further monomers are employed - homo- and copolymers of vinyl ester(s) with the other monomers. The amount of such ungrafted vinyl ester-homo- and copolymers may be high or low, depending on the reaction conditions, but is preferably to be lowered and thus low. By this lowering, the amount of grafted side chains is preferably increased. Such lowering can be achieved by suitable reaction conditions, such as dosing of vinyl ester and radical initiator and their relative amounts and also in relation to the amount of backbone being present. This is generally known to a person of skill in the present field.

The inventive graft polymers maybe characterized by their degree of grafting (number of graft sites of the polymeric sidechains (B) on the polymer backbone (A)). The degree of graft may be high or low, depending on the reaction conditions. Preferably, the degree of grafting is low to medium, more preferably low. "Low" in this aspect means that statistically less than 2 graft sites per 50 alkylene oxide units are present.

This adjustment of the degree of grafting and this amount of ungrafted polymers can be used to optimize the performance in areas of specific interest, e.g. certain (e.g. detergent-) formulations, application areas or desired cleaning etc. performance.

In another - not preferred - embodiment of the present invention, the polymeric sidechains (B) of the graft polymer according to the present invention are fully or - more preferred - at least partially hydrolyzed after the graft polymer as such is obtained. This means that the full or at least partial hydrolyzation of the polymeric sidechains (B) of the graft polymer is carried out after the polymerization process of the polymeric sidechains (B) is finished.

Due to this full or at least partial hydrolyzation of the polymeric sidechains (B) of the graft polymers according to the present invention, the respective sidechain units originating from the at least one vinyl ester monomer (B 1) are changed from the respective ester function into the alcohol function within the polymeric sidechain (B). It has to be noted that the corresponding vinyl alcohol is not suitable to be employed as monomer within the polymerization process of the polymeric sidechains (B) due to stability aspects. In order to obtain an alcohol function (hydroxy substituent) within the polymeric sidechains (B) of the graft polymers according to the present invention, the alcohol function is typically introduced by hydrolyzing the ester function of the sidechains.

From a theoretical point of view, each ester function of the polymeric sidechain (B) may be replaced by an alcohol function (hydroxy group). In such a case, the polymeric sidechain is fully hydrolyzed ("saponified").

The hydrolysis can be carried out by any method known to a person skilled in the art. For example, the hydrolysis can be induced by addition of a suitable base, such as sodium hydroxide or potassium hydroxide.

However, within this embodiment of the present invention it is preferred that the hydrolyzation of the polymeric sidechains (B) is only carried out partially, for example, to an extend of up to 20wt.%, 40wt.% or 60wt.% (in relation to the total weight of the polymeric sidechains). Even more preferred within this embodiment, the polymeric sidechains (B) are fully or partially hydrolyzed after polymerization, preferably to an extent of up to 50% in relation to the amount of the at least one vinyl ester monomer (B 1) employed within the polymerization.

However, in a most preferred embodiment of this invention, the polymeric sidechains (B) are not hydrolyzed after polymerization.

It is preferred that in the graft polymers of the invention and/or as detailed before no other monomers besides those as defined above in connection with the at least one vinyl ester monomer (B 1) and the optionally present further monomer (B2) are employed within the respective polymerization process for obtaining the polymeric sidechains (B).

However, if any further polymeric monomers besides the monomers according to (B 1) and optionally (B2) are present, such monomers (other than B 1 and B2) are present in an amount of less than 1% of the total amount of monomers employed for obtaining the polymeric sidechains (B). Preferably, the amount of said additional monomers is less than 0.5% by weight, even more preferably less than 0.01% by weight, most preferably, there is a total absence of any additional monomer besides the monomers (B1) and optionally (B2).

In a more preferred embodiment thereof, the weight ratio of monomer (B2) to monomer (B1) is less than 0.5, preferably less than 0.4, more preferably less than 0.3, even more preferably less than 0.2, and most preferably less than 0.1; even more preferably also monomers (B2) are present in an amount of less than 1% of the total amount of monomers employed for obtaining the polymeric sidechains (B). Even more preferably, the amount of monomers (B2) is less than 0.5% by weight, even more preferably less than 0.01% by weight, most preferably, there are essentially no monomers (B2) present besides the monomers (B 1).

Monomers (B2) may in principle any monomer polymerizable with vinyl ester-monomers (B 1).

Within the present invention, it is particularly preferred that no monomers are employed comprising an acid function. In particular, the monomers employed for obtaining the polymeric sidechains (B) of the graft polymers according to the present invention do not comprise any acidfunctional monomers such as acrylic acid, methacrylic acid, maleic acid, itaconic acid, crotonic acid, vinyl-acetic acid or acryloxy-propionic acid and the like.

Inventive polymers have at least one of the following properties, preferably two or more, to be successfully employed in the various fields of applications targeted with this present invention:

a) bio-degradability of a certain level, such bio-degradability of the graft polymer being at least 30, preferably at least 35, even more preferably at least 40 % such as at least 45, 50, 55, 60, 65, 70, 75, 80 or 85%, within 28 days when tested under OECD301F (measurement method see experimental section).

b) Water-solubility of the polymers of a certain extent, to be able to employ the polymers within the aqueous environment typically present in the fields of applications as generally targeted with this present invention. Preferably inventive polymers should exhibit a medium to good, more preferably a very good solubility in the environment of an aqueous formulation as typically employed in such fields for the various kinds of formulations, e.g. dish washing, automatic dish-washing, hard surface cleaning, fabric cleaning, fabric care, cosmetic formulations etc.

c) Viscosities of the polymer solutions should be such that at reasonably high solid concentrations of the polymer as to be handled in and after production and to be provided to the user, which could be e.g. as a "pure" (then typically liquid) product, dissolved in a solvent, typically an aqueous solution containing water and organic solvents, only water or only organic solvents, the viscosity of such polymer or polymer solution being in a range that allows typical technical process steps such as pouring, pumping, dosing etc. Hence, the viscosities should be preferably in a range of about up to less than 4000 mPas, more preferably up to 3500 mPas, even more preferably up to 3000 mPas, such as up to 4500, 3750, 3250, 2750 or even 2600 or below such as 2500, 2000, 1750, 1500, 1250, 1000, 750, 500, 250, 200, 150, or 100 mPas, at concentrations of the polymer (based on the total solid content of the polymer in solution, as defined by weight percent of the dry polymer within the total weight of the polymer solution) of preferably at least 10 wt.%, more preferably at least 20, and even more preferably at least 40 wt.%, and most preferably at least 50 wt.%, such as at least 60, 70, 80 or even 90 wt.%. The viscosity may be measured at either 25 °C or at elevated temperature, e.g. temperatures of 50 or even 60 °C. By this a suitable handling of the polymer solutions in commercial scales is possible. It is of course evident that depending on the amount of solvent being added the viscosity is lower when the amount of solvent increases and vice versa, thus allowing for adjustment in case desired. It is also evident that the viscosity being measured depends on the temperature at which it is being measured, e.g. the viscosity of a given polymer with a given solid content of e.g. 80 wt.% will be higher when measured at lower temperature and lower when measured at a higher temperature. In a preferred embodiment the solid content is in between 70 and 99 wt.%, more preferably in between 75 and 85 wt.%, with no additional solvent being added but the polymer as prepared. In a more preferred embodiment, the solid content is in between 70 and 99 wt.%, more preferably in between 75 and 95 wt.%, with no additional solvent being added but the polymer as prepared, and the viscosity is lower than 3000 mPas, more preferably 3250, or even below 2750, 2600, 2500, 2000, 1750, 1500, 1250, 1000, 750, 500 or even 250 mPas, when measured at 60 °C. The viscosity may be determined as generally known for such polymers, preferably as described below in the experimental part.

To achieve these requirements, the following guidance can be given on how to achieve such properties of the inventive polymers:
Biodegradability increases generally with at least one of the following conditions:

- lower molecular weight of the polymer backbone (A) compared to higher molecular weight;
- lower weight percentage of polymeric side chains (monomer B) being grafted onto the backbone compared to higher weight percentages.

As further criteria of course the individual performance of a specific polymer needs to be evaluated and thus ranked for each individual formulation in a specific field of application. Due to the broad usefulness of the inventive polymers an exhaustive overview is not possible, but the present specification and examples give a guidance on how to prepare and select useful polymers of desired properties and how to tune the properties to the desired needs. One such criteria for the area of home care and especially fabric care of course it he performance upon washing, e.g. subjecting a certain material exhibiting stains of certain materials to a defined washing procedure.

The examples give some guidance for the application for washing of fabrics, i.e. the general area of fabric care.

Depending on the individual needs for a polymer exhibiting a defined degree of biodegradation, water solubility and viscosity (i.e. handling properties) the general and specific teachings herein - without being intended to be limited to the specific examples being given - will guide on how to obtain such polymer.

Process of Making the Graft Polymer

Another subject-matter of the present invention is a process for preparing the inventive graft polymers as described above in the various embodiments and variations thereof. Within this process for obtaining at least one graft polymer according to the present invention, at least one monomer (B 1) and optionally a further monomer (B2) are polymerized in the presence of at least one polymer backbone (A).

It has to be noted that the grafting process as such, wherein a polymeric backbone, such as a polymer backbone (A), is grafted with polymeric sidechains, is known to a person skilled in the art. Any process known to the skilled person in this respect can be employed within the present invention.

Within the process of the present invention, it is preferred that the polymeric sidechains (B) are obtained by radical polymerization.

The radical polymerization as such is also known to a skilled person. The person skilled in the art also knows that the inventive process can be carried out in the presence of a radical-forming initiator (C) and/or at least one solvent (D). The skilled person knows the respective components as such.

The term "radical polymerization" as used within the context of the present invention comprises besides the free radical polymerization also variants thereof, such as controlled radical polymerization. Suitable control mechanisms are RAFT, NMP or ATRP, which are each known to the skilled person, including suitable control agents.

In a preferred embodiment, the process to produce a graft polymer of the invention and/or as detailed before comprises the polymerization of at least one vinyl ester monomer (B1) and optionally at least one further monomer (B2) in the presence of at least one polymer backbone (A), a free radical-forming initiator (C) and, if desired, up to 50% by weight, based on the sum of components (A), (B 1), optionally (B2), and (C) of at least one organic solvent (D), at a mean polymerization temperature at which the initiator (C) has a decomposition half-life of from 40 to 500 min, in such a way that the fraction of unconverted graft monomers (B 1) and optional monomer (B2) and initiator (C) in the reaction mixture is constantly kept in a quantitative deficiency relative to the copolymer backbone (A). In a preferred embodiment no monomer (B2) is employed.

The amount of ((free) radical-forming) initiator (C) is preferably from 0.1 to 5% by weight, in particular from 0.3 to 3.5% by weight, based in each case on the polymeric sidechains (B).

For the process according to the invention, it is preferred that the steady-state concentration of radicals present at the mean polymerization temperature is substantially constant and the graft monomers (B1) or (B2) are present in the reaction mixture constantly only in low concentration (for example of not more than 5% by weight in total). This allows the reaction to be controlled, and graft polymers can be prepared in a controlled manner with the desired low polydispersity.

The term "mean polymerization temperature" is intended to mean here that, although the process is substantially isothermal, there may, owing to the exothermicity of the reaction, be temperature variations which are preferably kept within the range of +/- 10°C, more preferably in the range of +/- 5°C.

According to the invention, the (radical-forming) initiator (C) at the mean polymerization temperature should have a decomposition half-life of from 40 to 500 min, preferably from 50 to 400 min and more preferably from 60 to 300 min.

According to the invention, the initiator (C) and the graft monomers (B1) and/or (B2) are advantageously added in such a way that a low and substantially constant concentration of undecomposed initiator and graft monomers (B 1) and/or (B2) is present in the reaction mixture. The proportion of undecomposed initiator in the overall reaction mixture is preferably ≤ 15% by weight, in particular ≤ 10% by weight, based on the total amount of initiator metered in during the monomer addition.

In a more preferred embodiment, the process comprises the polymerization of at least one vinyl ester monomer (B 1) and optionally at least one other monomer (B2) in the presence of at least one polymer backbone (A), a free radical-forming initiator (C) and, if desired, up to 50% by weight, based on the sum of components (A), (B1), optional (B2), and (C), of at least one organic solvent (D), at a mean polymerization temperature at which the initiator (C) has a decomposition half-life of from 40 to 500 min, in such a way that the fraction of unconverted graft monomers (B1) and optional (B2) and initiator (C) in the reaction mixture is constantly kept in a quantitative deficiency relative to the polymer backbone (A),

wherein preferably at least 10 weight percent of the total amount of vinyl ester monomer (B1) is selected from vinyl acetate, vinyl propionate and vinyl laurate, more preferably from vinyl acetate and vinyl laurate, and most preferably vinyl acetate, and wherein the remaining amount of vinyl ester may be any other known vinyl ester, wherein preferably at least 60, more preferably at least 70, even more preferably at least 80, even more preferably at least 90 weight percent, and most preferably essentially only (i.e. about 100wt.% or even 100 wt.%) vinyl acetate is employed as vinyl ester (weight percent being based on the total weight of vinyl ester monomers B1 being employed), and wherein - if (B2) is present - the weight ratio of optional monomer (B2) to monomer (B 1) is less than 0.5, preferably less than 0.4, more preferably less than 0.3, even more preferably less than 0.2, and most preferably less than 0.1.

In an even more preferred embodiment of the preceding embodiment before, besides the monomer(s) (B 1) essentially no monomer (B2) is employed.

The mean polymerization temperature is appropriately in the range from 50 to 140°C, preferably from 60 to 120°C and more preferably from 65 to 110°C.

Examples of suitable initiators (C) whose decomposition half-life in the temperature range from 50 to 140°C is from 20 to 500 min are:

- O-$C_2$-$C_{12}$-acylated derivatives oftert-$C_4$-$C_{12}$-alkyl hydroperoxides and tert-($C_9$-$C_{12}$-aralkyl) hydroperoxides, such as tert-butyl peroxyacetate, tert-butyl monoperoxymaleate, tert-butyl peroxyisobutyrate, tert-butyl peroxypivalate, tert-butyl peroxyneoheptanoate, tert-butyl peroxy-2-ethylhexanoate, tert-butyl peroxy-3,5,5-trimethylhexanoate, tert-butyl peroxyneodecanoate, tert-amyl peroxypivalate, tert-amyl peroxy-2-ethylhexanoate, tert-amyl peroxyneodecanoate, 1,1,3,3-tetramethylbutyl peroxyneodecanoate, cumyl peroxyneodecanoate, tert-butyl peroxybenzoate, tert-amyl peroxybenzoate and di-tert-butyl diperoxyphthalate;
- di-O-$C_4$-$C_{12}$-acylated derivatives of tert-$C_8$-$C_{14}$-alkylene bisperoxides, such as 2,5-dimethyl-2,5-di(2-ethylhexanoylperoxy)hexane, 2,5-dimethyl-2,5-di(benzoylperoxy)hexane and 1,3-di(2-neodecanoylperoxyisopropyl)benzene;
- di($C_2$-$C_{12}$-alkanoyl) and dibenzoyl peroxides, such as diacetyl peroxide, dipropionyl peroxide, disuccinyl peroxide, dicapryloyl peroxide, di(3,5,5-trimethylhexanoyl) peroxide, didecanoyl peroxide, dilauroyl peroxide, dibenzoyl peroxide, di(4-methylbenzoyl) peroxide, di(4-chlorobenzoyl) peroxide and di(2,4-dichlorobenzoyl) peroxide;
- tert-$C_4$-$C_5$-alkyl peroxy($C_4$-$C_{12}$-alkyl)carbonates, such as tert-amyl peroxy(2-ethylhexyl)carbonate;
- di($C_2$-$C_{12}$-alkyl) peroxydicarbonates, such as di(n-butyl) peroxydicarbonate and di(2-ethylhexyl) peroxydicarbonate.

Depending on the mean polymerization temperature, examples of particularly suitable initiators (C) are:

- at a mean polymerization temperature of from 50 to 60°C:
  tert-butyl peroxyneoheptanoate, tert-butyl peroxyneodecanoate, tert-amyl peroxypivalate, tert-amyl peroxyneodecanoate, 1,1,3,3-tetramethylbutyl peroxyneodecanoate, cumyl peroxyneodecanoate, 1,3-di(2-neodecanoyl peroxyisopropyl)benzene, di(n-butyl) peroxydicarbonate and di(2-ethylhexyl) peroxydicarbonate;
- at a mean polymerization temperature of from 60 to 70°C:
  tert-butyl peroxypivalate, tert-butyl peroxyneoheptanoate, tert-butyl peroxyneodecanoate, tert-amyl peroxypivalate and di(2,4-dichlorobenzoyl) peroxide;
- at a mean polymerization temperature of from 70 to 80°C:
  tert-butyl peroxypivalate, tert-butyl peroxyneoheptanoate, tert-amyl peroxypivalate, dipropionyl peroxide, dicapryloyl peroxide, didecanoyl peroxide, dilauroyl peroxide, di(2,4-dichlorobenzoyl) peroxide and 2,5-dimethyl-2,5-di(2-ethylhexanoylperoxy)hexane;
- at a mean polymerization temperature of from 80 to 90°C:
  tert-butyl peroxyisobutyrate, tert-butyl peroxy-2-ethylhexanoate, tert-amyl peroxy-2-ethylhexanoate, dipropionyl peroxide, dicapryloyl peroxide, didecanoyl peroxide, dilauroyl peroxide, di(3,5,5-trimethylhexanoyl) peroxide, dibenzoyl peroxide and di(4-methylbenzoyl) peroxide;
- at a mean polymerization temperature of from 90 to 100°C:
  tert-butyl peroxyisobutyrate, tert-butyl peroxy-2-ethylhexanoate, tert-butyl monoperoxymaleate, tert-amyl peroxy-2-ethylhexanoate, dibenzoyl peroxide and di(4-methylbenzoyl) peroxide;
- at a mean polymerization temperature of from 100 to 110°C:
  tert-butyl monoperoxymaleate, tert-butyl peroxyisobutyrate and tert-amyl peroxy(2-ethylhexyl)carbonate;
- at a mean polymerization temperature of from 110 to 120°C:
  tert-butyl monoperoxymaleate, tert-butyl peroxy-3,5,5-trimethylhexanoate and tert-amyl peroxy(2-ethylhexyl)carbonate.

Preferred initiators (C) are O-$C_4$-$C_{12}$-acylated derivatives of tert-$C_4$-$C_5$-alkyl hydroperoxides, particular preference being given to tert-butyl peroxypivalate and tert-butyl peroxy-2-ethylhexanoate.

Particularly advantageous polymerization conditions can be established effortlessly by precise adjustment of

initiator (C) and polymerization temperature. For instance, the preferred mean polymerization temperature in the case of use of tert-butyl peroxypivalate is from 60 to 80°C, and, in the case of tert-butyl peroxy-2-ethylhexanoate, from 80 to 100°C.

The inventive polymerization reaction can be carried out in the presence of, preferably small amounts of, an organic solvent (D). It is of course also possible to use mixtures of different solvents (D). Preference is given to using water-soluble or water-miscible solvents.

When a solvent (D) is used as a diluent, generally from 1 to 40% by weight, preferably from 1 to 35% by weight, more preferably from 1.5 to 30% by weight, most preferably from 2 to 25% by weight, based in each case on the sum of the components (A), (B1), optionally (B2), and (C), are used.

Examples of suitable solvents (D) include:

- monohydric alcohols, preferably aliphatic $C_1$-$C_{16}$-alcohols, more preferably aliphatic $C_2$-$C_{12}$-alcohols, most preferably $C_2$-$C_4$-alcohols, such as ethanol, propanol, isopropanol, butanol, sec-butanol and tert-butanol;
- polyhydric alcohols, preferably $C_2$-$C_{10}$-diols, more preferably $C_2$-$C_6$-diols, most preferably $C_2$-$C_4$-alkylene glycols, such as ethylene glycol, 1,2-propylene glycol and 1,3-propylene glycol;
- alkylene glycol ethers, preferably alkylene glycol mono($C_1$-$C_{12}$-alkyl) ethers and alkylene glycol di($C_1$-$C_6$-alkyl) ethers, more preferably alkylene glycol mono- and di($C_1$-$C_2$-alkyl) ethers, most preferably alkylene glycol mono($C_1$-$C_2$-alkyl) ethers, such as ethylene glycol monomethyl and -ethyl ether and propylene glycol monomethyl and -ethyl ether;
- polyalkylene glycols, preferably poly($C_2$-$C_4$-alkylene) glycols having 2-20 $C_2$-$C_4$-alkylene glycol units, more preferably polyethylene glycols having 2-20 ethylene glycol units and polypropylene glycols having 2-10 propylene glycol units, most preferably polyethylene glycols having 2-15 ethylene glycol units and polypropylene glycols having 2-4 propylene glycol units, such as diethylene glycol, triethylene glycol, dipropylene glycol and tripropylene glycol;
- polyalkylene glycol monoethers, preferably poly($C_2$-$C_4$-alkylene) glycol mono($C_1$-$C_{25}$-alkyl) ethers having 2-20 alkylene glycol units, more preferably poly($C_2$-$C_4$-alkylene) glycol mono($C_1$-$C_{20}$-alkyl) ethers having 2-20 alkylene glycol units, most preferably poly($C_2$-$C_3$-alkylene) glycol mono($C_1$-$C_{16}$-alkyl) ethers having 3-20 alkylene glycol units;
- carboxylic esters, preferably $C_1$-$C_8$-alkyl esters of $C_1$-$C_6$-carboxylic acids, more preferably $C_1$-$C_4$-alkyl esters of $C_1$-$C_3$-carboxylic acids, most preferably $C_2$-$C_4$-alkyl esters of $C_2$-$C_3$-carboxylic acids, such as ethyl acetate and ethyl propionate;
- aliphatic ketones which preferably have from 3 to 10 carbon atoms, such as acetone, methyl ethyl ketone, diethyl ketone and cyclohexanone;
- cyclic ethers, in particular tetrahydrofuran.

The solvents (D) are advantageously those solvents, which are also used to formulate the inventive graft polymers for use (for example in washing and cleaning compositions) and can therefore remain in the polymerization product.

Preferred examples of these solvents are polyethylene glycols having 2-15 ethylene glycol units, polypropylene glycols having 2-6 propylene glycol units and in particular alkoxylation products of $C_6$-$C_8$-alcohols (alkylene glycol monoalkyl ethers and polyalkylene glycol monoalkyl ethers).

Particular preference is given here to alkoxylation products of $C_8$-$C_{16}$-alcohols with a high degree of branching, which allow the formulation of polymer mixtures which are free-flowing at 40-70°C and have a very low polymer content at comparatively low viscosity. The branching may be present in the alkyl chain of the alcohol and/or in the polyalkoxylate moiety (copolymerization of at least one propylene oxide, butylene oxide or isobutylene oxide unit). Particularly suitable examples of these alkoxylation products are 2-ethylhexanol or 2-propylheptanol alkoxylated with 1-15 mol of ethylene oxide, $C_{13}/C_{15}$ oxo alcohol or $C_{12}/C_{14}$ or $C_{16}/C_{18}$ fatty alcohol alkoxylated with 1-15 mol of ethylene oxide and 1-3 mol of propylene oxide, preference being given to 2-propylheptanol alkoxylated with 1-15 mol of ethylene oxide and 1-3 mol of propylene oxide.

In the process according to the invention, polymer backbone (A), graft monomer (B1) and, if appropriate, (B2), initiator (C) and, if appropriate, solvent (D) are usually heated to the selected mean polymerization temperature in a reactor.

According to the invention, the polymerization is carried out in such a way that an excess of polymer (polymer backbone (A) and formed graft polymer (B)) is constantly present in the reactor. The quantitative ratio of polymer to ungrafted monomer and initiator is generally ≥ 10:1, preferably ≥ 15:1 and more preferably ≥ 20:1.

The polymerization process according to the invention can in principle be carried out in various reactor types.

The reactor used is preferably a stirred tank in which the polymer backbone (A), if appropriate together with portions, of generally up to 15% by weight of the particular total amount, of graft monomers (B1) or (B2), initiator (C) and solvent (D), are initially charged fully or partly and heated to the polymerization temperature, and the remaining amounts of (B), (C) and, if appropriate, (D) are metered in, preferably separately. The remaining amounts of (B), (C) and, if appropriate, (D) are metered in preferably over a period of ≥ 2 h, more preferably of ≥ 4 h and most preferably of ≥ 5 h.

In the case of the particularly preferred, substantially solvent-free process variant, the entire amount of polymer backbone (A) is initially charged as a melt and the graft monomers (B1) and, if appropriate, (B2), and also the initiator (C) present preferably in the form of a from 10 to 50% by weight solution in one of the solvents (D), are metered in, the temperature being controlled such that the selected polymerization temperature, on average during the polymerization, is maintained with a range of especially +/- 10°C, in particular +/- 5°C.

In a further particularly preferred, low-solvent process variant, the procedure is as described above, except that solvent (D) is metered in during the polymerization in order to limit the viscosity of the reaction mixture. It is also possible to commence with the metered addition of the solvent only at a later time with advanced polymerization, or to add it in portions.

The polymerization can be affected under standard pressure or at reduced or elevated pressure. When the boiling point of the monomers (B1) or (B2) or of any diluent (D) used is exceeded at the selected pressure, the polymerization is carried out with reflux cooling.

The propoxylated polyol

The propoxylated polyol comprises a polyol core consisting essentially of three to five - OH groups, wherein at least one of the -OH groups is modified to form a polypropylene oxide branch, wherein the propoxylated polyol comprises polypropylene oxide branches comprising on average at least four polypropylene oxide units.

The propoxylated polyols of the invention are based on polyols that have three to five -OH groups in total. The polyol core used to prepare the propoxylated polyols of the invention may be a monomer or may be oligo- or polymer build up by an assembly process comprising -OH groups containing subunits. Also, in case the polyol core is based on an oligomer or polymer the total number of -OH groups is four to five, too. This means that the average number of -OH groups in the inventive compound is not restricted to only three, four and five but can also be every decimal number between four and five.

For example, diglycerol possesses four -OH groups and triglycerol possesses five -OH groups. The skilled person understands that a polyglycerol (n = 2 to 3) mixture of diglycerol and triglycerol can be prepared, wherein the (population of) polyol has a total number of -OH groups that lies between four and five. Depending on the ratio of diglycerol and the ratio of triglycerol any decimal number between four and five can be adjusted. Thus, in preferred embodiments, the propoxylated polyol of the invention has 4; 4.1; 4.2; 4.3; 4.4; 4.5; 4.6; 4.7; 4.8; 4.9 or 5 -OH groups. In more preferred embodiments, the number of -OH groups in the propoxylated polyol refers to an average number of a mixture of proxylated polyols each having mainly four or five -OH groups.

Thus, the propoxylated polyols of the invention may be a homomeric or heteromeric group of molecules based on polyols that have three to five -OH groups, preferably from four to five - OH groups.

Preferably, The propoxylated polyols of the invention are based on polyols that have four to five -OH groups in total.

The term "-OH group", as used herein, refers to hydroxyl groups, in particular alcohol groups. This also includes -OH groups in the context of aromatic structures, such as phenols. The term includes all alcohol groups independent of the status of its carbon atom. Thus, in the sense of the present invention primary, secondary as well as tertiary alcohols fall within the meaning of "-OH group". For example, the -OH group may also be a sugar, such as a hexose (e.g. glucose, fructose etc.). However, in preferred embodiments, the propoxylated polyol has a linear backbone of carbon atoms. Not included within the scope of the term "-OH group" are -OH groups that are part of carboxylic acids.

Preferably, the polyol reacted with propoxylene oxide does not comprise further functional groups (such as amines, esters, carbonyl, carbonic acids, phosphate, sulfonate groups etc. and derivatives thereof) besides the -OH groups.

At least one of the -OH groups (of the polyol core) is modified to form a polypropylene oxide branch, wherein the propoxylated polyol comprises polypropylene oxide branches comprising on average at least four polypropylene oxide units. Preferably, a polypropylene oxide branches comprising on average 4 to 30 polypropylene oxide units. More detailed embodiments describing the different chain lengths are provided below.

It is noted that all such numbers are numbers "on average" meaning that such numbers refer to the average number for such unit per -OH group calculated based on all -OH groups of a propoxylated polyol.

It is to be emphasized that the reactions leading to the inventive propoxylate polyol are statistical reactions, meaning there is never just one chemically exactly defined compound present, but an inventive propoxylated polyol always is a mixture of slightly deviating structures, all stemming from the same reaction within one reaction space; the difference of those structures clearly stemming from the facts that no reaction proceeds in exactly the same way and the same speed on all functional units, especially as the chemical reactivities of the functional units - here mainly those of the -OH groups, differs according to their environment, meaning that a primary alcohol group reacts differently than a secondary alcohol, and also the chemical environment of the groups may be different; this leads in an overall view to slightly deviating structures being present, and thus any compound of this invention being defined as in the various embodiments, and exemplified in the examples never is just one chemical compound, but always a mixture of slightly

deviating compounds, having a statistical distribution. As the reactivities of those groups are not differing by a large extent, the deviation is relatively small. Hence, defining a propoxylated polyol of the invention by a prototypical member is a viable way of defining the structure. Also, defining the composition of the side chains by average numbers (including those variables defined in the present and following Embodiments based on the numbers of -OH groups being present in the propoxylated polyols is a useful way of defining the overall composition of any mixture herein defined as "a propoxylated polyol of the invention".

Therefore, unless otherwise indicated, the values, ranges and ratios given in the specification for the number of -OH groups and the molecular weight (Mn) relate to the number average values in heterogenic mixture of the synthesized propoxylated polyols containing individual, slightly from each other deviating chemical structures that result from the preparation method of the present invention. As known in polymer science, the weight-average molecular weight (Mw) is then a measure for the (in)homogeneity within the mixture of different species in "the propoxylated polyols".

The presence of propylene oxides within or next to the (predominately) hydrophobic polyol core leads to an amphiphilic nature and thus to excellent cleaning properties of the inventive compounds in detergent applications. Inventive compounds bearing such modification are also called being "alkoxylated", "propoxylated" and/or "modified".

The terms "essentially consisting of" or "consisting essentially of', as used interchangeably herein, with respect to the polyol mean that the polyol may comprise impurities or other types of polyols in an amount up to not more than 10% w/w, not more than 7% w/w, not more than 5% w/w, not more than 3% w/w, not more than 2% w/w, not more than 1% w/w, not more than 0.5% w/w or not more than 0.1% w/w.

The polyol core preferably is a monomer, oligomer or polymer, wherein each of the oligomer and the polymer comprise a plurality of subunits, preferably the oligomer is a homooligomer or the polymer is a heteropolymer.

The term "monomer", as used herein, refers to a polyol which is not polymerized prior to its propoxylation. The term "oligomer", as used herein, refers to molecules consisting of up to five repeating units including polyol repeating units, whereas the repeating units may be all the same or the oligomer consists of different repeating units. Thus, the oligomer includes dimers, trimers, tetramers and pentamers. Preferably, the oligomer is a "homooligomer" referring to an oligomer formed by identical monomers. The homooligomer is a compound formed by covalent bonding of a given polyol repeating unit. The term "polymer", as used herein, refers to compounds that possess at least six repeating units which are covalently connected by a polymerization reaction. "Heteropolymer", as used herein, refers to an organic polymer comprising two or more different repeating units including at least one polyol unit. The term "plurality", as used herein, is defined as two or more than two, namely at least 2, 3, 4, 5, 6, 7, 8, 9 or more.

The propoxylated polyol preferably comprises polypropylene oxide branches comprising on average at least at least 4 polypropylene oxide units (POs), preferably at least 5 POs, more preferably at least 6 POs and more preferably at least 8 POs. In even more preferred embodiments, the propylene oxide branches comprise on average at least 9, 10, 11, 12, 13, 14, 15 or more POs.

In preferred embodiments, one propylene oxide branch has an average weight ranging from 200 to 3000 g/mol, preferable from 300 to 2000 g/mol, preferable from 400 to 1800, preferable from 500 to 1500, and more preferable from 600 to 1200 g/mol.

The propoxylated polyol preferably comprises polypropylene oxide branches comprising on average not more than 30 POs, preferably not more than 25 POs and more preferably not more than 22 POs. In even more preferred embodiments, the propylene oxide branches comprise on average not more than 21, 20, 19, 18, 17, 16 or less POs.

The polyol core preferably has a weight ranging from 90 to 500 g/mol, preferably from 100 to 300 g/mol and more preferably from 120 to 250 g/mol.

Methods to measure the weight of a polyol are well-known in the art and include mass spectrometry, mass photometry and static light scattering.

The propoxylated polyol preferably has a structure such that F is 0 or greater than 0 for Formula (I) and/or Formula (II), wherein:

Formula (I) is:

$$F = 2.769\ PQ - 12.46\ P - 0.209\ QX + 0.524\ Q + 0.726\ X + 1;$$

and

Formula (II) is:

$$F = 0.1123\ PQ - 0.505\ P + 0.0027\ QX - 0.209\ Q - 0.018\ X + 1;$$

wherein

X = the average number of POs per propylene oxide branch;
P = the average number of ether linkages in the polyol core; and
Q = the average number of -OH groups in the polyol core.

It is noted that Formula (I) and (II) are based on the experimentally tested biodegradability of almost 30 compounds, whereas a value of 0 or more in Formula (I) is indicative for at least 40% biodegradability within 28 days according to the OECD 301F test and a value of 0 or more in Formula (II) is indicative for at least 60% biodegradability within 28 days according to the OECD 301F test.

The term "average number of POs per propylene oxide branch", as used herein, refers to the calculated number of PO units that should be present in one propoxylene oxide branch. As explained in more detail above, the skilled person is well-aware of the fact that the synthesis of the inventive compounds will result in a mixture of slightly deviating compounds underlying a statistical distribution. Thus, the "average number of POs per propylene oxide branch" is calculated by dividing the total amount of employed mol PO per mol of polyol by the (average) number of -OH groups of the polyol (or the mixture of polyols).

The term "average number of ether linkages in the polyol core", as used herein, refers to the calculated number of ether bonds that are present in one polyol molecule. As the polyol may be a mixture of deviating compounds, the "average number" may refer to the arithmetic average derived from the polyols of the mixture. For example, diglycerol has 1 ether linkage, triglycerol has 2 ether linkages. Polyglycerol with 50% diglycerol and 50% triglycerol has on average 1.5 ether linkages.

The term "average number of -OH groups in the polyol core", as used herein, refers to the calculated number of -OH groups that should be present in one polyol molecule. As the polyol may be a mixture of deviating compounds, the "average number" may refer to the arithmetic average derived from the polyols of the mixture.

In preferred embodiments, the propoxylated polyol of the invention demonstrates at least 40%, preferably at least 50% or more preferably at least 60% biodegradability according to standard OECD 301F within 56 days, preferably within 28 days.

For the purposes of this invention, aerobic biodegradation in wastewater according to OECD 301F is expressed as a percentage of the theoretical oxygen demand (ThOD, which is measured by the elemental analysis of the compound of interest), which is needed to completely biodegrade the compound sample. Thus, the amount of oxygen taken up by the microbial population during biodegradation of the test substance (corrected for uptake by blank inoculum, run in parallel) is expressed as a percentage of ThOD. The obtained values are preferably measured in triplicate using the OECD 301F manometric respirometry method. The consumption of oxygen is determined by measuring the change in pressure in the apparatus using an OxiTop® C (Xylem 35 Analytics Germany Sales GmbH & Co KG). Details for the tests performed are given in the experimental section below.

The present invention provides modified polyols, which are propoxylated. The combined core-shell-product (i.e., the propoxylated polyol), in which the "core" is the polyol core, and the "shell" is the polypropylene oxide branches, exhibits a significant biodegradation value. Moreover, these inventive compounds demonstrate also strong wash performance.

Preferbly, the weight average molecular weight (Mw) of the propoxylated polyol is in the range of from 700 to 10,000 g/mol, preferable from 1,000 to 8,000 g/mol, preferably from 1,300 to 6,000 g/mol, preferably from 1,600 to 4,000 g/mol, and more preferably from 2,000 to 3,500 g/mol.

The person skilled in the art knows how to determine/measure the respective weight average molecular weight ($M_W$). This can be done, for example, by size exclusion chromatography (such as GPC, e.g., in combination with light scattering). Preferably, $M_W$ values are determined by the method as follows: OECD TG 118 (1996), which means in detail

OECD (1996), *Test No. 118: Determination of the Number-Average Molecular Weight and the Molecular Weight Distribution of Polymers using Gel Permeation Chromatography,* OECD Guidelines for the Testing of Chemicals, Section 1, OECD Publishing, Paris, also available on the internet, for example, under https://doi.org/10.1787/9789264069848-en.

Molecular weights of the polyol starting materials may be determined as described above. Molecular weights of the propoxylated polyol may be determined by gel permeation chromatography (GPC). The samples were prepared as follows: approx. 15 mg sample was dissolved in 10 ml eluent (THF + 0.035 mol/L Diethanolamine) for 1 hour at a temperature of 50°C. All sample solutions were filtered by a Chromafil Xtra PTFE (0,20 μm filtered prior to injection). Sealed sample vials were placed into the auto sampler. An Agilent 1200 HPLC system, consisting of an isocratic pump, vacuum degasser, auto sampler and a column oven was used. Furthermore, the Agilent system contains a Differential Refractive Index (DRI) and a variable Ultra Violet (UVW) Detector for detection. Data acquisition and data processing of conventionally SEC data was done by WinGPC Unichrom, build 6999, of PSS (Polymer Standard Services now part of Agilent). A combination of a SDV guard (7,5 x 50 mm) column and 3 SDV columns (1000A, 100000A and 1000000A, all 7,5 x 300 mm) of PSS were put in series at 60°C. THF + 0.035 mol/L Diethanolamine was used as eluent at a flow rate of 1 mL/min. 100μL of each sample solution was injected. The calibration was obtained by narrow molar mass distributed Polyethyleneoxide standards (Agilent) having a molar mass range of M= 160 till M = 1.378.000 g/mol. Molar masses outside this range were extrapolated.

"Mw" is the weight average molecular weight and "Mn" is number average molecular weight. The respective values of Mw and/or Mn can be determined as described within the experimental section below.

The molar mass distribution Mw/Mn obtained by GPC is equal to the polydispersity index (PDI), the PDI being without unit [g/mol / g/mol]).

Preferably, the polyol core is selected from the group consisting of glycerol, meso-Erythritol, D-threitol, L-threitol, 1,2,5,6-hexanetetrol, pentaerythritol, xylitol, ribitol, arabitol, pentitol, diglycerol, triglycerol, and polyglycerol and wherein the polyglycerol preferably consists of two to three subunits of glycerol.

More Preferably, the polyol core is selected from the group consisting of meso-Erythritol, D-threitol, L-threitol, 1,2,5,6-hexanetetrol, pentaerythritol, xylitol, ribitol, arabitol, pentitol, diglycerol, triglycerol, and polyglycerol and wherein the polyglycerol preferably consists of two to three subunits of glycerol.

In preferred embodiments, the term "polyglycerol", as used herein, refers to a mixture of mainly diglycerol and triglycerol. The ratio of diglycerol to triglycerol may vary between 100:1 to 1:100. In further preferred embodiments, the mixture may also contain glycerol, tetraglycerol or pentaglycerol, all in a minor amount (not more than 5, 3 or 1 % w/w of the polyglycerol mixture).

The skilled person will understand that the polyols may also be alkoxylated with other AOs than propoxylene oxide. In this context, ethylene oxide and butylene oxide are mentioned. Further, the skilled person is also well-aware of helpful modifications of the alkoxy chain, such as modifications with lactones or hydroxy carbon acid as described in WO2021165468 A.

It is noted that the alkylene oxide used to prepare the inventive compounds may be derived from a fossil or non-fossil carbon source or even a mixture of the before mentioned. Preferably, the amount of non-fossil carbon atoms in the alkoxy side chains is at least 10%, at least 20%, at least 40%, at least 70%, at least 95% or it solely comprises non-fossil derived carbon atoms. The skilled person is well-aware of commercial alkylene oxide products made of non-fossil carbon sources (these products are often sold as being sustainable, renewable or bio-based). For example, Croda International, Snaith, UK, sells ethylene oxide and related products based on bio-ethanol as ECO Range. Additionally, methods to prepare bio-based propylene oxide are also known (see Abraham, D. S., "Production of propylene oxide from propylene glycol" Master’s Thesis University of Missouri-Columbia (2007) (75 pages)).

Preferably, the amount of secondary alcohol groups in the propoxylated polyol is in the range of from 30 to 100 %, preferably from 75 to 99 % and more preferably from 95 to 98 %.

The inventive compounds typically comprise secondary alcohols that originate i) from primary alcohol groups of the polyol which are modified with a propoxylene oxide branch or ii) from non-reacted secondary alcohol groups of the polyol. By secondary alcohol, as used herein, an alcohol is meant in which the hydroxyl carbon is attached is attached to two other carbon atoms. Another hand, the inventive compounds may comprise tertiary alcohols that originate from non-reacted tertiary alcohol groups of the polyol. Primary alcohol groups in the inventive compound, if present, result from non-reacted primary alcohol groups of the polyol.

The amount of secondary alcohol group in the propxylated polyol can be measured according to methods known to the skilled person, such as NMR-spectroscopy, such as $^{13}$C NMR-spectroscopy and/or $^{1}$H NMR-spectroscopy.

Preferably, the amount of secondary alcohol groups in the propoxylated polyol based on the indicated polyols is in the ranges as follows:

Glycerol: 33 to 100%; meso-Erythritol: 50 to 100 %; D-threitol: 50 to 100 %; L-threitol: 50 to 100 %; 1,2,5,6-hexanetetrol: 50 to 100 %; pentaerythritol: 30 to 100 %; xylitol: 60 to 100 %; ribitol: 60 to 100 %; arabitol: 60 to 100 %; pentitol: 60 to 100 %; and polyglycerol: 33 to 100 %.

It is noted that in preferred embodiments, the polyol core at least comprises two "terminal" primary alcohol groups. In addition to these two primary alcohols, the polyol further possesses two or three secondary alcohol groups.

Preferably, all propoxylene oxide branches attached to the -OH group of the polyol have the same structure, in that sense that the number of PO units per propoxylene oxide branch is identical or, alternatively, the propoxylene oxide branch structures vary.

Without wishing being bound by the following explanation, a rationale exists to explain the resulting structures of the propoxylated polyols: Due to the fact that the reactions in questions necessarily employed to prepare those structural orders of the side chains, and thus to prepare the specific inventive compounds, are reactions of quite reactive species which can lead under suitable conditions to almost complete and even "essentially complete" conversions of almost 100 % if not even 100%, the statistical deviation of the composition of the mixture of "propoxylated polyols" in question is not that high, which in turn means that the structural order of the side chains do not show much deviation. Thus, it is a reliable assumption which can in principle be proven by sophisticated and thus time-consuming and expensive analytical means - such as multidimensional NMR-analyses - that it is generally accepted that such deviation exists; hence, no "specific propoxylated polyol" will be "just one chemical compound of a clearly defined chemical structure", but clearly will consist of a a) mixture of slightly differing compounds, such differences lying in b) slight deviations may already in the structure of compound making up "the (unmodified) polyol" being employed for the further modification steps, and c) the slight deviations in the structural orders of the side chains may be attached by way of d) multi-step reactions due to e) variations in

the chemical reactivities of the -OH groups, and f) due to slight inhomogeneities occurring in a commercial scale process. All of those factors a) to f) - to just mention a few important ones - lead to a "specific propoxylated polyol" which is not one specific chemical compound but in fact a mixture of slightly differing compounds having an overall very similar chemical structure; thus, such structure is best described by average numbers for the variables and percentages for the amounts of the dominating structural order.

Synthesis of the propoxylated polyol

The propoxylated polyol can be prepared by a process, wherein a polyol essentially consisting of three to five -OH groups, preferably four to five -OH grous, is reacted with at least 12 propylene oxide molecules in order to obtain the respective propoxylated polyol.

In more preferred embodiments, a polyol comprising three -OH groups is reacted with at least 12 propylene oxide molecules, a polyol comprising four -OH groups is reacted with at least 16 propylene oxide molecules, and a polyol comprising five -OH groups is reacted with at least 20 propylene oxide molecules. In general, the amount of propylene oxide molecules is chosen in a way that each -OH of the polyol comprises on average at least 4 propylene oxide molecules.

The conversion rate of the reaction step may be monitored and in preferred embodiments the conversion rate is at least 90%, preferably at least 95%, more preferably at least 99%, and even more preferably at least 99,5 % or even more. All other structural orders of the side chains as defined above but also the undefined structures resulting from non-controllable parameters are performed in this defined manner, leading - on statistical average - to a defined structural order directly derived from the way such reaction is performed.

The conversion rate of the reaction can be determined according to methods known to the skilled person, such as NMR-spectroscopy, such as $^{13}C$ NMR-spectroscopy and/or $^{1}H$ NMR-spectroscopy.

For the reaction conditions such as catalysts, temperatures, duration, purification etc. of the reactions to produce the units of the side chains of the inventive propoxylated polyols, the respective information within the disclosures EP3298120 A, JP2022056680 A and US7468348 B is fully encompassed into this recent disclosure by way of reference.

Within this preferred process, the alkoxylation/propoxylation is carried out in the presence of at least one catalyst. Within this single step reaction of the alkoxylation step, the catalyst is preferably a basic catalyst. Examples of suitable catalysts are alkali metal and alkaline earth metal hydroxides such as sodium hydroxide, potassium hydroxide and calcium hydroxide, alkali metal alkoxides, in particular sodium and potassium $C_1$-$C_4$-alkoxides, such as sodium methoxide, sodium ethoxide and potassium tert-butoxide, alkali metal and alkaline earth metal hydrides such as sodium hydride and calcium hydride, and alkali metal carbonates such as sodium carbonate and potassium carbonate. Preference is given to the alkali metal hydroxides and the alkali metal alkoxides, a particular preference being given to potassium hydroxide and sodium hydroxide. Typical use amounts for the base are from 0.05 to 10% by weight of final product, in particular from 0.05 to 2% by weight, based on the total amount of polyol and propylene oxide.

The polyol possessing three to five -OH groups is preferably selected from the group consisting of glycerol, meso-Erythritol, D-threitol, L-threitol, 1,2,5,6-hexanetetrol, pentaerythritol, xylitol, ribitol, arabitol, pentitol, diglycerol, triglycerol, and polyglycerol, preferably consisting of two to three subunits of glycerol. More preferably, selected from meso-Erythritol, D-threitol, L-threitol, 1,2,5,6-hexanetetrol, pentaerythritol, xylitol, ribitol, arabitol, pentitol, diglycerol, triglycerol, and polyglycerol, preferably consisting of two to three subunits of glycerol.

The propoxylated polyol can be further submitted to the following process steps of

a. purification using standard means such as steam distillation, thermal distillation, vacuum evaporation, including removal of all solvent, dialysis and/or

b. drying using standard drying means such as spray-, drum, paddle-, vacuum-drying means including agglomeration methods such as fluidized-bed-drying,

to obtain a purified solution, a purified liquid, a solid compound or a purified solid compound, respectively.

In case that after the reaction leading to the inventive compound residual educts (polyol and/or propylene oxide) are present to a non-desirable extent, the resulting product mixture containing the propoxylated polyol may be further purified by standard means to reduce the content of residual educts, but also to reduce the amount of possible by-products, reduce the amount(s) of the solvent(s) employed (i.e., to concentrate) or replace solvent(s) with other solvents. Such processes are known to a person of skill in this field.

Preferably, undesirable amounts of residual non-reacted educts are removed, preferably by means of distillative processes, more preferably by thermal distillative processes, which may additionally comprise the application of reduced pressure to increase the speed and/or the effectiveness of the removal.

In a preferred embodiment only the additional process step a) is employed.

Fabric and Home Care Ingredients:

The compositions of the invention comprises at least one fabric and home care ingredient different from the graft polymer and the propoxylatd polyol.

Suitable fabric and home care additives include surfactant system, enzymes, enzyme stabilizers, builders, dispersants, structurants or thickeners, other polymers, additional amines, catalytic materials, bleaching agents, bleaching catalysts, bleach activators, polymeric dispersing agents, soil removal/ anti-re-deposition agents, polymeric grease cleaning agents, amphiphilic copolymers, fluorescent brightener, fabric hueing agents, chelating agent, encapsulates, perfume, pro-perfumes, malodor reduction materials, conditioning agents, probiotics, organic acids, antioxidants, antimicrobial agents and/or preservatives, neutralizers and/ or pH adjusting agents, processing aids, rheology modifiers, corrosion and/or anti-tarnishing agents, hygiene Agent, pearlescent agent, pigments, opacifier, solvents, carriers, hydrotrope, suds suppressor and mixtures thereof.

Surfactant System:

The compositions comprise a surfactant system in an amount sufficient to provide desired cleaning properties. The composition may comprise, by weight of the composition, from about 1% to about 70% of a surfactant system. The composition may comprise, by weight of the composition, from about 2% to about 60% of the surfactant system. The composition may comprise, by weight of the composition, from about 5% to about 30% of the surfactant system. The surfactant system may comprise a detersive surfactant selected from anionic surfactants, nonionic surfactants, cationic surfactants, zwitterionic surfactants, amphoteric surfactants, ampholytic surfactants, and mixtures thereof. Those of ordinary skill in the art will understand that a detersive surfactant encompasses any surfactant or mixture of surfactants that provide cleaning, stain removing, or laundering benefit to soiled material.

Suitable surfactants include anionic surfactants, non-ionic surfactant, cationic surfactants, zwitterionic surfactants and amphoteric surfactants and mixtures thereof. Suitable surfactants may be linear or branched, substituted or unsubstituted, and may be derived from petrochemical material or biomaterial. Preferred surfactant systems comprise both anionic and nonionic surfactant, preferably in weight ratios from 90:1 to 1:90. In some instances a weight ratio of anionic to nonionic surfactant of at least 1:1 is preferred. However, a ratio below 10:1 may be preferred. When present, the total surfactant level is preferably from 0.1% to 60%, from 1% to 50% or even from 5% to 40% by weight of the subject composition.

Anionic Surfactant: Anionic surfactants include, but are not limited to, those surface-active compounds that contain an organic hydrophobic group containing generally 8 to 22 carbon atoms or generally 8 to 18 carbon atoms in their molecular structure and at least one water-solubilizing group preferably selected from sulfonate, sulfate, and carboxylate so as to form a water-soluble compound. Usually, the hydrophobic group will comprise a $C_8$-$C_{22}$ alkyl, or acyl group. Such surfactants are employed in the form of water-soluble salts and the salt-forming cation usually is selected from sodium, potassium, ammonium, magnesium and mono-, with the sodium cation being the usual one chosen.

Anionic surfactants of the present invention and adjunct anionic cosurfactants, may exist in an acid form, and said acid form may be neutralized to form a surfactant salt which is desirable for use in the present detergent compositions. Typical agents for neutralization include the metal counterion base such as hydroxides, e.g., NaOH or KOH. Further preferred agents for neutralizing anionic surfactants of the present invention and adjunct anionic surfactants or cosurfactants in their acid forms include ammonia, amines, oligamines, or alkanolamines. Alkanolamines are preferred. Suitable non-limiting examples including monoethanolamine, diethanolamine, triethanolamine, and other linear or branched alkanolamines known in the art; for example, highly preferred alkanolamines include 2-amino-1-propanol, 1-aminopropanol, monoisopropanolamine, or 1-amino-3-propanol. Amine neutralization may be done to a full or partial extent, e.g. part of the anionic surfactant mix may be neutralized with sodium or potassium and part of the anionic surfactant mix may be neutralized with amines or alkanolamines.

Suitable sulphonate surfactants include methyl ester sulphonates, alpha olefin sulphonates, alkyl benzene sulphonates, especially alkyl benzene sulphonates, preferably $C_{10}$-$C_{13}$ alkyl benzene sulphonate. Suitable alkyl benzene sulphonate (LAS) is obtainable, preferably obtained, by sulphonating commercially available linear alkyl benzene (LAB). Suitable LAB includes low 2-phenyl LAB, such as those supplied by Sasol under the tradename Isochem® or those supplied by Petresa under the tradename Petrelab®, other suitable LAB include high 2-phenyl LAB, such as those supplied by Sasol under the tradename Hyblene®. A suitable anionic surfactant is alkyl benzene sulphonate that is obtained by DETAL catalyzed process, although other synthesis routes, such as HF, may also be suitable. In one aspect a magnesium salt of LAS is used.

Suitable LAS may comprise a component obtained from waste plastic feedstock. Preferably LAS obtained from waste plastic feedstock comprises from 0.001 to 100% wt. of the total LAS, more preferably from 0.01 to 50 wt.%, more preferably from 0.1 to 20 wt.%, most preferably from 0.5 to 10%. Suitable LAS obtained from waste plastic feedstock are described for example in WO2023057604, WO2023057531 and WO2023057530.

Preferably, the composition may contain from about 0.5% to about 30%, by weight of the laundry composition, of a HLAS surfactant selected from alkyl benzene sulfonic acids, alkali metal or amine salts of $C_{10}$-$C_{16}$ alkyl benzene sulfonic acids, wherein the HLAS surfactant comprises greater than 50% $C_{12}$, preferably greater than 60%, preferably greater than 70% $C_{12}$, more preferably greater than 75%

Suitable sulphate surfactants include alkyl sulphate, preferably $C_{8-18}$ alkyl sulphate, or predominantly $C_{12}$ alkyl sulphate.

A preferred sulphate surfactant is alkyl alkoxylated sulphate, preferably alkyl ethoxylated sulphate, preferably a $C_8$-$C_{18}$ alkyl alkoxylated sulphate, preferably a $C_8$-$C_{18}$ alkyl ethoxylated sulphate, preferably the alkyl alkoxylated sulphate has an average degree of alkoxylation of from 0.5 to 20, preferably from 0.5 to 10, preferably the alkyl alkoxylated sulphate is a $C_8$-$C_{18}$ alkyl ethoxylated sulphate having an average degree of ethoxylation of from 0.5 to 10, preferably from 0.5 to 5, more preferably from 0.5 to 3 or from about 1.5 to 3 or from about 1.8 to 2.5. The alkyl alkoxylated sulfate may have a broad alkoxy distribution or a peaked alkoxy distribution. The alkyl portion of the AES may include, on average, from 13.7 to about 16 or from 13.9 to 14.6 carbons atoms. At least about 50% or at least about 60% of the AES molecule may include having an alkyl portion having 14 or more carbon atoms, preferable from 14 to 18, or from 14 to 17, or from 14 to 16, or from 14 to 15 carbon atoms.

The alkyl sulphate, alkyl alkoxylated sulphate and alkyl benzene sulphonates may be linear or branched, including 2 alkyl substituted or mid chain branched type, substituted or un-substituted, and may be derived from petrochemical material or biomaterial. Preferably, the branching group is an alkyl. Typically, the alkyl is selected from methyl, ethyl, propyl, butyl, pentyl, cyclic alkyl groups and mixtures thereof. Single or multiple alkyl branches could be present on the main hydrocarbyl chain of the starting alcohol(s) used to produce the sulfated anionic surfactant used in the detergent of the invention. Most preferably the branched sulfated anionic surfactant is selected from alkyl sulfates, alkyl ethoxy sulfates, and mixtures thereof.

Alkyl sulfates and alkyl alkoxy sulfates are commercially available with a variety of chain lengths, ethoxylation and branching degrees. Commercially available sulfates include those based on Neodol alcohols ex the Shell company, Lial - Isalchem and Safol ex the Sasol company, natural alcohols ex The Procter & Gamble Chemicals company.

Other suitable anionic surfactants include alkyl ether carboxylates, comprising a $C_{10}$-$C_{26}$ linear or branched, preferably $C_{10}$-$C_{20}$ linear, most preferably $C_{16}$-$C_{18}$ linear alkyl alcohol and from 2 to 20, preferably 7 to 13, more preferably 8 to 12, most preferably 9.5 to 10.5 ethoxylates. The acid form or salt form, such as sodium or ammonium salt, may be used, and the alkyl chain may contain one cis or trans double bond. Alkyl ether carboxylic acids are available from Kao (Akypo®), Huntsman (Empicol®) and Clariant (Emulsogen®).

Other suitable anionic surfactants are rhamnolipids. The rhamnolipids may have a single rhamnose sugar ring or two rhamnose sugar rings.

Non-ionic Surfactant: Suitable non-ionic surfactants are selected from the group consisting of: $C_8$-$C_{18}$ alkyl ethoxylates, such as, NEODOL® non-ionic surfactants from Shell; $C_6$-$C_{12}$ alkyl phenol alkoxylates wherein preferably the alkoxylate units are ethyleneoxy units, propyleneoxy units or a mixture thereof; $C_{12}$-$C_{18}$ alcohol and $C_6$-$C_{12}$ alkyl phenol condensates with ethylene oxide/propylene oxide block polymers such as Pluronic® from BASF; alkylpolysaccharides, preferably alkylpolyglycosides; methyl ester ethoxylates; polyhydroxy fatty acid amides; ether capped poly(oxyalkylated) alcohol surfactants; and mixtures thereof.

Suitable non-ionic surfactants are alkylpolyglucoside and/or an alkyl alkoxylated alcohol.

Suitable non-ionic surfactants include alkyl alkoxylated alcohols, preferably $C_8$-$C_{18}$ alkyl alkoxylated alcohol, preferably a $C_8$-$C_{18}$ alkyl ethoxylated alcohol, preferably the alkyl alkoxylated alcohol has an average degree of alkoxylation of from 1 to 50, preferably from 1 to 30, or from 1 to 20, or from 1 to 10, preferably the alkyl alkoxylated alcohol is a $C_8$-$C_{18}$ alkyl ethoxylated alcohol having an average degree of ethoxylation of from 1 to 10, preferably from 1 to 7, more preferably from 1 to 5 and most preferably from 3 to 7. In one aspect, the alkyl alkoxylated alcohol is a $C_{12}$-$C_{15}$ alkyl ethoxylated alcohol having an average degree of ethoxylation of from 7 to 10. The alkyl alkoxylated alcohol can be linear or branched, and substituted or un-substituted. Suitable nonionic surfactants include those with the trade name Lutensol® from BASF. The alkyl alkoxylated sulfate may have a broad alkoxy distribution for example Alfonic 1214-9 Ethoxylate or a peaked alkoxy distribution for example Novel 1214-9 both commercially available from Sasol

Cationic Surfactant: Suitable cationic surfactants include alkyl pyridinium compounds, alkyl quaternary ammonium compounds, alkyl quaternary phosphonium compounds, alkyl ternary sulphonium compounds, and mixtures thereof.

Preferred cationic surfactants are quaternary ammonium compounds having the general formula:

$$(R)(R_1)(R_2)(R_3)N^+ X^-$$

wherein, R is a linear or branched, substituted or unsubstituted $C_{6-18}$ alkyl or alkenyl moiety, $R_1$ and $R_2$ are independently selected from methyl or ethyl moieties, $R_3$ is a hydroxyl, hydroxymethyl or a hydroxyethyl moiety, X is an anion which provides charge neutrality, preferred anions include: halides, preferably chloride; sulphate; and sulphonate.

The fabric care compositions of the present invention may contain up to about 30%, alternatively from about 0.01% to about 20%, more alternatively from about 0.1% to about 20%, by weight of the composition, of a cationic surfactant. For the purposes of the present invention, cationic surfactants include those which can deliver fabric care benefits. Non-limiting examples of useful cationic surfactants include: fatty amines, imidazoline quat materials and quaternary ammonium surfactants, preferably N, N-bis(stearoyl-oxy-ethyl) N,N-dimethyl ammonium chloride, N,N-bis(tallowoyl-oxy-ethyl) N,N-dimethyl ammonium chloride, N,N-bis(stearoyl-oxyethyl) N-(2 hydroxyethyl) N-methyl ammonium methyl sulfate; N,N-bis(stearoyl-isopropoxy)N,N-dimethyl ammonium methyl sulfate, N,N-bis(tallowoyl-isopropoxy)N,N-dimethyl ammonium methyl sulfate, 1, 2 di (stearoyl-oxy) 3 trimethyl ammoniumpropane chloride; dialkylenedimethylammonium salts such as dicanoladimethylammonium chloride, di(hard)tallowdimethylammonium chloride dicanoladimethylammonium methyl sulfate; 1-methyl-1-stearoylamidoethyl-2-stearoylimidazolinium methylsulfate; 1-tallowylamidoethyl-2-tallowylimidazoline; N,N"-dialkyldiethylenetriamine ;the reaction product of N-(2-hydroxyethyl)-1,2-ethylenediamine or N-(2-hydroxyisopropyl)-1,2-ethylenediamine with glycolic acid, esterified with fatty acid, where the fatty acid is (hydrogenated) tallow fatty acid, palm fatty acid, hydrogenated palm fatty acid, oleic acid, rapeseed fatty acid, hydrogenated rapeseed fatty acid; polyglycerol esters (PGEs), oily sugar derivatives, and wax emulsions and a mixture of the above.

It will be understood that combinations of softener actives disclosed above are suitable for use herein

Amphoteric and Zwitterionic surfactant: Suitable amphoteric or zwitterionic surfactants include amine oxides, and/or betaines. Preferred amine oxides are alkyl dimethyl amine oxide or alkyl amido propyl dimethyl amine oxide, more preferably alkyl dimethyl amine oxide and especially coco dimethyl amino oxide. Amine oxide may have a linear or mid-branched alkyl moiety. Typical linear amine oxides include water-soluble amine oxides containing one $R^1$ $C_8$-$C_{18}$ alkyl moiety and 2 $R^2$ and $R^3$ moieties selected from the group consisting of $C_1$-$C_3$ alkyl groups and $C_1$-$C_3$ hydroxyalkyl groups. Preferably amine oxide is characterized by the formula $R^1$ - $N(R^2)(R^3)$ O wherein $R^1$ is a $C_8$-$C_{18}$ alkyl and $R^2$ and $R^3$ are selected from the group consisting of methyl, ethyl, propyl, isopropyl, 2-hydroxethyl, 2-hydroxypropyl and 3-hydroxypropyl. The linear amine oxide surfactants in particular may include linear $C_{10}$-$C_{18}$ alkyl dimethyl amine oxides and linear $C_8$-$C_{12}$ alkoxy ethyl dihydroxy ethyl amine oxides.

Other suitable surfactants include betaines, such as alkyl betaines, alkylamidobetaine, amidazoliniumbetaine, sulfobetaine (INCI Sultaines) as well as Phosphobetaines.

Enzymes:

Preferably the composition comprises one or more enzymes. Preferred enzymes provide cleaning performance and/or fabric care benefits. Examples of suitable enzymes include, but are not limited to, hemicellulases, peroxidases, proteases, cellulases, xylanases, lipases, phospholipases, esterases, cutinases, pectinases, mannanases, galactanases, pectate lyases, keratinases, reductases, oxidases, phenoloxidases, lipoxygenases, ligninases, pullulanases, tannases, pentosanases, malanases, ß-glucanases, arabinosidases, hyaluronidase, chondroitinase, laccase, and amylases, or mixtures thereof. A typical combination is an enzyme cocktail that may comprise, for example, a protease and lipase in conjunction with amylase. When present in the composition, the aforementioned additional enzymes may be present at levels from about 0.00001% to about 2%, from about 0.0001% to about 1% or even from about 0.001% to about 0.5% enzyme protein by weight of the composition.

Proteases. Preferably the composition comprises one or more proteases. Suitable proteases include metalloproteases and serine proteases, including neutral or alkaline microbial serine proteases, such as subtilisins (EC 3.4.21.62). Suitable proteases include those of animal, vegetable or microbial origin. In one aspect, such suitable protease may be of microbial origin. The suitable proteases include chemically or genetically modified mutants of the aforementioned suitable proteases. In one aspect, the suitable protease may be a serine protease, such as an alkaline microbial protease or/and a trypsin-type protease. Examples of suitable neutral or alkaline proteases include:

(a) subtilisins (EC 3.4.21.62), especially those derived from *Bacillus,* such as *Bacillus sp.,* Bacillus sp., B. lentus, B. alkalophilus, B. subtilis, B. amyloliquefaciens, B. gibsonii, B. akibaii, B. clausii and B. clarkii described in WO2004067737, WO2015091989, WO2015091990, WO2015024739, WO2015143360, US6,312,936B1, US5,679,630, US4,760,025, DE102006022216A1, DE102006022224A1, WO2015089447, WO2015089441, WO2016066756, WO2016066757, WO2016069557, WO2016069563, WO2016069569, WO2017/089093, WO2020/156419.

(b) trypsin-type or chymotrypsin-type proteases, such as trypsin (e.g., of porcine or bovine origin), including the *Fusarium* protease described in WO 89/06270 and the chymotrypsin proteases derived from *Cellumonas* described in WO 05/052161 and WO 05/052146.

(c) metalloproteases, especially those derived from *Bacillus amyloliquefaciens* decribed in WO07/044993A2; from *Bacillus, Brevibacillus, Thermoactinomyces, Geobacillus, Paenibacillus, Lysinibacillus* or *Streptomyces spp.* Described in WO2014194032, WO2014194054 and WO2014194117; from *Kribella alluminosa* described in

WO2015193488; and from *Streptomyces* and *Lysobacter* described in WO2016075078.

(d) Protease having at least 90% identity to the subtilase from *Bacillus sp.* TY145, NCIMB 40339, described in WO92/17577 (Novozymes A/S), including the variants of this *Bacillus sp* TY145 subtilase described in WO2015024739, and WO2016066757.

Suitable commercially available protease enzymes include those sold under the trade names Alcalase®, Savinase®, Primase®, Durazym®, Polarzyme®, Kannase®, Liquanase®, Liquanase Ultra®, Savinase Ultra®, Liquanase® Evity®, Savinase® Evity®, Ovozyme®, Neutrase®, Everlase®, Coronase®, Blaze®, Blaze Ultra®, Blaze® Evity®, Blaze® Exceed, Blaze® Pro, Esperase®, Progress® Uno, Progress® Excel, Progress® Key, Ronozyme®, Vinzon® and Het Ultra® by Novozymes A/S (Denmark); those sold under the tradename Maxatase®, Maxacai®, Maxapem®, Properase®, Purafect®, Purafect Prime®, Purafect Ox®, FN3®, FN4®, Excellase®, Ultimase® and Purafect OXP® by Dupont; those sold under the tradename Opticlean® and Optimase® by Solvay Enzymes; and those available from Henkel/Kemira, namely BLAP (sequence shown in Figure29 of US 5,352,604 with the following mutations S99D + S101 R + S103A + V104I + G159S, hereinafter referred to as BLAP), BLAP R (BLAP with S3T + V4I + V199M + V205I + L217D), BLAP X (BLAP with S3T + V4I + V205I) and BLAP F49 (BLAP with S3T + V4I + A194P + V199M + V205I + L217D); and KAP *(Bacillus alkalophilus subtilisin* with mutations A230V + S256G + S259N) from Kao and Lavergy®, Lavergy® Pro, Lavergy® C Bright from BASF.

Amylases. Preferably the composition may comprise an amylase. Suitable alpha-amylases include those of bacterial or fungal origin. Chemically or genetically modified mutants (variants) are included. A preferred alkaline alpha-amylase is derived from a strain of *Bacillus,* such as *Bacillus licheniformis, Bacillus amyloliquefaciens, Bacillus stearothermophilus, Bacillus subtilis,* or other *Bacillus sp.,* such as *Bacillus sp.* NCIB 12289, NCIB 12512, NCIB 12513, DSM 9375 (USP 7,153,818) DSM 12368, DSMZ no. 12649, KSM AP1378 (WO 97/00324), KSM K36 or KSM K38 (EP 1,022,334). Preferred amylases include:

(a) variants described in WO 94/02597, WO 94/18314, WO96/23874 and WO 97/43424, especially the variants with substitutions in one or more of the following positions versus the enzyme listed as SEQ ID No. 2 in WO 96/23874: 15, 23, 105, 106, 124, 128, 133, 154, 156, 181 , 188, 190, 197, 202, 208, 209, 243, 264, 304, 305, 391, 408, and 444.

(b) variants described in USP 5,856,164 and WO99/23211, WO 96/23873, WO00/60060 and WO 06/002643, especially the variants with one or more substitutions in the following positions versus the AA560 enzyme listed as SEQ ID No. 12 in WO 06/002643:

26, 30, 33, 82, 37, 106, 118, 128, 133, 149, 150, 160, 178, 182, 186, 193, 203, 214, 231, 256, 257, 258, 269, 270, 272, 283, 295, 296, 298, 299, 303, 304, 305, 311, 314, 315, 318, 319, 339, 345, 361, 378, 383, 419, 421, 437, 441, 444, 445, 446, 447, 450, 461, 471, 482, 484, preferably that also contain the deletions of D183* and G184*.

(c) variants exhibiting at least 90% identity with SEQ ID No. 4 in WO06/002643, the wild-type enzyme from *Bacillus SP722,* especially variants with deletions in the 183 and 184 positions and variants described in WO 00/60060, which is incorporated herein by reference.

(d) variants exhibiting at least 95% identity with the wild-type enzyme from *Bacillus sp.707* (SEQ ID NO:7 in US 6,093, 562), especially those comprising one or more of the following mutations M202, M208, S255, R172, and/or M261. Preferably said amylase comprises one or more of M202L, M202V, M202S, M202T, M202I, M202Q, M202W, S255N and/or R172Q. Particularly preferred are those comprising the M202L or M202T mutations.

(e) variants described in WO 09/149130, preferably those exhibiting at least 90% identity with SEQ ID NO: 1 or SEQ ID NO:2 in WO 09/149130, the wild-type enzyme from *Geobacillus Stearophermophilus* or a truncated version thereof.

(f) variants exhibiting at least 89% identity with SEQ ID NO:1 in WO2016091688, especially those comprising deletions at positions H183+G184 and additionally one or more mutations at positions 405, 421, 422 and/or 428.

(g) variants exhibiting at least 60% amino acid sequence identity with the "PcuAmyl $\alpha$-amylase" from *Paenibacillus curdlanolyticus* YK9 (SEQ ID NO:3 in WO2014099523).

(h) variants exhibiting at least 60% amino acid sequence identity with the "CspAmy2 amylase" from *Cytophaga sp.* (SEQ ID NO:1 in WO2014164777).

(i) variants exhibiting at least 85% identity with AmyE from Bacillus subtilis (SEQ ID NO:1 in WO2009149271).

(j) Variants exhibiting at least 90% identity variant with the wild-type amylase from Bacillus sp. KSM-K38 with accession number AB051102.

Suitable commercially available alpha-amylases include DURAMYL®, LIQUEZYME®, TERMAMYL®, TERMAMYL ULTRA®, NATALASE®, SUPRAMYL®, STAINZYME®, STAINZYME PLUS®, FUNGAMYL® and BAN® (Novozymes A/S, Bagsvaerd, Denmark), KEMZYM® AT 9000 Biozym Biotech Trading GmbH Wehlistrasse 27b A-1200 Wien Austria, RAPIDASE® , PURASTAR®, ENZYSIZE®, OPTISIZE HT PLUS®, POWERASE® and PURASTAR OXAM® (Genencor International Inc., Palo Alto, California) and KAM® (Kao, 14-10 Nihonbashi Kayabacho, 1-chome, Chuo-ku Tokyo 103-8210, Japan). In one aspect, suitable amylases include NATALASE®, STAINZYME® and STAINZYME PLUS®

and mixtures thereof.

Lipases. Preferably the composition comprises one or more lipases, including "first cycle lipases" such as those described in U.S. Patent 6,939,702 B1 and US PA 2009/0217464. Preferred lipases are first-wash lipases. The composition may comprise a first wash lipase.

First wash lipases includes a lipase which is a polypeptide having an amino acid sequence which: (a) has at least 90% identity with the wild-type lipase derived from *Humicola lanuginosa* strain DSM 4109; (b) compared to said wild-type lipase, comprises a substitution of an electrically neutral or negatively charged amino acid at the surface of the three-dimensional structure within 15A of E1 or Q249 with a positively charged amino acid; and (c) comprises a peptide addition at the C-terminal; and/or (d) comprises a peptide addition at the N-terminal and/or (e) meets the following limitations: i) comprises a negative amino acid in position E210 of said wild-type lipase; ii) comprises a negatively charged amino acid in the region corresponding to positions 90-101 of said wild-type lipase; and iii) comprises a neutral or negative amino acid at a position corresponding to N94 or said wild-type lipase and/or has a negative or neutral net electric charge in the region corresponding to positions 90-101 of said wild-type lipase.

Preferred are variants of the wild-type lipase from Thermomyces lanuginosus comprising one or more of the T231R and N233R mutations. The wild-type sequence is the 269 amino acids (amino acids 23 - 291) of the Swissprot accession number Swiss-Prot O59952 (derived from Thermomyces lanuginosus (Humicola lanuginosa)). Other suitable lipases include: Liprl 139, e.g. as described in WO2013/171241; TfuLip2, e.g. as described in WO2011/084412 and WO2013/033318; Pseudomonas stutzeri lipase, e.g. as described in WO2018228880; Microbulbifer thermotolerans lipase, e.g. as described in WO2018228881; Sulfobacillus acidocaldarius lipase, e.g. as described in EP3299457; LIP062 lipase e.g. as described in WO2018209026; PinLip lipase e.g. as described in WO2017036901 and Absidia sp. lipase e.g. as described in WO2017005798.

Preferred lipases would include those sold under the tradenames Lipex® and Lipolex® and Lipoclean®.

Cellulases. Suitable enzymes include cellulases of bacterial or fungal origin. Chemically modified or protein engineered mutants are included. Suitable cellulases include cellulases from the genera *Bacillus, Pseudomonas, Humicola, Fusarium, Thielavia, Acremonium, e.g.,* the fungal cellulases produced from *Humicola insolens, Myceliophthora thermophila* and *Fusarium oxysporum* disclosed in US 4,435,307, US 5,648,263 , US 5,691,178, US 5,776,757 and US 5,691,178 . Suitable cellulases include the alkaline or neutral cellulases having colour care benefits. Commercially available cellulases include CELLUZYME®, CAREZYME® and CAREZYME PREMIUM (Novozymes A/S), CLAZINASE®, and PURADAX HA® (Genencor International Inc.), and KAC-500(B)® (Kao Corporation).

The bacterial cleaning cellulase may be a glycosyl hydrolase having enzymatic activity towards amorphous cellulose substrates, wherein the glycosyl hydrolase is selected from GH families 5, 7, 12, 16, 44 or 74. Suitable glycosyl hydrolases may also be selected from the group consisting of: GH family 44 glycosyl hydrolases from *Paenibacillus polyxyma* (wild-type) such as XYG1006 described in US 7,361,736 or are variants thereof. GH family 12 glycosyl hydrolases from *Bacillus licheniformis* (wild-type) such as SEQ ID NO:1 described in US 6,268,197 or are variants thereof; GH family 5 glycosyl hydrolases from *Bacillus agaradhaerens* (wild type) or variants thereof; GH family 5 glycosyl hydrolases from *Paenibacillus* (wild type) such as XYG1034 and XYG 1022 described in US 6,630,340 or variants thereof; GH family 74 glycosyl hydrolases from *Jonesia sp.* (wild type) such as XYG1020 described in WO 2002/077242 or variants thereof; and GH family 74 glycosyl hydrolases from *Trichoderma Reesei* (wild type), such as the enzyme described in more detail in Sequence ID NO. 2 of US 7,172,891 , or variants thereof. Suitable bacterial cleaning cellulases are sold under the tradenames Celluclean® and Whitezyme® (Novozymes A/S, Bagsvaerd, Denmark).

The composition may comprise a fungal cleaning cellulase belonging to glycosyl hydrolase family 45 having a molecular weight of from 17kDa to 30 kDa, for example the endoglucanases sold under the tradename Biotouch® NCD, DCC and DCL (AB Enzymes, Darmstadt, Germany).

Pectate Lyases. Other preferred enzymes include pectate lyases sold under the tradenames Pectawash®, Pectaway®, Xpect® and mannanases sold under the tradenames Mannaway® (all from Novozymes A/S, Bagsvaerd, Denmark), and Purabrite® (Genencor International Inc., Palo Alto, California).

Nucleases. The composition may comprise a nuclease enzyme. The nuclease enzyme is an enzyme capable of cleaving the phosphodiester bonds between the nucleotide sub-units of nucleic acids. The nuclease enzyme herein is preferably a deoxyribonuclease or ribonuclease enzyme or a functional fragment thereof. By functional fragment or part is meant the portion of the nuclease enzyme that catalyzes the cleavage of phosphodiester linkages in the DNA backbone and so is a region of said nuclease protein that retains catalytic activity. Thus, it includes truncated, but functional versions, of the enzyme and/or variants and/or derivatives and/or homologues whose functionality is maintained. Suitable DNases include wild-types and variants described in detail by WO2017162836 and WO2018108865, and variants of the Bacillus cibi DNase including those described in WO2018011277.

RNase: suitable RNases include wild-types and variants of DNases described in WO2018178061 and WO2020074499.

Preferably the nuclease enzyme is a deoxyribonuclease, preferably selected from any of the classes E.C. 3.1.21.x, where x=1, 2, 3, 4, 5, 6, 7, 8 or 9, E.C. 3.1.22.y where y=1, 2, 4 or 5, E.C. 3.1.30.z where z= 1 or 2, E.C. 3.1.31.1 and

mixtures thereof.

Hexosaminidases. The composition may comprise one or more hexosaminidases. The term hexosaminidase includes "dispersin" and the abbreviation "Dsp", which means a polypeptide having hexosaminidase activity, EC 3.2.1 .- that catalyzes the hydrolysis of β-1,6-glycosidic linkages of N-acetyl-glucosamine polymers found in soils of microbial origin. The term hexosaminidase includes polypeptides having N-acetylglucosaminidase activity and β-N-acetylglucosaminidase activity. Hexosaminidase activity may be determined according to Assay II described in WO2018184873. Suitable hexosaminidases include those disclosed in WO2017186936, WO2017186937, WO2017186943, WO2017207770, WO2018184873, WO2019086520, WO2019086528, WO2019086530, WO2019086532, WO2019086521, WO2019086526, WO2020002604, WO2020002608, WO2020007863, WO2020007875, WO2020008024, WO2020070063, WO2020070249, WO2020088957, WO2020088958 and WO2020207944. Variants of the *Terribacillus saccharophilus* hexosaminidase defined by SEQ ID NO: 1 of WO2020207944 may be preferred, especially the variants with improved thermostability disclosed in that publication.

Mannanases. The composition may comprise an extracellular-polymer-degrading enzyme that includes a mannanase enzyme. The term "mannanase" means a polypeptide having mannan endo-1,4-beta-mannosidase activity (EC 3.2.1.78) from the glycoside hydrolase family 26 that catalyzes the hydrolysis of 1,4-3-D-mannosidic linkages in mannans, galactomannans and glucomannans. Alternative names of mannan endo-1,4-beta-mannosidase are 1,4-3-D-mannan mannanohydrolase; endo-1,4-3-mannanase; endo- β-1,4-mannase; β-mannanase B; 3-1,4-mannan 4-mannanohydrolase; endo-3-mannanase; and β-D-mannanase. For purposes of the present disclosure, mannanase activity may be determined using the Reducing End Assay as described in the experimental section of WO2015040159. Suitable examples from class EC 3.2.1.78 are described in WO2015040159, such as the mature polypeptide SEQ ID NO: 1 described therein.

Galactanases. The composition may comprise an extracellular polymer-degrading enzyme that includes an endo-beta-1,6-galactanase enzyme. The term "endo-beta-1,6-galactanase" or "a polypeptide having endo-beta-1,6-galactanase activity" means a endo-beta-1,6-galactanase activity (EC 3.2.1.164) from the glycoside hydrolase family 30 that catalyzes the hydrolytic cleavage of 1,6-3-D-galactooligosaccharides with a degree of polymerization (DP) higher than 3, and their acidic derivatives with 4-O-methylglucosyluronate or glucosyluronate groups at the nonreducing terminals. For purposes of the present disclosure, endo-beta-1,6-galactanase activity is determined according to the procedure described in WO 2015185689 in Assay I. Suitable examples from class EC 3.2.1.164 are described in WO 2015185689, such as the mature polypeptide SEQ ID NO: 2.

Enzyme Stabilizing System:

The composition may optionally comprise from about 0.001% to about 10%, in some examples from about 0.005% to about 8%, and in other examples, from about 0.01% to about 6%, by weight of the composition, of an enzyme stabilizing system. The enzyme stabilizing system can be any stabilizing system which is compatible with the detersive enzyme. In the case of aqueous detergent compositions comprising protease, a reversible protease inhibitor, such as a boron compound, including borate, 4-formyl phenylboronic acid, phenylboronic acid and derivatives thereof, or compounds such as calcium formate, sodium formate and 1,2-propane diol may be added to further improve stability.

Builders:

The composition may optionally comprise a builder. Built compositions typically comprise at least about 1% builder, based on the total weight of the composition. Liquid compositions may comprise up to about 10% builder, and in some examples up to about 8% builder, of the total weight of the composition. Granular compositions may comprise up to about 30% builder, and in some examples up to about 5% builder, by weight of the composition.

Builders selected from aluminosilicates (e.g., zeolite builders, such as zeolite A, zeolite P, and zeolite MAP) and silicates assist in controlling mineral hardness in wash water, especially calcium and/or magnesium, or to assist in the removal of particulate soils from surfaces. Suitable builders may be selected from the group consisting of phosphates, such as polyphosphates (e.g., sodium tri-polyphosphate), especially sodium salts thereof; carbonates, bicarbonates, sesquicarbonates, and carbonate minerals other than sodium carbonate or sesquicarbonate; organic mono-, di-, tri-, and tetracarboxylates, especially water-soluble nonsurfactant carboxylates in acid, sodium, potassium or alkanolammonium salt form, as well as oligomeric or water-soluble low molecular weight polymer carboxylates including aliphatic and aromatic types; and phytic acid. These may be complemented by borates, e.g., for pH-buffering purposes, or by sulfates, especially sodium sulfate and any other fillers or carriers which may be important to the engineering of stable surfactant and/or builder-containing compositions. Additional suitable builders may be selected from citric acid, lactic acid, fatty acid and salt thereof.

Suitable builders may include polycarboxylate and salt thereof, for example, homopolymers of acrylic acid, copolymers of acrylic acid and maleic acid, and copolymers of acrylic acid and/or maleic acid, and other suitable ethylenic

monomers with various types of additional functionalities. More suitable polycarboxylate are described in polycarboxylate polymers section of this patent.

Also suitable for use as builders herein are synthesized crystalline ion exchange materials or hydrates thereof having chain structure and a composition represented by the following general anhydride form: $x(M_2O)\cdot ySiO_2\cdot zM'O$ wherein M is Na and/or K, M' is Ca and/or Mg; y/x is 0.5 to 2.0; and z/x is 0.005 to 1.0.

Alternatively, the composition may be substantially free of builder.

Structurant / Thickeners:

Suitable structurant / thickeners include:

- Di-benzylidene Polyol Acetal Derivative
- Bacterial Cellulose
- Coated Bacterial Cellulose
- Cellulose fibers non-bacterial cellulose derived
- Non-Polymeric Crystalline Hydroxyl-Functional Materials
- Polymeric Structuring Agents
- Di-amido-gellants
- Any combination of above.

Other polymers:

The compositions may include one or more other polymers. Typically, the level of other polymers is from about 0.01% to about 10.0 % by weight of the composition, preferably from about 0.1% to about 5%, and more preferably from about 0.2% to about 3.0% by weight of the composition. In some situations where the composition is in concentrated form, such as concentrated fabric and home care products in any forms which designed for consumer to dilute at home and then use following their regular dosing habits, the level of the polymers maybe higher than 10.0%, or higher than 5.0%, by weight of the composition.

Depending on the structure of the polymer, polymers can provide various benefits for the composition, including but not limit to, hydrophobic and hydrophilic stain removal, surfactant boosting, soil suspension, whiteness maintenance, soil release, malodor control, dye transfer inhibition, enhanced softness, enhanced freshness, etc. Polymers are normally multi-functional, which means one specific given type of polymer may provide more than one types of benefit as mentioned above. For example, a specific soil release polymer may provide soil release benefit as primary benefit, while also providing other benefits such as whiteness maintenance, malodor control, soil suspension, dye transfer inhibition.

Suitable other polymers including, but not limited to the following:

Other graft polymers:

Suitable graft polymers are amphiphilic graft polymers based on water-soluble polyalkylene oxides (A) as a graft base and side chains formed by polymerization of a vinyl ester component (B), said polymers having an average of < one graft site per 50 alkylene oxide units and mean molar masses M of from 5 000 to 100 000. One specific preferred graft polymer of this type is polyvinyl acetate grafted polyethylene oxide copolymer having a polyethylene oxide as graft base and multiple polyvinyl acetate side chains. The molecular weight of the polyethylene oxide backbone is about 6000 and the weight ratio of the polyethylene oxide to polyvinyl acetate is about 40 to 60 and no more than 1 grafting point per 50 ethylene oxide units. The most preferred polymer of this type is available from BASF as Sokalan PG101. Another preferred graft polymer of this type is Sokalan HP22 available from BASF.

Modified Polyamine Dispersing Agent:

The composition may comprise one or more modified polyamine dispersing agent. The modified polyamine dispersant comprises a polyamine core structure and a plurality of alkoxylate groups attached to the core structure. The polyamine core structure includes polyalkyleneimine, and linear or branched oligoamine.

The polyamine core structure and the alkoxylate groups attached to the core structure can be further derivatized. For example, the polyamine core structure can be further partly or completely quaternized with $C_1$-$C_{30}$ linear or branched alkyl, more preferably $C_1$-$C_{10}$ or even $C_1$-$C_5$ linear or branched alkyl, most preferably methyl. The alkoxylate group can be further sulphated, sulphonated and/or substituted with an amino functional group.

Suitable modified polyamine dispersing agent includes ethoxylated polyethyleneimine (EPEI). EPEI are effective dispersing agent for hydrophilic stains, especially hydrophilic particulate stain such as clay.

The EPEI may have a polyethyleneimine backbone of weight average molecular weight of between 100g/mol and 2000g/mol, preferably between 200g/mol and 1500g/mol, more preferably between 300g/mol and 1000g/mol, even more preferably between 400g/mol and 800g/mol, most preferably between 500g/mol and 700g/mol, preferably about 600. The ethoxylation chains within the EPEI may be from 200g/mol to 2000g/mol weight average molecular weight, preferably from 400g/mol to 1500g/mol weight average molecular weight, more preferably from 600g/mol to 1000g/mol weight average molecular weight, most preferably about 880g/mol weight average molecular weight per ethoxylated chain. The ethoxylation chains within the EPEI have on average 5 to 40, preferably 10 to 30, more preferably 15 to 25, even more preferably 18 to 22, most preferably about 20 ethoxy units per ethoxylation chain. The EPEI may have a total weight average molecular weight of from 5000g/mol to 20000g/mol, preferably from 7500g/mol to 17500g/mol, more preferably from 10000g/mol to 15000g/mol, even more preferably from 12000g/mol to 13000g/mol, most preferably about 12700g/mol. A preferred example is polyethyleneimine core (with average molecular weight about 600g/mol) ethoxylated to 20 EO groups per NH. Suitable EPEI this type includes Sokalan HP20 available from BASF, Lutensol FP620 from BASF. Examples of available polyethyleneimine ethoxylates also include those prepared by reacting ethylene oxide with Epomine SP-006 manufactured by Nippon Shokubai. Such polymers maybe also referred as PE-20 polymer.

The EPEI may comprise polyethyleneimine has an average molecular weight (Mw) ranging from 1800 to 5000 g/mol (prior to ethoxylation), and the polyoxyethylene side chains have an average of from 25 to 40 ethoxy units per side chain bonded to the polyethyleneimine backbone. Such EPEI is described in WO2020/030760 and WO2020/030469.

Suitable modified polyamine dispersing agent includes amphiphilic alkoxylated polyalkyleneimine polymer. These polymers have balanced hydrophilic and hydrophobic properties such that they remove grease and body soil particles from fabrics and surfaces, and keep the particles suspended in washing liquor. Suitable amphiphilic water-soluble alkoxylated polyalkyleneimine polymer is described in WO2009/061990 and WO2006/108857, which comprising in polyalkyleneimine, preferable polyethyleneimine core, and alkoxylate group of below connected to the core

$$*\text{-}[A^2\text{-}O]_m\text{-}[CH_2\text{-}CH_2\text{-}O]_n\text{-}[A^3\text{-}O]_p\text{-}R \qquad (V)$$

wherein

"*" in each case denotes one-half of bond to the nitrogen atom of the core.
$A^2$ is in each case independently selected from 1,2-propylene, 1,2-butylene, and 1,2-isobutylene;
$A^3$ is 1,2-propylene;
R is in each case independently selected from hydrogen and $C_1$-$C_4$-alkyl, preferably hydrogen;
m has an average value in the range of from 0 to 2, preferably 0;
n has an average value in the range of 5 to 50; and
p has an average value in the range of 3-50;

The polymer comprising a degree of quaterization ranging from 0 to 50, preferably from 0 to 20, and more preferably from 0 to 10.

A preferred alkoxylated polyalkyleneimine polymer is polyethyleneimine (MW = 600) modified with 24 ethoxylate groups per -NH and 16 propoxylate groups per -NH. Another preferred alkoxylated polyalkyleneimine polymer is polyethyleneimine (MW = 600) modified with 10 ethoxylate groups per -NH and 7 propoxylate groups per -NH.

Another suitable alkoxylated polyalkyleneimine polymer of this type includes Sokalan HP30 Booster available from BASF.

Another Suitable modified polyamine dispersing agent is described in WO2021061774.

Suitable modified polyamine dispersing agent also includes zwitterionic polyamines. Said zwitterionic polyamine is selected from zwitterionic polyamines according to the following formula:

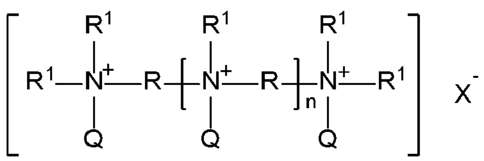

R is each independently $C_3$-$C_{20}$ linear or branched alkylene;
$R^1$ is an anionic unit-capped polyalkyleneoxy unit having the formula: $-(R^2O)_xR^3$,
wherein

$R^2$ is $C_2$-$C_4$ linear or branched alkylene, preferably $C_2$ (ethylene);
$R^3$ is hydrogen, an anionic unit, and mixtures thereof, in which not all $R^3$ groups are hydrogen, preferably wherein

$R^3$ anionic units are selected from $-(CH_2)_pCO_2M$; $-(CH_2)_qSO_3M$; $-(CH_2)_qOSO_3M$; $-(CH_2)_qCH(SO_3M)-CH_2SO_3M$; $-(CH_2)_qCH(OSO_3M)CH_2OSO_3M$; $-(CH_2)_qCH(SO_3M)CH_2SO_3M$; $-(CH_2)_pPO_3M$; $-PO_3M$ ;$-SO_3M$ and mixtures thereof; wherein M is hydrogen or a water soluble cation, preferably selected from sodium, potassium, ammonium, and mixtures thereof and in sufficient amount to satisfy charge balance;
x is from 5 to 50, preferably from 10 to 40, even more preferably from 15 to 30, most preferably from 20 to 25;
Q is a quaternizing unit selected from the group consisting of $C_1$-$C_{30}$ linear or branched alkyl, $C_6$-$C_{30}$ cycloalkyl, $C_7$-$C_{30}$ substituted or unsubstituted alkylenearyl, and mixtures thereof, preferably $C_1$-$C_{30}$ linear or branched alkyl, even more preferably $C_1$-$C_{10}$ or even $C_1$-$C_5$ linear or branched alkyl, most preferably methyl; the degree of quaternization preferably is more than 50%, more preferably more than 70%, even more preferably more than 90%, most preferably about 100;.
$X^-$ is an anion present in sufficient amount to provide electronic neutrality, preferably a water-soluble anion selected from the group consisting of chlorine, bromine, iodine, methyl sulfate, and mixtures thereof, more preferably chloride;
n is from 0 to 8, preferably 0 to 4, preferably 0 to 2, most preferably 0.

A suitable zwitterionic polyamine having the following general structure: bis$((C_2H_5O)(C_2H_4O)n)(CH_3)$-$N^+$-$C_xH_{2x}$-$N^+$-$(CH_3)$-bis$((C_2H_5O)(C_2H_4O)n)$, wherein n = from 20 to 30, and x = from 3 to 8, or sulphated or sulphonated variants thereof.

A particular preferred zwitterionic polyamine is available from BASF as Lutensit Z96 polymer (zwitterionic hexamethylene diamine according to below formula: 100% quaternized and about 40% of the polyethoxy ($EO_{24}$) groups are sulfonated).

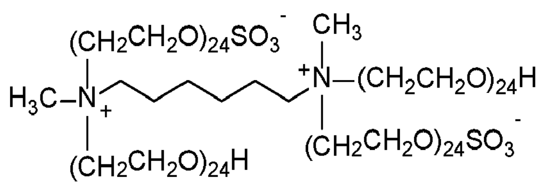

Another preferred zwitterionic polyamine is Sokalan HP96, available from BASF.

Another suitable zwitterionic polyamine is amphoterically-modified oligopropyleneimine ethoxylates as described in WO2021239547.

Polyester Soil Release Polymers:

The composition may comprise one or more soil release polymer (SRP). Preferred polyester SRP soil release polymers include terephthalate-derived polyester polymers, which comprise structure unit (1) and/or (II):

(I) $-[(OCHR^1-CHR^2)_a-O-OC-Ar-CO-]_d$

(II) $-[(OCHR^3-CHR^4)_b-O-OC-sAr-CO-]_e$

wherein:

a, b are from 1 to 200;
d, e are from 1 to 50;
Ar is independently selected from 1,4-substituted phenylene, and 1,3-substituted phenylene sAr is 1,3-substituted phenylene substituted in position 5 with $-SO_3M$; wherein M is a counterion selected from Na, Li, K, Mg/2, Ca/2, Al/3, ammonium, mono-, di-, tri-, or tetraalkylammonium wherein the alkyl groups are $C_1$-$C_{18}$ alkyl or $C_2$-$C_{10}$ hydroxyalkyl, or mixtures thereof;
$R^1$, $R^2$, $R^3$, $R^4$ are independently selected from H or $C_1$-$C_{18}$ n-alkyl or iso-alkyl; preferably selected from H or $C_1$ alkyl.

Optionally, the polymer further comprises one or more terminal group (III) derived from polyalkylene glycolmonoalkylethers, preferably selected from structure (III-a)

$$-O-[C_2H_4-O]_c-[C_3H_6-O]_d-[C_4H_8-O]_e-R_7 \qquad \text{(III-a)}$$

wherein:

$R_7$ is a linear or branched $C_{1-30}$ alkyl, $C_2$-$C_{30}$ alkenyl, or a cycloalkyl group with 5 to 9 carbon atoms, or a $C_8$-$C_{30}$ aryl group, or a $C_6$-$C_{30}$ arylalkyl group; preferably $C_{1-4}$ alkyl, more preferably methyl; and

c, d and e are, based on molar average, a number independently selected from 0 to 200, where the sum of c+d+e is from 2 to 500,

wherein the [$C_2H_4$-O], [$C_3H_6$-O] and [$C_4H_8$-O] groups of the terminal group (III-a) may be arranged blockwise, alternating, periodically and/or statistically, preferably blockwise and/or statistically, either of the [$C_2H_4$-O], [$C_3H_6$-O] and [$C_4H_8$-O] groups of the terminal group (IV-a) can be linked to -$R_7$ and/or -O. Preferably, [$C_3H_6$-O] group is linked to -O, and the -O is further connected to -OC-Ar-CO- or -OC-sAr-CO-.

Optionally, the polymer further comprises one or more anionic terminal unit (IV) and/or (V) as described in EP3222647. Where M is a counterion selected from $Na^+$, $Li^+$, $K^+$, ½ $Mg^{2+}$, ½ $Ca^{2+}$, 1/3 $Al^{3+}$, ammonium, mono-, di-, tri-, or tetraalkylammonium wherein the alkyl groups are $C_1$-$C_{18}$ alkyl or $C_2$-$C_{10}$ hydroxyalkyl, or mixtures thereof.

$$-O-CH_2CH_2-SO_3M \qquad (IV)$$

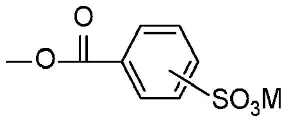
(V)

Optionally, the polymer may comprise crosslinking multifunctional structural unit which having at least three functional groups capable of the esterification reaction. The functional which may be for example acid -, alcohol -, ester -, anhydride - or epoxy groups, etc.

Optionally, other di- or polycarboxylic acids or their salts or their (di)alkylesters can be used in the polyesters, such as, naphthalene-1,4-dicarboxylic acid, naphthalene-2,6,-dicarboxylic acid, tetrahydrophthalic acid, trimellitic acid, diphenoxyethane-4,4'-dicarboxylic acid, diphenyl-4,4'-dicarboxylic acid, 2,5-furandicarboxylic acid, adipic acid, sebacic acid, decan-1,10-dicarboxylic acid, fumaric acid, succinic acid, 1,4-cyclohexanedicarboxylic acid, cyclohexanediacetic acid, glutaric acid, azelaic acid, or their salts or their (di)alkyl esters, preferably their ($C_1$-$C_4$)-(di)alkyl esters and more preferably their (di)methyl esters, or mixtures thereof.

One type of preferred polyester SRPs are nonionic polyester SRP, which does not comprise above structure unit (II). A particular preferred nonionic terephthalate-derived soil release polymer has a structure according to formula below:

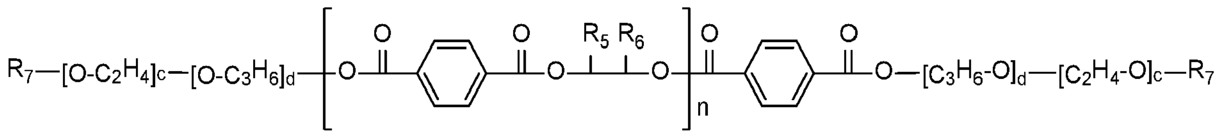

wherein:

$R_5$ and $R_6$ is independently selected from H or $CH_3$. More preferably, one of the $R_5$ and $R_6$ is H, and another is $CH_3$.

c, d are, based on molar average, a number independently selected from 0 to 200, where the sum of c+d is from 2 to 400,

More preferably, d is from 0 to 50, c is from 1 to 200,

More preferably, d is 1 to 10, c is 5 to 150,

$R_7$ is $C_1$-$C_4$ alkyl and more preferably methyl,

n is, based on molar average, from 1 to 50.

One example of most preferred above suitable terephthalate-derived nonionic SRP has one of the $R_5$ and $R_6$ is H, and another is $CH_3$; d is 0; c is from 5-100 and $R_7$ is methyl, and n is from 3-10.

Other suitable terephthalate-derived polyester SRP are described in patent WO2014019903, WO2014019658 and WO2014019659. The end capping group of these SRPs are selected from

$$X-(OC_2H_4)_n-(OC_3H_6)_m-$$

wherein X is $C_1$-$C_4$ alkyl and preferably methyl, the -($OC_2H_4$) groups and the -($OC_3H_6$) groups are arranged blockwise and the block consisting of the -($OC_3H_6$) groups is bound to a COO group, n is based on a molar average a number of from 40 to 50, m is based on a molar average a number of from 1 to 10 and preferably of from 1 to 7.

Polyester soil release polymers may be available or convert into different forms, include powder, particle, liquid, waxy or premix. Other materials (for example, water, alcohol, other solvents, salt, surfactant, etc.) may be needed to convert the polyester soil release polymer into different forms mentioned above, the wt% of active soil release polymer in the powder, particle, liquid, waxy or premix is in the range from 10% to 100%, for example 15%, 20%, 40%, 60%, 70%, 80%, 90%, 95%, 100%. Useful soil release polymer premix examples are described in EP351759 and WO2022100876. When the soil release polymers exist in liquid or premix from, the premix maybe transparent or opaque, white or slightly yellowish. Premix in opaque maybe use to provide an opaque appearance for the finish product or part of the finish product.

The polyester may or may not be biodegradable, preferred soil release polymers are readily biodegradable.

Example of suitable soil release polymers include TexCare® series supplied by Clariant, including noniconic soil release polymers Texcare® SRN 100, SRN 170, SRN 170 C, SRN 170 Terra, SRN 172, SRN 240, SRN 260, SRN 260 life, SRN 260 SG Terra, SRN UL50, , SRN UL50 Terra, SRN 300, SRN 325; and anionic soil release polymers TexCare® SRA 100, SRA 300, SRA300 F. Example of suitable soil release polymers also include REPEL-O-TEX® line of polymers supplied by Rhodia/Solvay, including nonionic soil release polymer REPEL-O-TEX® Crystal, Crystal PLUS, Crystal NAT, SRP6; and anionic soil release polymer REPEL-O-TEX® SF-2. Other example of commercial soil release polymers also includes WeylClean® series of soil release polymers supplied by WeylChem, including noniconic soil release polymers WeylClean® PLN1, PLN2; and anionic soil release polymers WeylClean® PSA1. Other examples of commercial soil release polymers are Marloquest® polymers, such as Marloquest® SL, HSCB, L235M, U, B, and G82, supplied by Sasol. Other suitable commercial soil release polymers include Sorez 100 (from ISP or Ashland, CAS: 9016-88-0).

Polymers Based on Polysaccharide:

Various polysaccharides have proven to be useful starting material to make polymers for fabric and home care products, including cellulose, starch, guar, dextran, polyglucan, chitin, curdlan, xylose, Inulin, pullulan, locust bean gum, cassia gum, tamarind gum (xyloglucan), xanthan gum, amylose, amylopectin, scleroglucan and mixtures thereof.

The most common type of modified polysaccharide is modified cellulose.

Modified cellulose polymers include anionic modified cellulose polymers which been modified with functional groups that contain negative charge. Suitable anionic modified cellulose polymers include carboxyalkyl cellulose, such as carboxymethyl cellulose. The carboxymethyl cellulose may have a degree of carboxymethyl substitution of from about 0.5 to about 0.9 and a molecular weight from about 80,000 Da to about 300,000 Da. Suitable carboxymethylcellulose is described in WO2011/031599 and WO2009/154933. Suitable carboxymethylcellulose include Finnfix® series sold by CP Kelco or Nouryon, which include Finnfix® GDA, a hydrophobically modified carboxymethylcellulose, e.g., the alkyl ketene dimer derivative of carboxymethylcellulose sold under the tradename Finnfix® SH1, or the blocky carboxymethylcellulose sold under the tradename Finnfix®V. Other suitable anionic modified cellulose polymers include sulphoalkyl group which described in WO2006117056, sulfoethyl cellulose which described in WO2014124872.

Modified cellulose polymers also include nonionic modified cellulose polymers which been modified by functional group that does not contain any charge. Suitable nonionic modified cellulose polymers include alkyl cellulose, hydroxyalkyl cellulose, hydroxyalkyl alkylcellulose, alkylalkoxyalkyl cellulose. Suitable nonionic modified cellulose polymers also include nonionic cellulose carbamates which described in WO2015/044061; nonionic 6-desoxy-6-amino-celluloses derivative which described in US20180346846. Example of alkyl cellulose include methyl cellulose (MC), ethyl cellulose (EC), etc. Suitable ethyl cellulose are sold under tradename Ethocel™ by Dow Chemicals, DuPont, or IFF. Example of hydroxyalkyl cellulose include hydroxyethyl cellulose (HEC) and hydroxypropyl cellulose (HPC). Suitable HEC are sold under tradename Natrosol™ hydroxyethylcellulose by Ashland, such as Natrosol™ 250 with different grade available which has a total molar substitution (MS) of 2.5. Suitable HEC are also sold under tradename CELLOSIZE™ Hydroxyethyl Cellulose by Dow Chemicals. Suitable HPC are sold under tradename Klucel™ by Ashland. Example of hydroxyalkyl alkylcellulose include hydroxypropyl methylcellulose (HPMC), suitable HPMC are sold under tradename Methocel™ with different grade available by Dow Chemicals, DuPont or IFF, and under tradename Benecel™ by Ashland.

Modified cellulose polymers also include cationic modified cellulose polymers which been modified by functional group that contain cationic charge. Suitable cationic modified celluloses include quaternized hydroxyethyl cellulose (Polyquaternium-10), which available under the tradename of Ucare by Dow Chemical, such as Ucare LR400, Ucare LR30M, Ucare JR125, Ucare JR400, etc. Suitable cationic modified cellulose polymers also include quaternised hydroxyethyl cellulose (HEC) polymers with cationic substitution of trimethyl ammonium and dimethyldodecyl ammonium (Polyquaternium-67), which available under trade the tradename of SoftCAT by Dow Chemical, such as SoftCAT SK, SoftCAT SK-MH, SoftCAT SX, SoftCAT SL. Other suitable cationic modified celluloses include those sold under tradename SupraCare™ by Dow Chemical, such as SupraCare™ 150, SupraCare™ 133, SupraCare™ 212.

Suitable cationic modified cellulose polymers also include those modified with cationic group and/or a hydrophobic group and described as soil release polymers in WO2019111948, WO2019111949, WO2019111946 and WO2019111947; suitable polymers is also disclosed in WO2022060754, WO2021242942 and WO2020/091988.

Another common type of modified polysaccharide is modified guar. Similar to modified cellulose, modified guar can be nonionic modified, and anionic modified. Suitable nonionic modified guar includes hydroxypropyl guar, such as N-Hance™ HP40 and HP40S guar available from Ashland. Suitable example of modified guar also include carboxymethyl hydroxypropyl guar (CMHPG) which is anionic and nonionic modified, such as Galactasol™ available from Ashland. Other nonionic and/or anionic modified guar include for example Jaguar® HP 105 (Hydroxypropyl Guar gum), Jaguar® SOFT and HP-120 COS (Carboxymethyl Hydroxypropyl Guar Gum).

Suitable modified polysaccharide polymers also include modified starch. Examples of modified starch include carboxylate ester of starch as described in WO2015144438, esterification product of starch with e.g. $C_6$-$C_{24}$ alk(en)yl succinic anhydride as described in EP0703243; starch maleates (starch react with maleic acid anhydride) as described US 6063914. Examples of modified starch also include, but not limit to, acetylated starch, acetylated distarch adipate, distarch phosphate, hydroxypropyl starch, hydroxy propyl distarch phosphate, phosphated distarch ohosphate, acetylated distarch phosphate, starch sodium octenyl succinate.

Suitable modified polysaccharide polymers also include polymers based on other polysaccharide, such as cationic dextran polymers described in WO2021194808, the cationic dextran polymers are commercially available under brand name CDC, CDC-L, CD C-H by Meito Sangyo.

Suitable modified polysaccharide polymers also include polymers based on polyglucans. Suitable modified polyglucans are based on alpha 1,3-polyglucans and/or 1,6-polyglucans. The modified polyglucans can be cationic modified, such as cationic modified alpha 1,3-polyglucan which described in WO2021225837; such as cationic modified alpha 1,6-polyglucans which described in WO2021257793, WO2021257932, and WO2021/257786. The modified polyglucans can be hydrophobic and/or hydrophilic modified, such as those described in WO2018112187, WO2019246228, WO2019246171, WO2021252558, WO2021252560, WO2021252561, EP3922704, WO2021252569, WO2021252562, WO2021252559, WO2021252575, WO2021252563. Along the hydrophobic and/or hydrophilic modified polyglucans, the polyglucan esters which described in WO2021252562, WO2021252559, WO2021252575, WO2021252563 are especially preferred due to their performance and biodegradability profiles.

Other suitable polysaccharide polymers also include those based on inulin. Example of modified inulin include carboxymethyl group modified inulin (CMI), suitable CMI are Carboxyline series sold by Cosun Beet Company, including Carboxyline 25-40D, Carboxyline 25 D Powder, Carboxyline 20 LS D Powder, Carboxyline 25, Carboxyline 25-30 UP. Example of modified inulin also include cationic modified inulin, suitable cationic modified inulin are as described in US20190274943, US20180119055; suitable cationic modified inulin are Quatin series sold by Cosun Beet Company, including Quatin 350, Quatin 380 and Quatin 1280 which are characterized by different degree of substitution (DS), cationic density (meq/g) and molecular weight (g/mol).

Suitable modified polysaccharide polymers also include polymers based on other polysaccharide, such as xylose carbamates as described in US20210115358; carboxy or sulfo-alkylated pullulan as described in WO2019243072; carboxy- or sulfo-alkylated chitosan as described in WO2019/243108 and WO2021156093.

Polycarboxylate Polymers:

The composition may also include one or more polycarboxylate polymers which comprise at least one carboxy group-containing monomer. The carboxy group-containing monomers are selected from acrylic acid, methacrylic acid, fumaric acid, maleic acid, itaconic acid, aconitic acid, mesaconic acid, citraconic acid, methylenemalonic acid, and salts thereof, and anhydride thereof.

Suitable polycarboxylate polymers include polyacrylate homopolymer having a molecular weight of from 4,000 Da to 9,000 Da, or from 6,000 Da to 9,000 Da. Other suitable carboxylate polymers include copolymer of acrylic acid (and/or methacrylic acid) and maleic acid having a molecular weight of from 50,000 Da to 120,000 Da, or from 60,000 Da to 80,000 Da. The polyacrylate homopolymer and copolymer of acrylic acid (and/or methacrylic acid) and maleic acid are commercially available as Acusol 445 and 445N, Acusol 531, Acusol 463, Acusol 448, Acusol 460, Acusol 465, Acusol 497, Acusol 490 from Dow Chemicals, and as Sokalan CP 5, Sokalan CP 7, Sokalan CP 45, and Sokalan CP 12S from BASF. Suitable polycarboxylate polymers also include polyitaconate homopolymers, such as Itaconix® DSP 2K™ sold by Itaconix, and Amaze SP available from Nouryon.

Suitable polycarboxylate polymers also include co-polymers comprising carboxy group-containing monomers and one or more sulfonate or sulfonic group-containing monomers. The sulfonate or sulfonic group containing monomers are selected rom 2-acrylamido-2-methyl-1-propanesulfonic acid (AMPS), 2-methacrylamido-2-methyl-1-propanesulfonic acid, 3-methacrylamido-2-hydroxy-propanesulfonic acid, allysulfonic acid, methallysulfonic acid, 3-allyloxy-2-hydroxy-1-propanesulfonic acid, 2-methyl-2-propenen-1-sulfonic acid, styrenesulfonic acid, vinylsulfonic acid, 3-sulfopropyl acrylate, 3-sulfopropylmethacrylate, sulfomethylacrylamide, sulfomethylmethacrylamide and water soluble salts thereof. Suitable polymers comprise maleic acid, acrylic acid, and 3-allyloxy-2-hydroxy-1-propanesulfonic acid, such polymers are

as described in US8450261 and US8389458. Suitable polymers comprise acrylic acid and 2-acrylamido-2-methylpropane sulfonate, such as those sold under tradename Acusol 588 by Dow Chemicals, Sokalan CP50 by BASF, Aquatreat AR-545, Versaflex 310 and Versaflex 310-37 by Nouryon. Suitable polymers also include Poly(itaconic acid-co-AMPS) sodium salt, such as Itaconix® TSI™ 322 and Itaconix® CHT™ 122 available from Itaconix.

Suitable polymer also includes those contain other structure units in addition to the sulfonate or sulfonic group group-containing monomers and carboxy group-containing monomers. Suitable polymer examples are described in WO2010024468 and WO2014/032267, the additional monomers herein are ether bond-containing monomers represented by formula (1) and (2) below:

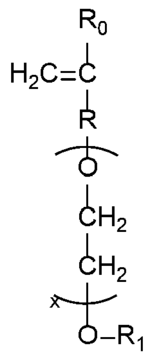

(1)

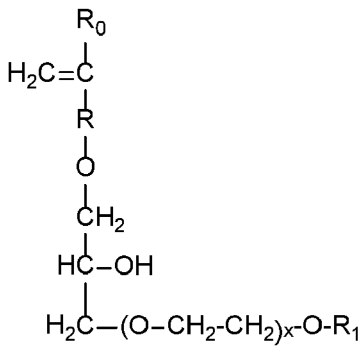

(2)

Wherein in Formula (1)

$R_0$ represents a hydrogen atom or $CH_3$ group,
R represents a $CH_2$ group, $CH_2CH_2$ group or single bond,
x represents a number 0-50, preferable 0-20, more preferable 0-5 (provided x represents a number 1-5 when R is a single bond), and
$R_1$ is a hydrogen atom or $C_1$ to $C_{20}$ organic group
Wherein in Formula (2),
$R_0$ represents a hydrogen atom or $CH_3$ group,
R represents a $CH_2$ group, $CH_2CH_2$ group or single bond,
x represents a number 0-5, and
$R_1$ is a hydrogen atom or $C_1$ to $C_{20}$ organic group.

A specific preferred polymer of this type comprises structure units derived from 1 to 49 wt% of 1-(allyloxy)-3-butoxypropan-2-ol, from 50 to 98 wt% acrylic acid or methacrylic acid, and from 1 to 49 wt% of 3-allyloxy-2-hydroxy-1-propanesulfonic acid, and the has a weight average molecular weight of from about 20,000 to about 60,000. a specific preferred polymer of this type comprises structure units derived from 1 to 10 wt% of 1-(allyloxy)-3-butoxypropan-2-ol, from 70 to 89 wt% acrylic acid or methacrylic acid, and from 10 to 20 wt% of 3-allyloxy-2-hydroxy-1-propanesulfonic acid, and the has a weight average molecular weight of from about 30,000 to about 60,000. Herein, 1-(allyloxy)-3-butoxypropan-2-ol is a preferred monomer as represented by formula (2) when $R_0$ is H, R is $CH_2$, x is 0, and $R_1$ is n-butyl ($C_4$-alkyl).

Suitable polycarboxylate polymers also include co-polymers comprising carboxy group-containing monomers and other suitable monomers. Other suitable monomers here are selected from esters and/or amide of the carboxy group-containing monomers, such as $C_1$-$C_{20}$ alkyl ester of acrylic acid; alkylene; vinyl ethers, such as methyl vinyl ether, styrene and any mixtures thereof. One specific preferred polymer family of this type is sold under tradename Gantrez by Ashland, which includes Gantrez An (alternating co-polymer of methyl vinyl ether and maleic anhydride), Gantrez S (alternating co-polymer of methyl vinyl ether and maleic acid), Gantrez ES (alternating co-polymer of methyl vinyl ether and maleic acid ester), Gantrez MS (alternating co-polymer of methyl vinyl ether and maleic acid salt).

Suitable polycarboxylate polymers also include polyepoxy succinic acid polymers (PESA). A most preferred polyepoxy succinic acid polymer can be identified using CAS number: 51274-37-4, or 109578-44-1. Suitable polyepoxy succinic acid polymers are commercially available from various suppliers, such as Aquapharm Chemicals Pvt. Ltd (commercial name: Maxinol 600); Shandong Taihe Water Treatment Technologies Co., Ltd (commercial name: PESA), and Sirius International (commercial name: Briteframe PESA).

Suitable polycarboxylate polymers also include polymer comprising a monomer having at least one aspartic acid group or a salt thereof, this polymer comprises at least 25 mol%, 40 mol%, or 50 mol%, of said monomer. A preferable example is sodium salt of poly(aspartic acid) having a molecular weight of from 2000 to 3000 g/mol which is avilable as

Baypure® DS 100 from Lanxess.

Block polymers of alkylene oxide :

The composition may comprise block polymers of ethylene oxide, propylene oxide and butylene oxide. Examples of such block polymers include ethylene oxide-propylene oxideethylene oxide (EO/PO/EO) triblock copolymer, wherein the copolymer comprises a first EO block, a second EO block and PO block wherein the first EO block and the second EO block are linked to the PO block. Blocks of ethylene oxide, propylene oxide, butylene oxide can also be arranged in other ways, such as (EO/PO) diblock copolymer, (PO/EO/PO) triblock copolymer. The block polymers may also contain additional butylene oxide (BO) block. Suitable block polymers are for example Pluronic PE series from BASF, including Pluronic PE3100, PE4300, PE6100, PE6200, PE6400, PE6800, PE8100, PE9200, PE9400, PE10100, PE10500, PE10400. Suitable block polymers also available as Tergitol L series from Dow Chemicals, such as Tergitol L-61, L-62, L-64, L-81, L-101. Due to the hydrophobic and hydrophilic nature, such block polymer sometime is also considered as nonionic surfactant in literature.

Dye transfer inhibiting polymers

The composition may comprise dye transfer inhibiting polymers (also called dye transfer inhibitor, or dye fixatives), which include, but are not limited to, polyvinylpyrrolidone polymers (PVP), poly(vinylpyridine-N-oxide) polymer (PVNO), poly(vinylimidazole), polyamine N-oxide polymers, copolymers of N-vinylpyrrolidone and N-vinylimidazole, polyvinyloxazolidones and polyvinylimidazoles or mixtures thereof. dye transfer inhibiting agents may be selected from the group consisting of reaction products of: i) polyamines with cyanamides and organic and/or inorganic acids, ii) cyanamides with aldehydes and ammonium salts, iii) cyanamides with aldehydes and amines, or iv) amines with epichlorohydrin.

Suitable other polymers also include a copolymer comprising N-isopropylacrylamide units, such as described in WO2019197188, WO2019197187, WO2019197185 and WO2019197186. Suitable other polymers also include polyester soil release polymers derived from bio-based 2,5-furandicarboxylic acid and derivatives thereof, useful examples are described in WO2019/105938, WO2019/105939, WO2019/096942 and JP2015105373.

Additional Amines:

Additional amines may be used in the compositions described herein for added removal of grease and particulates from soiled materials. The compositions described herein may comprise from about 0.1% to about 10%, in some examples, from about 0.1% to about 4%, and in other examples, from about 0.1% to about 2%, by weight of the composition, of additional amines. Nonlimiting examples of additional amines may include, but are not limited to, polyamines, oligoamines, triamines, diamines, pentamines, tetraamines, or combinations thereof. Specific examples of suitable additional amines include tetraethylenepentamine, triethylenetetraamine, diethylenetriamine, or a mixture thereof.

Bleaching Agents:

It may be preferred for the composition to comprise one or more bleaching agents. Suitable bleaching agents other than bleaching catalysts include photobleaches, bleach activators, hydrogen peroxide, sources of hydrogen peroxide, pre-formed peracids and mixtures thereof. In general, when a bleaching agent is used, the compositions of the present invention may comprise from about 0.1% to about 50% or even from about 0.1% to about 25% bleaching agent or mixtures of bleaching agents by weight of the subject composition. Examples of suitable bleaching agents include:

(1) photobleaches for example sulfonated zinc phthalocyanine sulfonated aluminium phthalocyanines, xanthene dyes, thioxanthones, and mixtures thereof;
(2) pre-formed peracids: Suitable preformed peracids include, but are not limited to compounds selected from the group consisting of pre-formed peroxyacids or salts thereof typically a percarboxylic acids and salts, percarbonic acids and salts, perimidic acids and salts, peroxymonosulfuric acids and salts, for example, Oxone ®, and mixtures thereof.
Particularly preferred peroxyacids are phthalimido-peroxy-alkanoic acids, in particular ε-phthalimido peroxy hexanoic acid (PAP). Preferably, the peroxyacid or salt thereof has a melting point in the range of from 30°C to 60°C.
(3) sources of hydrogen peroxide, for example, inorganic perhydrate salts, including alkali metal salts such as sodium salts of perborate (usually mono- or tetra-hydrate), percarbonate, persulphate, perphosphate, persilicate salts and mixtures thereof. When employed, inorganic perhydrate salts are typically present in amounts of from 0.05 to 40 wt%,

or 1 to 30 wt% of the overall fabric and home care product and are typically incorporated into such fabric and home care products as a crystalline solid that may be coated. Suitable coatings include, inorganic salts such as alkali metal silicate, carbonate or borate salts or mixtures thereof, or organic materials such as water-soluble or dispersible polymers, waxes, oils or fatty soaps; and

(4) bleach activators having R-(C=O)-L wherein R is an alkyl group, optionally branched, having, when the bleach activator is hydrophobic, from 6 to 14 carbon atoms, or from 8 to 12 carbon atoms and, when the bleach activator is hydrophilic, less than 6 carbon atoms or even less than 4 carbon atoms; and L is leaving group. Examples of suitable leaving groups are benzoic acid and derivatives thereof - especially benzene sulphonate. Suitable bleach activators include dodecanoyl oxybenzene sulphonate, decanoyl oxybenzene sulphonate, decanoyl oxybenzoic acid or salts thereof, 3,5,5-trimethyl hexanoyloxybenzene sulphonate, tetraacetyl ethylene diamine (TAED) and nonanoyloxybenzene sulphonate (NOBS).

(5) Bleach Catalysts. The compositions of the present invention may also include one or more bleach catalysts capable of accepting an oxygen atom from a peroxyacid and/or salt thereof, and transferring the oxygen atom to an oxidizeable substrate. Suitable bleach catalysts include, but are not limited to: iminium cations and polyions; iminium zwitterions; modified amines; modified amine oxides; N-sulphonyl imines; N-phosphonyl imines; N-acyl imines; thiadiazole dioxides; perfluoroimines; cyclic sugar ketones and alpha amino-ketones and mixtures thereof. One particularly preferred catalyst is acyl hydrazone type such as 4-(2-(2-((2-hydroxyphenylmethyl)methylene)-hydrazinyl)-2-oxoethyl)-4-methylchloride.

(6) The composition may preferably comprise catalytic metal complexes. One preferred type of metal-containing bleach catalyst is a catalyst system comprising a transition metal cation of defined bleach catalytic activity, such as copper, iron, titanium, ruthenium, tungsten, molybdenum, or manganese cations.

If desired, the compositions herein can be catalyzed by means of a manganese compound. Such compounds and levels of use are well known in the art and include, for example, the manganese-based catalysts disclosed in U.S. 5,576,282. An additional source of oxidant in the composition may not be not present, molecular oxygen from air providing the oxidative source. Cobalt bleach catalysts useful herein are known, and are described, for example, in U. S. 5,597,936; U.S. 5,595,967.

Fluorescent Brightener:

Commercial fluorescent brighteners suitable for the present disclosure can be classified into subgroups, including but not limited to: derivatives of stilbene, pyrazoline, coumarin, benzoxazoles, carboxylic acid, methinecyanines, dibenzothiophene-5,5-dioxide, azoles, 5- and 6-membered-ring heterocycles, and other miscellaneous agents.

The fluorescent brightener may be selected from the group consisting of disodium 4,4'-bis{[4-anilino-6-morpholino-s-triazin-2-yl]-amino}-2,2'-stilbenedisulfonate (brightener 15, commercially available under the tradename Tinopal AMS-GX by BASF), disodium4,4'-bis{[4-anilino-6-(N-2-bis-hydroxyethyl)-s-triazine-2-yl]-amino}-2,2'-stilbenedisulonate (commercially available under the tradename Tinopal UNPA-GX by BASF), disodium 4,4'-bis{ [4-anilino-6-(N-2-hydroxyethyl-N-methylamino)-s-triazine-2-yl]-amino}-2,2'-stilbenedisulfonate (commercially available under the tradename Tinopal 5BM-GX by BASF). More preferably, the fluorescent brightener is disodium 4,4'-bis{ [4-anilino-6-morpholino-s-triazin-2-yl]-amino }-2,2'-stilbenedisulfonate or 2,2'-([1,1'-Biphenyl]-4,4'-diyldi-2,1-ethenediyl)bis-benzenesulfonic acid disodium salt. The brighteners may be added in particulate form or as a premix with a suitable solvent, for example nonionic surfactant, propanediol.

Fabric Hueing Agents:

The compositions may comprise a fabric hueing agent (sometimes referred to as shading, bluing or whitening agents). Typically, the hueing agent provides a blue or violet shade to fabric. Hueing agents can be used either alone or in combination to create a specific shade of hueing and/or to shade different fabric types. This may be provided for example by mixing a red and green-blue dye to yield a blue or violet shade. Hueing agents may be selected from any known chemical class of dye, including but not limited to acridine, anthraquinone (including polycyclic quinones), azine, azo (e.g., monoazo, disazo, trisazo, tetrakisazo, polyazo), including premetallized azo, benzodifurane and benzodifuranone, carotenoid, coumarin, cyanine, diazahemicyanine, diphenylmethane, formazan, hemicyanine, indigoids, methane, naphthalimides, naphthoquinone, nitro and nitroso, oxazine, phthalocyanine, pyrazoles, stilbene, styryl, triarylmethane, triphenylmethane, xanthenes and mixtures thereof.

Chelating Agent:

Preferably the composition comprises chelating agents and/or crystal growth inhibitor. Suitable molecules

include copper, iron and/or manganese chelating agents and mixtures thereof. Suitable molecules include hydroxamic acids, aminocarboxylates, aminophosphonates, succinates, salts thereof, and mixtures thereof. Non-limiting examples of suitable chelants for use herein include ethylenediaminetetracetates, N- (hydroxyethyl)ethylenediaminetriacetates, nitrilotriacetates, ethylenediamine tetraproprionates, triethylenetetraaminehexacetates, diethylenetriamine-pentaacetates, ethanoldiglycines, ethylenediaminetetrakis (methylenephosphonates), diethylenetriamine penta(methylene phosphonic acid) (DTPMP), ethylenediamine disuccinate (EDDS), hydroxyethanedimethylenephosphonic acid (HEDP), methylglycinediacetic acid (MGDA), diethylenetriaminepentaacetic acid (DTPA), N,N-Dicarboxymethyl glutamic acid (GLDA) and salts thereof, and mixtures thereof. Other nonlimiting examples of chelants of use in the present invention are found in U.S. Patent Nos. 7445644, 7585376 and 2009/0176684A1. Other suitable chelating agents for use herein are the commercial DEQUEST series, and chelants from Monsanto, DuPont, and Nalco, Inc. Yet other suitable chelants include the pyridinyl N Oxide type.

Encapsulates:

The compositions may comprise an encapsulate. In some aspects, the encapsulate comprises a core, a shell having an inner and outer surface, where the shell encapsulates the core.

In certain aspects, the encapsulate comprises a core and a shell, where the core comprises a material selected from perfumes; brighteners; dyes; insect repellants; silicones; waxes; flavors; vitamins; fabric softening agents; skin care agents, e.g., paraffins; enzymes; anti-bacterial agents; bleaches; sensates; or mixtures thereof; and where the shell comprises a material selected from polyethylenes; polyamides; polyvinylalcohols, optionally containing other co-monomers; polystyrenes; polyisoprenes; polycarbonates; polyesters; polyacrylates; polyolefins; polysaccharides, e.g., alginate and/or chitosan; gelatin; shellac; epoxy resins; vinyl polymers; water insoluble inorganics; silicone; aminoplasts, or mixtures thereof. In some aspects, where the shell comprises an aminoplast, the aminoplast comprises polyurea, polyurethane, and/or polyureaurethane. The polyurea may comprise polyoxymethyleneurea and/or melamine formaldehyde.

Perfume:

Preferred compositions of the invention comprise perfume. Typically the composition comprises a perfume that comprises one or more perfume raw materials, selected from the group as described in WO08/87497. However, any perfume useful in a laundry care composition may be used. A preferred method of incorporating perfume into the compositions of the invention is via an encapsulated perfume particle comprising either a water-soluble hydroxylic compound or melamine-formaldehyde or modified polyvinyl alcohol.

Malodor Reduction Materials:

The cleaning compositions of the present disclosure may comprise malodour reduction materials. Such materials are capable of decreasing or even eliminating the perception of one or more malodors. These materials can be characterized by a calculated malodor reduction value ("MORV"), which is calculated according to the test method shown in WO2016/049389.

As used herein "MORV" is the calculated malodor reduction value for a subject material. A material's MORV indicates such material's ability to decrease or even eliminate the perception of one or more malodors.

The cleaning compositions of the present disclosure may comprise a sum total of from about 0.00025% to about 0.5%, preferably from about 0.0025% to about 0.1%, more preferably from about 0.005% to about 0.075%, most preferably from about 0.01% to about 0.05%, by weight of the composition, of 1 or more malodor reduction materials. The cleaning composition may comprise from about 1 to about 20 malodor reduction materials, more preferably 1 to about 15 malodor reduction materials, most preferably 1 to about 10 malodor reduction materials.

One, some, or each of the malodor reduction materials may have a MORV of at least 0.5, preferably from 0.5 to 10, more preferably from 1 to 10, most preferably from 1 to 5. One, some, or each of the malodor reduction materials may have a Universal MORV, defined as all of the MORV values of >0.5 for the malodors tested as described herein. The sum total of malodor reduction materials may have a Blocker Index of less than 3, more preferable less than about 2.5, even more preferably less than about 2, and still more preferably less than about 1, and most preferably about 0. The sum total of malodor reduction materials may have a Blocker Index average of from about 3 to about 0.001.

In the cleaning compositions of the present disclosure, the malodor reduction materials may have a Fragrance Fidelity Index of less than 3, preferably less than 2, more preferably less than 1 and most preferably about 0 and/or a Fragrance Fidelity Index average of 3 to about 0.001 Fragrance Fidelity Index. As the Fragrance Fidelity Index decreases, the malodor reduction material(s) provide less and less of a scent impact, while continuing to counteract malodors.

The cleaning compositions of the present disclosure may comprise a perfume. The weight ratio of parts of

malodor reduction composition to parts of perfume may be from about 1:20,000 to about 3000:1, preferably from about 1:10,000 to about 1,000:1, more preferably from about 5,000:1 to about 500:1, and most preferably from about 1:15 to about 1:1. As the ratio of malodor reduction composition to parts of perfume is tightened, the malodor reduction material(s) provide less and less of a scent impact, while continuing to counteract malodors.

Conditioning Agents:

Suitable conditioning agents include high melting point fatty compounds. The high melting point fatty compound useful herein has a melting point of 25°C or higher and is selected from the group consisting of fatty alcohols, fatty acids, fatty alcohol derivatives, fatty acid derivatives, and mixtures thereof. Suitable conditioning agents also include nonionic polymers and conditioning oils, such as hydrocarbon oils, polyolefins, and fatty esters.

Suitable conditioning agents include those conditioning agents characterized generally as silicones (e.g., silicone oils, polyoils, silicone gums, high refractive silicones, and silicone resins), organic conditioning oils (e.g., hydrocarbon oils, polyolefins, and fatty esters) or combinations thereof, or those conditioning agents which otherwise form liquid, dispersed particles in the aqueous surfactant matrix herein. The compositions of the present invention may also comprise from about 0.05% to about 3% of at least one organic conditioning oil as the conditioning agent, either alone or in combination with other conditioning agents, such as the silicones (described herein). Suitable conditioning oils include hydrocarbon oils, polyolefins, and fatty esters.

Probiotics:

The composition may comprise probiotics, such as those described in WO2009/043709.

Organic acids:

The detergent comprises one or more organic acids selected from the group consisting of acetic acid, adipic acid, aspartic acid, carboxymethyloxymalonic acid, carboxymethyloxysuccinic acid, citric acid, formic acid, glutaric acid, hydroxyethyliminodiacetic acid, iminodiacetic acid, lactic acid, maleic acid, malic acid, malonic acid, oxydiacetic acid, oxydisuccinic acid, succinic acid, sulfamic acid, tartaric acid, tartaric-disuccinic acid, tartaric-monosuccinic acid, or mixtures thereof. Preferably, the detergent composition may comprise an organic acid selected from the group consisting of acetic acid, lactic acid, and citric acid.

Anti-oxidant:

The composition may optionally contain an anti-oxidant present in the composition from about 0.001 to about 2% by weight. Preferably the antioxidant is present at a concentration in the range 0.01 to 0.08% by weight. Mixtures of anti-oxidants may be used.

Hygiene Agent:

The compositions of the present invention may also comprise components to deliver hygiene and/or malodour benefits such as one or more of zinc ricinoleate, thymol, quaternary ammonium salts such as Bardac®, polyethylenimines (such as Lupasol® from BASF) and zinc complexes thereof, silver and silver compounds, especially those designed to slowly release Ag+ or nano-silver dispersions.

The cleaning compositions of the present invention may also contain antimicrobial agents. Preferably, the anti-microbial agent is selected from the group consisting of 4-4'-dichloro-2-hydroxy diphenyl ether ("Diclosan"), 2,4,4'-trichloro-2'-hydroxy diphenyl ether ("Triclosan"), and a combination thereof. Most preferably, the anti-microbial agent is 4-4'-dichloro-2-hydroxy diphenyl ether, commercially available from BASF, under the trademark name Tinosan®HP100.

Pearlescent Agent:

Non-limiting examples of pearlescent agents include: mica; titanium dioxide coated mica; bismuth oxychloride; fish scales; mono and diesters of alkylene glycol. The pearlescent agent may be ethyleneglycoldistearate (EGDS).

Opacifier:

The composition might also comprise an opacifier. As the term is used herein, an "opacifier" is a substance added to a material in order to make the ensuing system opaque. Preferably, the opacifier is Acusol, which is available from Dow

Chemicals. Acusol opacifiers are provided in liquid form at a certain % solids level. As supplied, the pH of Acusol opacifiers ranges from 2.0 to 5.0 and particle sizes range from 0.17 to 0.45 um. Preferably, Acusol OP303B and 301 can be used.

The opacifier may be an inorganic opacifier. Preferably, the inorganic opacifier can be $TiO_2$, ZnO, talc, $CaCO_3$, and combination thereof. The composite opacifier-microsphere material is readily formed with a preselected specific gravity, so that there is little tendency for the material to separate.

Solvents:

The solvent system in the present compositions can be a solvent system containing water alone or mixtures of organic solvents either without or preferably with water. The compositions may optionally comprise an organic solvent. Suitable organic solvents include $C_4$-$C_{14}$ ethers and diethers, glycols, alkoxylated glycols, $C_6$-$C_{16}$ glycol ethers, alkoxylated aromatic alcohols, aromatic alcohols, aliphatic branched alcohols, alkoxylated aliphatic branched alcohols, alkoxylated linear $C_1$-$C_5$ alcohols, linear $C_1$-$C_5$ alcohols, amines, $C_8$-$C_{14}$ alkyl and cycloalkyl hydrocarbons and halohydrocarbons, and mixtures thereof. Preferred organic solvents include 1,2-propanediol, 2,3 butane diol, ethanol, glycerol, ethoxylated glycerol, dipropylene glycol, methyl propane diol and mixtures thereof 2 ethyl hexanol, 3,5,5,trimethyl-1 hexanol, and 2 propyl heptanol. Solvents may be a polyethylene or polypropylene glycol ether of glycerin. Other lower alcohols, $C_{1-}C_4$ alkanolamines such as monoethanolamine and triethanolamine, can also be used. Solvent systems can be absent, for example from anhydrous solid embodiments of the invention, but more typically are present at levels in the range of from about 0.1% to about 98%, preferably at least about 1% to about 50%, more usually from about 5% to about 25%, alternatively from about 1% to about 10% by weight of the liquid detergent composition of said organic solvent. These organic solvents may be used in conjunction with water, or they may be used without water

Hydrotrope:

The composition may optionally comprise a hydrotrope in an effective amount, i.e. from about 0% to 15%, or about 1% to 10% , or about 3% to about 6%, so that compositions are compatible in water. Suitable hydrotropes for use herein include anionic-type hydrotropes, particularly sodium, potassium, and ammonium xylene sulfonate, sodium, potassium and ammonium toluene sulfonate, sodium potassium and ammonium cumene sulfonate, and mixtures thereof, as disclosed in U.S. Patent 3,915,903.

Suds Suppressor:

Compounds for reducing or suppressing the formation of suds can be incorporated into the water-soluble unit dose articles. Suds suppression can be of particular importance in the so-called "high concentration cleaning process" and in front-loading style washing machines. Examples of suds supressors include monocarboxylic fatty acid and soluble salts therein, high molecular weight hydrocarbons such as paraffin, fatty acid esters (e.g., fatty acid triglycerides), fatty acid esters of monovalent alcohols, aliphatic $C_{18}$-$C_{40}$ ketones (e.g., stearone), N-alkylated amino triazines, waxy hydrocarbons preferably having a melting point below about 100 °C, silicone suds suppressors, and secondary alcohols. Preferred fatty acid blends may be mixtures enriched or Fatty acid mixtures enriched with 2-alkyl fatty acid, preferably 2-methyl octanoic acid

Additional suitable antifoams are those derived from phenylpropylmethyl substituted polysiloxanes.

The detergent composition may comprise a suds suppressor selected from organomodified silicone polymers with aryl or alkylaryl substituents combined with silicone resin and a primary filler, which is modified silica. The detergent compositions may comprise from about 0.001% to about 4.0%, by weight of the composition, of such a suds suppressor.

The detergent composition comprises a suds suppressor selected from: a) mixtures of from about 80 to about 92% ethylmethyl, methyl(2-phenylpropyl) siloxane; from about 5 to about 14% MQ resin in octyl stearate; and from about 3 to about 7% modified silica; b) mixtures of from about 78 to about 92% ethylmethyl, methyl(2-phenylpropyl) siloxane; from about 3 to about 10% MQ resin in octyl stearate; from about 4 to about 12% modified silica; or c) mixtures thereof, where the percentages are by weight of the anti-foam.

Liquid laundry detergent composition.

The fabric and home care product can be a laundry detergent composition, such as a liquid laundry detergent composition. Suitable liquid laundry detergent compositions can comprise a non-soap surfactant, wherein the non-soap surfactant comprises an anionic non-soap surfactant and a non-ionic surfactant. The laundry detergent composition can comprise from 10% to 60%, or from 20% to 55% by weight of the laundry detergent composition of the non-soap surfactant. The non-soap anionic surfactant to nonionic surfactant are from 1:1 to 20:1, from 1.5:1 to 17.5:1, from 2:1 to 15:1, or from 2.5:1 to 13:1. Suitable non-soap anionic surfactants include linear alkylbenzene sulphonate, alkyl sulphate or a mixture

thereof. The weight ratio of linear alkylbenzene sulphonate to alkyl sulphate can be from 1:2 to 9:1, from 1:1 to 7:1, from 1:1 to 5:1, or from 1:1 to 4:1. Suitable linear alkylbenzene sulphonates are $C_{10}$-$C_{16}$ alkyl benzene sulfonic acids, or $C_{11}$-$C_{14}$ alkyl benzene sulfonic acids. Suitable alkyl sulphate anionic surfactants include alkoxylated alkyl sulphates, non-alkoxylated alkyl sulphates, and mixture thereof. Preferably, the HLAS surfactant comprises greater than 50% $C_{12}$, preferably greater than 60%, preferably greater than 70% $C_{12}$, more preferably greater than 75% $C_{12}$. Suitable alkoxylated alkyl sulphate anionic surfactants include ethoxylated alkyl sulphate anionic surfactants. Suitable alkyl sulphate anionic surfactants include ethoxylated alkyl sulphate anionic surfactant with a mol average degree of ethoxylation of from 1 to 5, from 1 to 3, or from 2 to 3. The alkyl alkoxylated sulfate may have a broad alkoxy distribution or a peaked alkoxy distribution. The alkyl portion of the AES may include, on average, from 13.7 to about 16 or from 13.9 to 14.6 carbons atoms. At least about 50% or at least about 60% of the AES molecule may include having an alkyl portion having 14 or more carbon atoms, preferable from 14 to 18, or from 14 to 17, or from 14 to 16, or from 14 to 15 carbon atoms. The alkyl sulphate anionic surfactant may comprise a non-ethoxylated alkyl sulphate and an ethoxylated alkyl sulphate wherein the mol average degree of ethoxylation of the alkyl sulphate anionic surfactant is from 1 to 5, from 1 to 3, or from 2 to 3. The alkyl fraction of the alkyl sulphate anionic surfactant can be derived from fatty alcohols, oxo-synthesized alcohols, Guerbet alcohols, or mixtures thereof. Preferred alkyl sulfates include optionally ethoxylated alcohol sulfates including 2-alkyl branched primary alcohol sulfates especially 2-branched $C_{12-15}$ primary alcohol sulfates, linear primary alcohol sulfates especially linear $C_{12-14}$ primary alcohol sulfates, and mixtures thereof. The laundry detergent composition can comprise from 10% to 50%, or from 15% to 45%, or from 20% to 40%, or from 30% to 40% by weight of the laundry detergent composition of the non-soap anionic surfactant.

Suitable non-ionic surfactants can be selected from alcohol broad or narrow range alkoxylates, an oxo-synthesised alcohol alkoxylate, Guerbet alcohol alkoxylates, alkyl phenol alcohol alkoxylates, or a mixture thereof. The laundry detergent composition can comprise from 0.01% to 10%, from 0.01% to 8%, from 0.1% to 6%, or from 0.15% to 5% by weight of the liquid laundry detergent composition of a non-ionic surfactant.

The laundry detergent composition comprises from 1.5% to 20%, or from 2% to 15%, or from 3% to 10%, or from 4% to 8% by weight of the laundry detergent composition of soap, such as a fatty acid salt. Such soaps can be amine neutralized, for instance using an alkanolamine such as monoethanolamine.

The laundry detergent composition can comprises an adjunct ingredient selected from the group comprising builders including citrate, enzymes, bleach, bleach catalyst, dye, hueing dye, Leuco dyes, brightener, cleaning polymers including alkoxylated polyamines and polyethyleneimines, amphiphilic copolymers, soil release polymer, surfactant, solvent, dye transfer inhibitors, chelant, diamines, perfume, encapsulated perfume, polycarboxylates, structurant, pH trimming agents, antioxidants, antibacterial, antimicrobial agents, preservatives and mixtures thereof.

The laundry detergent composition can have a pH of from 2 to 11, or from 6.5 to 8.9, or from 7 to 8, wherein the pH of the laundry detergent composition is measured at a 10% product concentration in demineralized water at 20°C.

The liquid laundry detergent composition can be Newtonian or non-Newtonian, preferably non-Newtonian.

For liquid laundry detergent compositions, the composition can comprise from 5% to 99%, or from 15% to 90%, or from 25% to 80% by weight of the liquid detergent composition of water.

The detergent composition according to the invention can be liquid laundry detergent composition. The following are exemplary liquid laundry detergent formulations (Table 1). Preferably the liquid laundry detergent composition comprises from between 0.1 to 20.0%, preferably 0.2% to 10%, preferably between 0.3% and 5.0%, preferably between 0.5% and 3%, more preferably between 1% to 2.5% by weight of the detergent composition of the polymer according to the invention.

Table 1.

| Raw Material | Comp. 1 %wt | Comp. 2 %wt | Comp. 3 %wt | Comp. 4 %wt |
|---|---|---|---|---|
| Branched Alkyl Sulfate | 0.0 | 5.3 | 0.0 | 5.3 |
| Sodium Lauryl Sulfate | 0.0 | 3.0 | 0.0 | 3.0 |
| Linear alkylbenzene sulfonate | 18.0 | 5.0 | 6.0 | 5.0 |
| $AE_3S$ Ethoxylated alkyl sulphate with an average degree of ethoxylation of 3 | 5.0 | 0.0 | 1.3 | 0.0 |
| $C_{25}$AES Ethoxylated alkyl sulphate with an average degree of ethoxylation of 2.5[1] | 0.0 | 3.0 | 1.4 | 0.0 |
| Amine oxide surfactant | 0.7 | 1.0 | 0.4 | 0.8 |
| $C_{12-14}$ alkyl ethoxylate (EO7) | 8.4 | 0.0 | 12.9 | 5.0 |
| $C_{12-14}$ alkyl ethoxylate (EO9) | 0.0 | 8.7 | 0.0 | 3.7 |

(continued)

| Raw Material | Comp. 1 %wt | Comp. 2 %wt | Comp. 3 %wt | Comp. 4 %wt |
|---|---|---|---|---|
| $C_{12-15}$ alkyl ethoxylate (EO7) | 0.0 | 2.7 | 0.0 | 2.7 |
| Citric acid | 2.9 | 2.3 | 0.7 | 2.3 |
| Palm kernel fatty acid | 0.0 | 1.0 | 0.0 | 1.0 |
| Topped kernel fatty acid | 2.9 | 0.0 | 2.3 | 0.0 |
| Mannanase | 0.0017 | 0.0017 | 0.0017 | 0.0017 |
| Pectawash | 0.00342 | 0.00342 | 0.00342 | 0.00342 |
| Amylase | 0.00766 | 0.00766 | 0.00766 | 0.00766 |
| Protease | 0.07706 | 0.07706 | 0.07706 | 0.07706 |
| Nuclease[3] | 0.010 | 0.01 | 0.01 | 0.01 |
| Sodium tetraborate | 0.0 | 1.7 | 0.0 | 1.7 |
| MEA-Boric Acid Salt | 0.0 | 0.0 | 0.8 | 0.0 |
| Calcium/sodium formate | 0.0 | 0.04 | 0.01 | 0.04 |
| Sodium/Calcium Chloride | 0.04 | 0.02 | 0.03 | 0.02 |
| Ethoxylated polyethyleneimine[2] | 0.0 | 2.0 | 1.1 | 2.0 |
| Amphiphilic graft copolymer | 1.5 | 0.0 | 0.0 | 0.0 |
| Ethoxylated-Propoxylated polyethyleneimine | 0.0 | 2.0 | 0.8 | 2.0 |
| Zwitterionic polyamine | 0.5 | 0.0 | 0.0 | 0.0 |
| Nonionic polyester terephthalate | 1.0 | 1.0 | 1.0 | 1.0 |
| Graft polymer of the present invention | 3.0 | 2.5 | 1.2 | 2.5 |
| Propoxylated polyol of the present invention | 1.0 | 2.0 | 1.5 | 2.5 |
| DTPA | 0.0 | 0.1 | 0.2 | 0.1 |
| EDDS | 0.1 | 0.0 | 0.0 | 0.0 |
| GLDA | 0.4 | 0.3 | 0.1 | 0.0 |
| MGDA | 0.2 | 0.0 | 0.0 | 0.5 |
| Diethylene triamine penta(methyl phosphonic) acid (DTPMP) | 1.1 | 0.0 | 0.0 | 0.0 |
| Fluorescent Brightener[8] | 0.06 | 0.22 | 0.03 | 0.15 |
| Ethanol | 0.7 | 1.9 | 0.0 | 1.9 |
| propylene glycol | 5.5 | 5.5 | 0.33 | 5.5 |
| Sorbitol | 0.01 | 0.01 | 0.0 | 0.01 |
| Monoethanolamine | 0.2 | 0.2 | 0.6 | 0.2 |
| DETA | 0.1 | 0.08 | 0.0 | 0.08 |
| Antioxidant 1 | 0.0 | 0.1 | 0.1 | 0.1 |
| Antioxidant 2 | 0.1 | 0.0 | 0.0 | 0.0 |
| Hygiene Agent | 0.0 | 0.0 | 0.05 | 0.0 |
| NaOH | 4.7 | 4.7 | 1.1 | 4.7 |
| NaCS | 3.2 | 1.7 | 3.2 | 1.7 |
| Hydrogenated Castor Oil | 0.2 | 0.1 | 0.12 | 0.1 |
| Aesthetic dye | 0.10 | 0.01 | 0.006 | 0.01 |
| Leuco dye | 0.05 | 0.01 | 0.0 | 0.01 |

(continued)

| Raw Material | Comp. 1 %wt | Comp. 2 %wt | Comp. 3 %wt | Comp. 4 %wt |
|---|---|---|---|---|
| Perfume | 2.0 | 1.3 | 0.5 | 1.3 |
| Perfume microcapsules | 0.5 | 0.05 | 0.1 | 0.05 |
| Silicone antifoam[7] | 0.02 | 0.01 | 0.0 | 0.01 |
| Phenyloxyethanol | 0.002 | 0.01 | 0.0 | 0.01 |
| Hueing dye | 0.01 | 0.1 | 0.05 | 0.1 |
| Water & miscellaneous | balance | balance | balance | balance |
| Description of super-script numbers:<br>1 $C_{12-15}$EO2.5S AlkylethoxySulfate where the alkyl portion of AES includes from about 13.9 to 14.6 carbon atoms<br>2 PE-20 commercially available from BASF<br>3 Nuclease enzyme is as claimed in co-pending European application 19219568.3<br>4 Antioxidant 1 is 3,5-bis(1,1-dimethylethyl)-4-hydroxybenzenepropanoic acid, methyl ester [6386-38-5]<br>5 Antioxidant 2 is Tinogard TS commercially available from BASF<br>6 Hygiene Agent is agent is Tinosan HP 100 commercially available from BASF<br>7 Dow Corning supplied antifoam blend 80-92% ethylmethyl, methyl(2-phenyl propyl)siloxane; 5-14% MQ Resin in octyl stearate a 3-7% modified silica.<br>8 Fluorescent Brightener is disodium 4,4'-bis{[4-anilino-6-morpholino-s-triazin-2-yl]-amino}-2,2'-stilbenedisulfonate or 2,2'-([1,1'-Biphenyl]-4,4'-diyldi-2,1-ethenediyl)bis-benzenesulfonic acid disodium salt. | | | | |

Water Soluble Unit Dose Article.

The fabric and home care product can be a water-soluble unit dose article. The water-soluble unit dose article comprises at least one water-soluble film orientated to create at least one unit dose internal compartment, wherein the at least one unit dose internal compartment comprises a detergent composition. The water-soluble film preferably comprises polyvinyl alcohol homopolymer or polyvinyl alcohol copolymer, for example a blend of polyvinylalcohol homopolymers and/or polyvinylalcohol copolymers, for example copolymers selected from sulphonated and carboxylated anionic polyvinylalcohol copolymers especially carboxylated anionic polyvinylalcohol copolymers, for example a blend of a polyvinylalcohol homopolymer and a carboxylated anionic polyvinylalcohol copolymer. In some examples water soluble films are those supplied by Monosol under the trade references M8630, M8900, M8779, M8310. The detergent product comprises a detergent composition, more preferably a laundry detergent composition. Preferably the laundry detergent composition enclosed in the water-soluble unit dose article comprises from between 0.1% and 8%, preferably between 0.5% and 7%, more preferably 1.0% to 6.0% by weight of the detergent composition of the polymer of the present invention. Preferably the soluble unit dose laundry detergent composition comprises a non-soap surfactant, wherein the non-soap surfactant comprises an anionic non-soap surfactant and a non-ionic surfactant. More preferably, the laundry detergent composition comprises between 10% and 60%, or between 20% and 55% by weight of the laundry detergent composition of the non-soap surfactant. The weight ratio of non-soap anionic surfactant to nonionic surfactant preferably is from 1:1 to 20:1, from 1.5:1 to 17.5:1, from 2:1 to 15:1, or from 2.5:1 to 13:1. The non-soap anionic surfactants preferably comprise linear alkylbenzene sulphonate, alkyl sulphate or a mixture thereof. The weight ratio of linear alkylbenzene sulphonate to alkyl sulphate preferably is from 1:2 to 9:1, from 1:1 to 7:1, from 1:1 to 5:1, or from 1:1 to 4:1. Example linear alkylbenzene sulphonates are $C_{10}$-$C_{16}$ alkyl benzene sulfonic acids, or $C_{11}$-$C_{14}$ alkyl benzene sulfonic acids. By 'linear', we herein mean the alkyl group is linear. Example alkyl sulphate anionic surfactant may comprise alkoxylated alkyl sulphate or non-alkoxylated alkyl sulphate or a mixture thereof. Example alkoxylated alkyl sulphate anionic surfactants comprise an ethoxylated alkyl sulphate anionic surfactant. Example alkyl sulphate anionic surfactant may comprise an ethoxylated alkyl sulphate anionic surfactant with a mol average degree of ethoxylation from 1 to 5, from 1 to 3, or from 2 to 3. Example alkyl sulphate anionic surfactant may comprise a non-ethoxylated alkyl sulphate and an ethoxylated alkyl sulphate wherein the mol average degree of ethoxylation of the alkyl sulphate anionic surfactant is from 1 to 5, from 1 to 3, or from 2 to 3. Example alkyl fraction of the alkyl sulphate anionic surfactant are derived from fatty alcohols, oxo-synthesized alcohols, Guerbet alcohols, or mixtures thereof. Preferably the laundry detergent composition comprises between 10% and 50%, between 15% and 45%, between 20% and 40%, or between 30% and 40% by weight of the laundry detergent composition of the non-soap anionic surfactant. In some examples, the non-ionic surfactant is selected from alcohol alkoxylate, an oxo-synthesised alcohol alkoxylate, Guerbet alcohol alkoxylates, alkyl phenol alcohol alkoxylates, or a mixture thereof. Preferably, the laundry detergent composition comprises between 0.01% and 10%, or between 0.01% and 8%, or between 0.1% and 6%, or between 0.15% and 5% by weight of the liquid laundry detergent composition of a non-ionic surfactant.

Preferably, the laundry detergent composition comprises between 1.5% and 20%, between 2% and 15%, between 3% and 10%, or between 4% and 8% by weight of the laundry detergent composition of soap, in some examples a fatty acid salt, in some examples an amine neutralized fatty acid salt, wherein in some examples the amine is an alkanolamine preferably monoethanolamine. Preferably the liquid laundry detergent composition comprises less than 15%, or less than 12% by weight of the liquid laundry detergent composition of water. Preferably, the laundry detergent composition comprises between 10% and 40%, or between 15% and 30% by weight of the liquid laundry detergent composition of a non-aqueous solvent selected from 1,2-propanediol, dipropylene glycol, tripropyleneglycol, glycerol, sorbitol, polyethylene glycol or a mixture thereof. Preferably the liquid laundry detergent composition comprises from 0.1% to 10%, preferably from 0.5% to 8% by weight of the detergent composition of further soil release polymers, preferably selected from the group of nonionic and/or anionically modified polyester terephthalate soil release polymers such as commercially available under the Texcare brand name from Clariant, amphiphilic graft polymers such as those based on polyalkylene oxides and vinyl esters, polyalkoxylated polyethyleneimines, and mixtures thereof. Preferably the liquid detergent composition further comprises from 0.1% to 10% preferably from 1% to 5% of a chelant. In some examples, the laundry detergent composition comprises an adjunct ingredient selected from the group comprising builders including citrate, enzymes, bleach, bleach catalyst, dye, hueing dye, brightener, cleaning polymers including (zwitterionic) alkoxylated polyamines, surfactant, solvent, dye transfer inhibitors, perfume, encapsulated perfume, polycarboxylates, structurant, pH trimming agents, and mixtures thereof. Preferably, the laundry detergent composition has a pH between 6 and 10, between 6.5 and 8.9, or between 7 and 8, wherein the pH of the laundry detergent composition is measured as a 10% product concentration in demineralized water at 20°C. When liquid, the laundry detergent composition may be Newtonian or non-Newtonian, preferably non-Newtonian.

The following is an exemplary water-soluble unit dose formulations (Table 2). The composition can be part of a single chamber water soluble unit dose article or can be split over multiple compartments resulting in below "averaged across compartments" full article composition. The composition is enclosed within a polyvinyl alcohol-based water soluble, the polyvinyl alcohol comprising a blend of a polyvinyl alcohol homopolymer and an anionic e.g. carboxylated polyvinyl alcohol copolymer.

Table 2.

| Ingredients | Comp. 5 (wt%) |
|---|---|
| Fatty alcohol ethoxylate non-ionic surfactant, $C_{12-14}$ average degree of ethoxylation of 7 | 3.8 |
| Lutensol XL 100 | 0.5 |
| Linear $C_{11-14}$ alkylbenzene sulphonate | 24.6 |
| $AE_3S$ Ethoxylated alkyl sulphate with an average degree of ethoxylation of 3 | 12.5 |
| Citric acid | 0.7 |
| Palm Kernel Fatty acid | 5.3 |
| Nuclease enzyme* (wt% active protein) | 0.01 |
| Protease enzyme (wt% active protein) | 0.07 |
| Amylase enzyme (wt% active protein) | 0.005 |
| Xyloglucanese enzyme (wt% active protein) | 0.005 |
| Mannanase enzyme (wt% active protein) | 0.003 |
| Ethoxylated polyethyleneimine (Lutensol FP620 - PEI600E020) | 1.4 |
| Amphiphilic graft copolymer** | 1.6 |
| Zwitterionic polyamine (Lutensit Z96) | 1.5 |
| Anionic polyester terephthalate (Texcare SRA300) | 0.6 |
| Graft polymer of the present invention | 2.5 |
| Propoxylated polyol of the present invention | 3.0 |
| HEDP | 2.2 |
| Brightener 49 | 0.4 |
| Silicone anti-foam | 0.3 |
| Hueing dye | 0.05 |

(continued)

| Ingredients | Comp. 5 (wt%) |
|---|---|
| 1,2 PropaneDiol | 11.0 |
| Glycerine | 4.7 |
| DPG (DiPropyleneGlycol) | 1.7 |
| TPG (TriPropyleneGlycol) | 0.1 |
| Sorbitol | 0.1 |
| Monoethanolamine | 10.2 |
| $K_2SO_3$ | 0.4 |
| $MgCl_2$ | 0.3 |
| water | 10.5 |
| Hydrogenated castor oil | 0.1 |
| Perfume | 2.1 |
| Aesthetic dye & Minors | Balance to 100 |
| pH (10% product concentration in demineralized water at 20°C) | 7.4 |
| Description of super-scripts:<br>*Nuclease enzyme is as claimed in co-pending European application 19219568.3<br>**polyethylene glycol graft polymer comprising a polyethylene glycol backbone (Pluriol E6000) and hydrophobic vinyl acetate side chains, comprising 40% by weight of the polymer system of a polyethylene glycol backbone polymer and 60% by weight of the polymer system of the grafted vinyl acetate side chains | |

Hand Dishwashing Liquid Composition.

The fabric and home care product can be a dishwashing detergent composition, such as a hand dishwashing detergent composition, more preferably a liquid hand dishwashing detergent composition. Preferably the liquid hand dishwashing detergent composition comprises from between 0.1% and 5.0%, preferably between 0.5% and 4%, more preferably 1.0% to 3.0% by weight of the detergent composition of the polymer of the present invention. The liquid handdishwashing detergent composition preferably is an aqueous composition, comprising from 50% to 90%, preferably from 60% to 75%, by weight of the total composition of water. Preferably the pH of the detergent composition of the invention, measured as a 10% product concentration in demineralized water at 20°C, is adjusted to between 3 and 14, more preferably between 4 and 13, more preferably between 6 and 12 and most preferably between 8 and 10. The composition of the present invention can be Newtonian or non-Newtonian, preferably Newtonian. Preferably, the composition has a viscosity of from 10 mPa·s to 10,000 mPa·s, preferably from 100 mPa·s to 5,000 mPa·s, more preferably from 300 mPa·s to 2,000 mPa·s, or most preferably from 500 mPa·s to 1,500 mPa·s, alternatively combinations thereof. The viscosity is measured at 20°C with a Brookfield RT Viscometer using spindle 31 with the RPM of the viscometer adjusted to achieve a torque of between 40% and 60%.

The composition comprises from 5% to 50%, preferably from 8% to 45%, more preferably from 15% to 40%, by weight of the total composition of a surfactant system. The surfactant system preferably comprises from 60% to 90%, more preferably from 70% to 80% by weight of the surfactant system of an anionic surfactant. Alkyl sulphated anionic surfactants are preferred, particularly those selected from the group consisting of: alkyl sulphate, alkyl alkoxy sulphate preferably alkyl ethoxy sulphate, and mixtures thereof. The alkyl sulphated anionic surfactant preferably has an average alkyl chain length of from 8 to 18, preferably from 10 to 14, more preferably from 12 to 14, most preferably from 12 to 13 carbon atoms. The alkyl sulphated anionic surfactant preferably has an average degree of alkoxylation preferably ethoxylation, of less than 5, preferably less than 3, more preferably from 0.5 to 2.0, most preferably from 0.5 to 0.9. The alkyl sulphate anionic surfactant preferably has a weight average degree of branching of more than 10%, preferably more than 20%, more preferably more than 30%, even more preferably between 30% and 60%, most preferably between 30% and 50%. Suitable counterions include alkali metal cation earth alkali metal cation, alkanolammonium or ammonium or substituted ammonium, but preferably sodium. Suitable examples of commercially available alkyl sulphate anionic surfactants include, those derived from alcohols sold under the Neodol® brand-name by Shell, or the Lial®, Isalchem®, and Safol® brand-names by Sasol, or some of the natural alcohols produced by The Procter & Gamble Chemicals company.

The surfactant system preferably comprises from 0.1% to 20%, more preferably from 0.5% to 15% and especially

from 2% to 10% by weight of the liquid hand dishwashing detergent composition of a co-surfactant. Preferred co-surfactants are selected from the group consisting of an amphoteric surfactant, a zwitterionic surfactant, and mixtures thereof. The anionic surfactant to the co-surfactant weight ratio can be from 1:1 to 8:1, preferably from 2:1 to 5:1, more preferably from 2.5:1 to 4:1. The co-surfactant is preferably an amphoteric surfactant, more preferably an amine oxide surfactant. Preferably, the amine oxide surfactant is selected from the group consisting of: alkyl dimethyl amine oxide, alkyl amido propyl dimethyl amine oxide, and mixtures thereof, most preferably $C_{12}$-$C_{14}$ alkyl dimethyl amine oxide. Suitable zwitterionic surfactants include betaine surfactants, preferably cocamidopropyl betaine.

Preferably, the surfactant system of the composition of the present invention further comprises from 1% to 25%, preferably from 1.25% to 20%, more preferably from 1.5% to 15%, most preferably from 1.5% to 5%, by weight of the surfactant system, of a non-ionic surfactant. Suitable nonionic surfactants can be selected from the group consisting of: alkoxylated non-ionic surfactant, alkyl polyglucoside ("APG") surfactant, and mixtures thereof. Suitable alkoxylated non-ionic surfactants can be linear or branched, primary or secondary alkyl alkoxylated preferably alkyl ethoxylated non-ionic surfactants comprising on average from 9 to 15, preferably from 10 to 14 carbon atoms in its alkyl chain and on average from 5 to 12, preferably from 6 to 10, most preferably from 7 to 8, units of ethylene oxide per mole of alcohol. Most preferably, the alkyl polyglucoside surfactant has an average alkyl carbon chain length between 10 and 16, preferably between 10 and 14, most preferably between 12 and 14, with an average degree of polymerization of between 0.5 and 2.5 preferably between 1 and 2, most preferably between 1.2 and 1.6. $C_8$-$C_{16}$ alkyl polyglucosides are commercially available from several suppliers (e.g., Simusol® surfactants from Seppic Corporation; and Glucopon® 600 CSUP, Glucopon® 650 EC, Glucopon® 600 CSUP/MB, and Glucopon® 650 EC/MB, from BASF Corporation).

The liquid hand dishwashing detergent composition herein may optionally comprise a number of other adjunct ingredients such as builders (e.g., preferably citrate), chelants (e.g., preferably GLDA), conditioning polymers, cleaning polymers including polyalkoxylated polyalkylene imines, surface modifying polymers, soil flocculating polymers, sudsing polymers including EO-PO-EO triblock copolymers, grease cleaning amines including cyclic polyamines, structurants, emollients, humectants, skin rejuvenating actives, enzymes, carboxylic acids, scrubbing particles, bleach and bleach activators, perfumes, malodor control agents, pigments, dyes, opacifiers, beads, pearlescent particles, microcapsules, organic solvents, inorganic cations such as alkaline earth metals such as Ca/Mg-ions, antibacterial agents, preservatives, viscosity adjusters (e.g., salt such as NaCl, and other mono-, di- and trivalent salts) and pH adjusters and buffering means (e.g. carboxylic acids such as citric acid, HCl, NaOH, KOH, alkanolamines, phosphoric and sulfonic acids, carbonates such as sodium carbonates, bicarbonates, sesquicarbonates, borates, silicates, phosphates, imidazole and alike).

The following is an exemplary liquid hand dishwashing detergent formulation (Table 3). The formulation can be made through standard mixing of the individual components.

Table 3.

| As 100% active | Comp. 6 (wt%) |
|---|---|
| $C_{1213}AE_{0.6}S$ anionic surfactant (Avg. branching : 37,84%) | 19.6 |
| $C_{1214}$ dimethyl amine oxide | 6.5 |
| Alcohol ethoxylate nonionic surfactant (Neodol 91/8) | 1.0 |
| Alkoxylated polyethyleneimine ($PEI_{600}EO_{24}PO_{16}$) | 0.2 |
| Graft polymer of the present invention | 1.5 |
| Propoxylated polyol of the present invention | 1.0 |
| Ethanol | 2.4 |
| NaCl | 0.7 |
| Polypropyleneglycol (MW2000) | 0.9 |
| Water + Minor ingredients (perfume, dye, preservatives) | Balance to 100 |
| pH (at 10% product concentration in demineralized water - with NaOH trimming) | 9.0 |

Solid Free-flowing Particulate Laundry Detergent Composition.

The fabric and home care product can be solid free-flowing particulate laundry detergent composition. The following is an exemplary solid free-flowing particulate laundry detergent composition (Table 4).

Table 4.

| Ingredient | Comp. 7 (wt%) |
|---|---|
| Anionic detersive surfactant (such as alkyl benzene sulphonate, alkyl ethoxylated sulphate and mixtures thereof) | from 8wt% to 15wt% |
| Non-ionic detersive surfactant (such as alkyl ethoxylated alcohol) | from 0.1wt% to 4wt% |
| Cationic detersive surfactant (such as quaternary ammonium compounds) | from 0wt% to 4wt% |
| Other detersive surfactant (such as zwiterionic detersive surfactants, amphoteric surfactants and mixtures thereof) | from 0wt% to 4wt% |
| Carboxylate polymer (such as co-polymers of maleic acid and acrylic acid and/or carboxylate polymers comprising ether moieties and sulfonate moieties) | from 0.1wt% to 4wt% |
| Polyethylene glycol polymer (such as a polyethylene glycol polymer comprising polyvinyl acetate side chains) | from 0wt% to 4wt% |
| Polyester soil release polymer (such as Repel-o-tex and/or Texcare polymers) | from 0wt% to 2wt% |
| Cellulosic polymer (such as carboxymethyl cellulose, methyl cellulose and combinations thereof) | from 0.5wt% to 2wt% |
| Graft polymer of the present invention | From 0. 1wt% to 5wt% |
| Propoxylated polyol of the present invention | From 0. 1wt% to 4wt% |
| Other polymer (such as polymers based on polysaccharide) | from 0wt% to 4wt% |
| Zeolite builder and phosphate builder (such as zeolite 4A and/or sodium tripolyphosphate) | from 0wt% to 4wt% |
| Other co-builder (such as sodium citrate and/or citric acid) | from 0wt% to 3wt% |
| Carbonate salt (such as sodium carbonate and/or sodium bicarbonate) | from 0wt% to 20wt% |
| Silicate salt (such as sodium silicate) | from 0wt% to 10wt% |
| Filler (such as sodium sulphate and/or bio-fillers) | from 10wt% to 70wt% |
| Source of hydrogen peroxide (such as sodium percarbonate) | from 0wt% to 20wt% |
| Bleach activator (such as tetraacetylethylene diamine (TAED) and/or nonanoyloxybenzenesulphonate (NOBS)) | from 0wt% to 8wt% |
| Bleach catalyst (such as oxaziridinium-based bleach catalyst and/or transition metal bleach catalyst) | from 0wt% to 0.1wt% |
| Other bleach (such as reducing bleach and/or pre-formed peracid) | from 0wt% to 10wt% |
| Photobleach (such as zinc and/or aluminium sulphonated phthalocyanine) | from 0wt% to 0.1wt% |
| Chelant (such as ethylenediamine-N'N'-disuccinic acid (EDDS) and/or hydroxyethane diphosphonic acid (HEDP)) | from 0.2wt% to 1wt% |
| Hueing agent (such as direct violet 9, 66, 99, acid red 50, solvent violet 13 and any combination thereof) | from 0wt% to 1wt% |
| Brightener (C.I. fluorescent brightener 260 or C.I. fluorescent brightener 351) | from 0.1wt% to 0.4wt% |
| Protease (such as Savinase, Savinase Ultra, Purafect, FN3, FN4 and any combination thereof) | from 0.1wt% to 0.4wt% |
| Amylase (such as Termamyl, Termamyl ultra, Natalase, Optisize, Stainzyme, Stainzyme Plus and any combination thereof) | from 0wt% to 0.2wt% |
| Cellulase (such as Carezyme and/or Celluclean) | from 0wt% to 0.2wt% |
| Lipase (such as Lipex, Lipolex, Lipoclean and any combination thereof) | from 0wt% to 1wt% |
| Other enzyme (such as xyloglucanase, cutinase, pectate lyase, mannanase, bleaching enzyme) | from 0wt% to 2wt% |
| Fabric softener (such as montmorillonite clay and/or polydimethylsiloxane (PDMS)) | from 0wt% to 15wt% |

(continued)

| Ingredient | Comp. 7 (wt%) |
|---|---|
| Flocculant (such as polyethylene oxide) | from 0wt% to 1wt% |
| Suds suppressor (such as silicone and/or fatty acid) | from 0wt% to 4wt% |
| Perfume (such as perfume microcapsule, spray-on perfume, starch encapsulated perfume accords, perfume loaded zeolite, and any combination thereof) | from 0.1wt% to 1wt% |
| Aesthetics (such as coloured soap rings and/or coloured speckles/noodles) | from 0wt% to 1wt% |
| Miscellaneous | balance to 100wt% |

Fibrous Water-soluble Unit Dose Article.

As used herein, the phrases "water-soluble unit dose article," "water-soluble fibrous structure", and "water-soluble fibrous element" mean that the unit dose article, fibrous structure, and fibrous element are miscible in water. In other words, the unit dose article, fibrous structure, or fibrous element is capable of forming a homogeneous solution with water at ambient conditions. "Ambient conditions" as used herein means 23°C ± 1.0°C and a relative humidity of 50% ± 2%. The water-soluble unit dose article may contain insoluble materials, which are dispersible in aqueous wash conditions to a suspension mean particle size that is less than about 20 microns, or less than about 50 microns.

The fibrous water-soluble unit dose article may include any of the disclosures found in U.S. Patent Application No. 15/880,594 filed on January 26, 2018; U.S. Patent Application No. 15/880,599 filed January 26, 2018; and U.S. Patent Application No. 15/880,604 filed January 26, 2018; incorporated by reference in their entirety. Preferred water-soluble fibrous structure comprises particles having a ratio of Linear Alkylbenzene Sulfonate to Alkylethoxylated Sulfate or Alkyl Sulfate of greater than 1.

These fibrous water-soluble unit dose articles can be dissolved under various wash conditions, e.g., low temperature, low water and/or short wash cycles or cycles where consumers have been overloading the machine, especially with items having high water absorption capacities, while providing sufficient delivery of active agents for the intended effect on the target consumer substrates (with similar performance as today's liquid products). Furthermore, the water-soluble unit dose articles described herein can be produced in an economical manner by spinning fibers comprising active agents. The water-soluble unit dose articles described herein also have improved cleaning performance.

Method of Use.

The compositions of this invention, prepared as hereinbefore described, can be used to form aqueous washing/treatment solutions for use in the laundering/treatment of fabrics. Generally, an effective amount of such compositions is added to water, for example in a conventional fabric automatic washing machine, to form such aqueous laundering solutions. The aqueous washing solution so formed is then contacted, typically under agitation, with the fabrics to be laundered/treated therewith. An effective amount of the liquid detergent compositions herein added to water to form aqueous laundering solutions can comprise amounts sufficient to form from about 500 to 7,000 ppm of composition in aqueous washing solution, or from about 1,000 to 3,000 ppm of the laundry care compositions herein will be provided in aqueous washing solution.

Typically, the wash liquor is formed by contacting the laundry care composition with wash water in such an amount so that the concentration of the laundry care composition in the wash liquor is from above 0g/l to 5g/l, or from 1g/l, and to 4.5g/l, or to 4.0g/l, or to 3.5g/l, or to 3.0g/l, or to 2.5g/l, or even to 2.0g/l, or even to 1.5g/l. The method of laundering fabric or textile may be carried out in a top-loading or front-loading automatic washing machine or can be used in a handwash laundry application. In these applications, the wash liquor formed and concentration of laundry detergent composition in the wash liquor is that of the main wash cycle. Any input of water during any optional rinsing step(s) is not included when determining the volume of the wash liquor.

The wash liquor may comprise 40 liters or less of water, or 30 liters or less, or 20 liters or less, or 10 liters or less, or 8 liters or less, or even 6 liters or less of water. The wash liquor may comprise from above 0 to 15 liters, or from 2 liters, and to 12 liters, or even to 8 liters of water. Typically, from 0.01kg to 2kg of fabric per liter of wash liquor is dosed into said wash liquor. Typically, from 0.01kg, or from 0.05kg, or from 0.07kg, or from 0.10kg, or from 0.15kg, or from 0.20kg, or from 0.25kg fabric per liter of wash liquor is dosed into said wash liquor. Optionally, 50g or less, or 45g or less, or 40g or less, or 35g or less, or 30g or less, or 25g or less, or 20g or less, or even 15g or less, or even 10g or less of the composition is contacted to water to form the wash liquor. Such compositions are typically employed at concentrations of from about 500 ppm to about 15,000 ppm in solution. When the wash solvent is water, the water temperature typically ranges from about 5 °C to about 90 °C and, when the situs comprises a fabric, the water to fabric ratio is typically from about 1:1 to about 30:1. Typically the

wash liquor comprising the laundry care composition of the invention has a pH of from 3 to 11.5.

In one aspect, such method comprises the steps of optionally washing and/or rinsing said surface or fabric, contacting said surface or fabric with any composition disclosed in this specification then optionally washing and/or rinsing said surface or fabric is disclosed, with an optional drying step.

Drying of such surfaces or fabrics may be accomplished by any one of the common means employed either in domestic or industrial settings. The fabric may comprise any fabric capable of being laundered in normal consumer or institutional use conditions, and the invention is suitable for cellulosic substrates and in some aspects also suitable for synthetic textiles such as polyester and nylon and for treatment of mixed fabrics and/or fibers comprising synthetic and cellulosic fabrics and/or fibers. As examples of synthetic fabrics are polyester, nylon, these may be present in mixtures with cellulosic fibers, for example, polycotton fabrics. The solution typically has a pH of from 7 to 11, more usually 8 to 10.5. The compositions are typically employed at concentrations from 500 ppm to 5,000 ppm in solution. The water temperatures typically range from about 5°C to about 90°C. The water to fabric ratio is typically from about 1:1 to about 30:1.

Another method includes contacting a nonwoven substrate, which is impregnated with the detergent composition, with a soiled material. As used herein, "nonwoven substrate" can comprise any conventionally fashioned nonwoven sheet or web having suitable basis weight, caliper (thickness), absorbency, and strength characteristics. Non-limiting examples of suitable commercially available nonwoven substrates include those marketed under the trade names SONTARA® by DuPont and POLY WEB® by James River Corp.

Carbon Source of Raw Materials.

The raw materials for preparation of the surfactant, polymers and other ingredients can be based on fossil carbon or renewable carbon. Renewable carbon is a carbon source that avoid the use of fossil carbon such as natural gas, coal, petroleum. Typically, renewable carbon is derived from the biomass, carbon capture, or chemical recycling.

Biomass is a renewable carbon source formed through photosynthesis in the presence of sunlight, or chemosynthesis process in the absence of sunlight. In some cases, polymers isolated from biomass can be used directly, or further derivatized to make performance polymers. For example, the use of polysaccharide (such as starch) and derivatized polysaccharide (such as cellulose derivatives, guar derivatives, dextran derivatives) in fabric home care composition are known. In some cases, biomass can be converted into basic chemicals under certain thermal, chemical, or biological conditions. For example, bioethanol can be derived from biomass such as straw, and further convert to biobased polyethylene glycol. Other nonlimiting examples of renewable carbon from biomass include plants (e.g., sugar cane, beets, corn, potatoes, citrus fruit, woody plants, lignocellulosics, hemicellulosics, cellulosic waste), animals, animal fats, fish, bacteria, fungi, plant-based oils, and forestry products. These resources can be naturally occurring, hybrids, or genetically engineered organisms.

Carbon capture is another renewable carbon source which use various process to capture $CO_2$ or methane from industrial or natural processes, or directly from air (direct capture). Captured methane and $CO_2$ maybe converted into syngas, and/or further convert to basic chemicals, including but not limit to methanol, ethanol, fatty alcohols such as $C_{12}/C_{14}$ or even $C_{16}/C_{18}$ alcohols, other alcohols, olefins, alkanes, saturated and unsaturated organic acids, etc. These basic chemicals can used as or further convert to monomers for making transformed to usable chemicals by e.g. catalytic processes, such as the Fischer-Tropsch process or by fermentation by $C_1$ -fixing microorganisms.

Chemical recycling is another renewable carbon source which allow plastics from waste management industry to be recycled and converted into base chemicals and chemical feedstocks. In some cases, waste plastics which cannot be re-used or mechanical recycled are convert to hydrocarbons or basic petrochemicals through gasification, pyrolysis or hydrothermal treatment processes, the hydrocarbons and basic petrochemicals can be further convert into monomers for polymers. In some cases, waste plastics are depolymerized into monomers to make new polymers. It is also possible that waste plastics are depolymerized into oligomers, the oligomers can be used as building blocks to make new polymers. The waste plastic converted by various processes to a waste plastic feedstock for the above materials may either be used alone or in combination with traditional surfactant feedstocks, such as kerosene, polyolefins derived from natural gas, coal, crude oil or even biomass, or waste fat/oil-derived paraffin and olefin, to produce biodegradable surfactants for use in detergents and other industries (thereby providing a benefit to society).

Preferably, the surfactant, polymers and other ingredients contains renewable carbon, the Renewable Carbon Index (RCI, a measure of sustainability by dividing the number of carbons derived from renewable sources by the total number of carbons in an active ingredient) of the polymer is above 10%, more preferably above 30%, more preferably above 50%, more preferably above 60%, more preferably between 70% to 100%, and most preferably 100%.

Embodiments of the present invention

1. A fabric and home care composition comprising, a fabric and home care ingredient, a graft polymer and a propoxylated polyol, wherein

The graft polymer comprises:

(A) a polyalkylene oxide backbone (A) which comprises at least one structural unit derived from the group of monomers consisting of ethylene oxide, 1,2-propylene oxide, 1,2-butylene oxide, 2,3-butylene oxide, 1,2-pentene oxide and 2,3-pentene oxide, and
(B) polymeric sidechains (B) grafted onto the polyalkylene oxide backbone (A), wherein said polymeric sidechains (B) comprise at least one vinyl ester monomer (B1) and optionally N-vinylpyrrolidone as further monomer (B2).
and

The propoxylated polyol comprises a polyol core comprising from three to five -OH groups, wherein at least one of the -OH groups is modified to form a polypropylene oxide branch, wherein the propoxylated polyol comprises polypropylene oxide branches comprising on average at least four polypropylene oxide units.

2. The composition according to embodiment 1, wherein the

(A) polyalkylene oxide backbone (A) is a block copolymer backbone as a graft base, wherein said block copolymer backbone (A) comprises structural units derived from at least two monomers selected from the group of ethylene oxide, 1,2 propylene oxide, 1,2 butylene oxide, 2,3 butylene oxide, 1,2-pentene oxide or 2,3 pentene oxide, the units being arranged in in at least two blocks being structurally different to each other.

3. The composition according to any preceding embodiment, wherein the graft polymer comprises 20 to 95% by weight of polyalkylene oxide backbone (A) and 5 to 80% by weight of the polymeric sidechains (B) (in relation to the total weight of the graft polymer). Preferably the graft polymer comprises 40 to 85% by weight, more preferably 50 to 75% by weight of the polyalkylene oxide backbone (A), and preferably 15 to 60% by weight, more preferably 25 to 50% by weight of the polymeric sidechains (B) (in relation to the total weight of the graft polymer).

4. The composition according to any preceding embodiment, wherein the polyalkylene oxide backbone (A) is a block copolymer obtainable by polymerization of

i) at least two monomers selected from the group of ethylene oxide, 1,2-propylene oxide or 1,2-butylene oxide, preferably by polymerization of ethylene oxide and 1,2-propylene oxide as monomers, and/or
ii) one of the at least two monomers employed is ethylene oxide, preferably the second monomer employed is 1,2-propylene oxide, and/or

wherein, the number (x) of individual blocks within the block copolymer backbone (A) is an integer, wherein x has a value from 2 to 10, preferably x has a value from 3 to 5, more preferably x is 3 or 5, most preferably x is 3.

5. The composition according to any preceding embodiment, wherein

i) the graft polymer has a mean molecular weight $M_w$ of from 1 000 to 100 000 g/mol, preferably from 2 000 to 45 000 g/mol and more preferably from 3 000 to 30 000 g/mol, and/or
ii) the graft polymer has a polydispersity $M_w/M_n$ of < 3, preferably < 2.5, more preferably < 2.3, and most preferably in the range from 1.0 to 2.2 (with $M_w$ = mean molecular weight and $M_n$ = mean molecular mass $[{}^{g}/_{mol} / {}^{g}/_{mol}]$), and/or
iii) the polyalkylene oxide backbone (A) is optionally capped at one or both endgroups, preferably the block copolymer backbone (A) is not capped at both endgroups or, if the block copolymer backbone (A) is capped, the capping is done by $C_1$-$C_{25}$-alkyl groups, and/or
iv) the polyalkylene oxide backbone (A) is a triblock copolymer of polyethylene oxide (PEG) and polypropylene oxide (PPG).

6. The composition according to any preceding embodiment, wherein the polyalkylene oxide backbone (A) has the structure according to formula (A1) or formula (A2) with

formula (A1) is defined as follows:

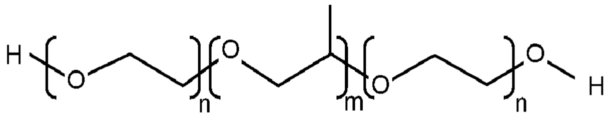

(A1)

with

n is an integer in the range of 2 to 100, preferably of 3 to 80, and
m is an integer in the range of 2 to 100, preferably of 10 to 70, more preferably of 14 to 54, or

formula (A2) is defined as follows:

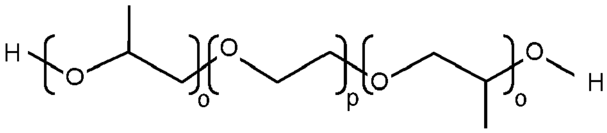

(A2)

with

o is an integer in the range of 2 to 100, preferably of 5 to 50, more preferably of 8 to 27, and
p is an integer in the range of 2 to 100, preferably of 5 to 50, more preferably of 7 to 24.

6. The composition according to any preceding embodiment, wherein the polymeric sidechains (B) are obtained by radical polymerization and/or the at least one vinyl ester monomer (B 1) is vinyl acetate or vinyl propionate, more preferably vinyl acetate.

7. The composition according to any preceding embodiment, wherein the polymeric sidechains (B) are obtained by radical polymerization of

(B 1) 25 to 100% by weight (in relation to the sum of (B 1) and (B2)) of at least one vinyl ester monomer (B1), preferably 50 to 100% by weight, more preferably 75 to 100% by weight, and
(B2) 0 to 75% by weight (in relation to the sum of (B 1) and (B2)) of N-vinylpyrrolidone as further monomer (B2), preferably 0 to 50% by weight, more preferably 0 to 25% by weight.

8. The composition according to embodiment 1, wherein in the graft polymerthe polyalkylene oxide backbone (A) is a copolymer backbone as a graft base and comprises at least two types of monomers selected from the group of ethylene oxide, 1,2-propylene oxide, 1,2-butylene oxide, 2,3-butylene oxide, 1,2-pentene oxide or 2,3-pentene oxide,

a. wherein the distribution of the alkylene oxide moieties within the copolymer backbone is in random order, and
b. wherein the molecular weight of the copolymer backbone Mn in g/mol is within 500 to 7000, preferably not more than 6000, more preferably not more than 5000, even more preferably not more than 4500, even more preferably not more than 4000, even more preferably not more than 3500 and most preferably not more than 3000, and preferably at least 1000, more preferably at least 1200,
and

(B) polymeric sidechains grafted onto the copolymer backbone, wherein said polymeric sidechains (B) are obtainable by polymerization of at least one vinyl ester monomer (B1), and optionally at least one other monomer (B2), wherein - if present - the weight ratio of monomer (B2) to monomer (B1) is less than 0.5, preferably less than 0.4, more preferably less than 0.3, even more preferably less than 0.2, and most preferably less than 0.1,
comprising in percent by weight in relation to the total weight of the graft polymer 25 to 85%, preferably 30 to 80%, more preferably 35 to 80%, even more preferably 40 to 75%, and most preferably 55 to 75%, of the copolymer backbone (A),
And
15 to 75%, preferably 20 to 70%, more preferably 20 to 65 %, even more preferably 25 to 60%, most preferably 25 to 45%, of the polymeric sidechains (B).

9. The composition according to embodiment 1 and 8, wherein the polyalkylene oxide backbone (A) is obtainable by

polymerization of

i) at least two monomers selected from the group of ethylene oxide, 1,2-propylene oxide or 1,2-butylene oxide, preferably at least ethylene oxide being selected as one of the monomers, more preferably only ethylene oxide and propylene oxide being selected as monomers, and/or
ii) the relative amount of EO in the polymer backbone A is within 5 to 95%, preferably 10 to 90%, more preferably 15 to 85%, even more preferably at least 20 to 80% (all as weight percent in relation to the total mass of alkylene oxides in the polymer backbone (A)), and/or
iii) essentially no monomer (B2) is employed for the polymerization to obtain the side chains (B).

10. The composition according to embodiment 1, and 8-9, wherein

i) the graft polymer has a polydispersity Mw/Mn of < 5, preferably < 3.5, more preferably < 3, and most preferably in the range from 1.0 to 2.5 (with Mw = weight average molecular weight and Mn = number average molecular weight [g/mol / g/mol]), and/or
ii) the copolymer backbone (A) is optionally capped at one or both end groups, preferably the copolymer backbone (A) is not capped at both end groups or, if the copolymer backbone (A) is capped, the capping is done by $C_1$-$C_{25}$-alkyl groups, preferably $C_1$ to $C_4$-alkyl groups.

11. The composition according to embodiment 1, and 8-10, wherein the polymeric sidechains (B) of the graft polymer are obtained by radical polymerization of the at least one vinyl ester monomer (B1) and optionally at least one other monomer (B2), in the presence of the polymer backbone A,

wherein preferably at least 10 weight percent of the total amount of vinyl ester monomer (B1) is selected from vinyl acetate, vinyl propionate and vinyl laurate, more preferably from vinyl acetate and vinyl laurate, and most preferably vinyl acetate, and wherein the remaining amount of vinyl ester may be any other known vinyl ester, wherein preferably at least 60, more preferably at least 70, even more preferably at least 80, even more preferably 90 weight percent, and most preferably essentially only (i.e. about 100wt.% or even 100 wt.%) vinyl acetate is employed as vinyl ester (weight percent being based on the total weight of vinyl ester monomers B1 being employed),
and wherein preferably essentially no monomer (B2) is employed.

12. The composition according to embodiment 1, wherein the graft polymer comprises:

(A) 20 to 95%, preferably 30 to 90%, more preferably 40 to 85%, most preferably 50 to 80% of a polyalkylene oxide backbone (A) as a graft base ("polymer backbone"), which is obtainable by polymerization of ethylene oxide, wherein the molecular weight of the polymer backbone Mn in g/mol is within 500 to 5000, preferably not more than 3500, more preferably not more than 3000, even more preferably not more than 2500, and most preferably not more than 2000, such as not more than 1800,
and
(B) 5 to 80%, preferably 10 to 70%, more preferably 15 to 60 %, most preferably 20 to 50%, of polymeric sidechains (B) grafted onto the polymer backbone, wherein said polymeric sidechains (B) are obtainable by polymerization of at least one vinyl ester monomer (B1), and optionally at least one other monomer (B2), wherein - if present - the weight ratio of monomer (B2) to monomer (B1) is less than 0.5, preferably less than 0.4, more preferably less than 0.3, even more preferably less than 0.2, and most preferably less than 0.1

(with all percentages as weight percent in relation to the total weight of the graft polymer).

13. The composition according to embodiment 1 and 12, the graft polymer comprising:

(A) a polyalkylene oxide backbone (A) as a graft base ("polymer backbone"), which is obtainable by polymerization of ethylene oxide,
and
(B) polymeric sidechains grafted onto the polymer backbone, wherein said polymeric sidechains (B) are obtainable by polymerization of at least one vinyl ester monomer (B1), and optionally at least one other monomer (B2), wherein - if present - the weight ratio of monomer (B2) to monomer (B 1) is less than 0.5, preferably less than 0.4, more preferably less than 0.3, even more preferably less than 0.2, and most preferably less than 0.1, and

wherein the product of formula

$$P = [\text{molecular weight of the polymer backbone Mn in g/mol}] \times [\text{percentage of amount of polymeric sidechains (B) based on total polymer weight, with polymer weight being set to "1" and the percentage of amount of (B) as fraction thereof}]$$

is in the range of from 50 to 1500, preferably not more than 1200, more preferably not more than 1000, even more preferably not more than 800, and most preferably not more than 600 such as not more than 400, or even not more than 300, and preferably at least 100, and more preferably at least 120.

14. The composition according to embodiment 1, and 12-13, wherein

i) the polymer backbone (A) may be bare as the two end-groups one or two hydroxygroups or may be capped on one end or both ends with $C_1$ to $C_{22}$-alkyl groups, preferably $C_1$ to $C_4$-alkyl groups, and/or
ii) the graft polymer has a polydispersity Mw/Mn of < 5, preferably < 3.5, more preferably < 3, and most preferably in the range from 1.0 to 2.5 (with Mw = weight average molecular weight and Mn = number average molecular weight [g/mol / g/mol]), and/or
iii) essentially no monomer (B2) is employed for the polymerization to obtain the side chains (B).

15. The composition according to embodiment 1, and 12-14, wherein at least 10 weight percent of the total amount of vinyl ester monomer (B1) is selected from vinyl acetate, vinyl propionate and vinyl laurate, more preferably from vinyl acetate and vinyl laurate, and most preferably vinyl acetate, and wherein the remaining amount of vinyl ester may be any other known vinyl ester, wherein preferably at least 60, more preferably at least 70, even more preferably at least 80, even more preferably at least 90 weight percent, and most preferably essentially only (i.e. about 100wt.% or even 100 wt.%) vinyl acetate is employed as vinyl ester (weight percent being based on the total weight of vinyl ester monomers B 1 being employed).

16. The composition according to any preceding embodiment, wherein the polyol core of the propoxylated polyol is a monomer, oligomer or polymer, wherein each of the oligomer and the polymer comprise a plurality of subunits, preferably the oligomer is a homooligomer or the polymer is a heteropolymer.

17. The composition according to any preceding embodiment, wherein the propoxylated polyol comprises polypropylene oxide branches comprising on average at least at least 5 polypropylene oxide units (POs), preferably at least 6 POs and more preferably at least 8 POs.

18. The composition according to any preceding embodiment, wherein the propoxylated polyol comprises polypropylene oxide branches comprising on average not more than 30 POs, preferably not more than 25 POs and more preferably not more than 22 POs.

19. The composition according to any preceding embodiment, wherein the polyol core has a weight ranging from 90 to 500 g/mol, preferably from 100 to 300 g/mol and more preferably from 120 to 250 g/mol.

20. The composition according to any preceding embodiment, wherein the propoxylated polyol has a structure such that F is 0 or greater than 0 for Formula (I) and/or Formula (II), wherein:

Formula (I) is:

$$F = 2.769\ PQ - 12.46\ P - 0.209\ QX + 0.524\ Q + 0.726\ X + 1;$$

and

Formula (II) is:

$$F = 0.1123\ PQ - 0.505\ P + 0.0027\ QX - 0.209\ Q - 0.018\ X + 1;$$

wherein:

X = the average number of POs per propylene oxide branch;
P = the average number of ether linkages in the polyol core; and
Q = the average number of -OH groups in the polyol core.

21. The composition according to any preceding embodiment, wherein the weight average molecular weight (Mw) of the propoxylated polyol is in the range of from 700 to 10,000 g/mol, preferable from 1,000 to 8,000 g/mol, preferably from 1,300 to 6,000 g/mol, preferably from 1,600 to 4,000 g/mol, and more preferably from 2,000 to 3,500 g/mol.

22. The composition according to any preceding embodiment, wherein the polyol core is selected from the group consisting of glycerol, meso-Erythritol, D-threitol, L-threitol, 1,2,5,6-hexanetetrol, pentaerythritol, xylitol, ribitol, arabitol, pentitol, diglycerol, triglycerol, and polyglycerol and wherein the polyglycerol preferably consists of two to three subunits of glycerol.

23. The composition according to embodiment 22, wherein the polyol core is selected from the group consisting of meso-Erythritol, D-threitol, L-threitol, 1,2,5,6-hexanetetrol, pentaerythritol, xylitol, ribitol, arabitol, pentitol, diglycerol, triglycerol, and polyglycerol and wherein the polyglycerol preferably consists of two to three subunits of glycerol.

24. The composition according to embodiment 22, wherein the polyol core is selected from the group consisting of meso-Erythritol, pentaerythritol, diglycerol, triglycerol, and polyglycerol and wherein the polyglycerol preferably consists of two to three subunits of glycerol.

25. The composition according to any preceding embodiment, wherein the amount of secondary alcohol groups in the propoxylated polyol is in the range of from 30 to 100 %, preferably from 75 to 99 % and more preferably from 95 to 98 %.

26. The composition according to any preceding embodiment, wherein the amount of secondary alcohol groups in the propoxylated polyol based on the indicated polyols is in the ranges as follows:
Glycerol: 33 to 100%; meso-Erythritol: 50 to 100 %; D-th]reitol: 50 to 100 %; L-threitol: 50 to 100 %; 1,2,5,6-hexanetetrol: 50 to 100 %; pentaerythritol: 30 to 100 %; xylitol: 60 to 100 %; ribitol: 60 to 100 %; arabitol: 60 to 100 %; pentitol: 60 to 100 %; and polyglycerol: 33 to 100%.

## EXAMPLES

Method of testing polymer biodegradation

Biodegradation in wastewater was tested in triplicate using the OECD 301F manometric respirometry method. OECD 301F is an aerobic test that measures biodegradation of a sample by measuring the consumption of oxygen. To a measured volume of medium, 100 mg/L test substance, which is the nominal sole source of carbon is added along with the inoculum (30 mg/L, aerated sludge taken from Mannheim wastewater treatment plant). This is stirred in a closed flask at a constant temperature (20°C or 25°C) for 28 or 56 days, respectively. The consumption of oxygen is determined by measuring the change in pressure in the apparatus using an OxiTop® C (Xylem 35 Analytics Germany Sales GmbH & Co KG). Evolved carbon dioxide is absorbed in a solution of sodium hydroxide. Nitrification inhibitors are added to the flask to prevent usage of oxygen due to nitrification. The amount of oxygen taken up by the microbial population during biodegradation of the test substance (corrected for uptake by blank inoculum, run in parallel) is expressed as a percentage of ThOD (Theoretical oxygen demand, which is measured by the elemental analysis of the compound). A positive control Glucose/Glucosamine is run along with the test samples for each cabinet.

Method for evaluating stain removal benefit of polymers in laundry detergent.

Cleaning benefits of polymers are evaluated using automatic tergotometer. Some examples test stains suitable for this test are:

Dust Sebum on polycotton ex CFT
Highly Discriminating Sebum on polycotton ex CFT

The stains are analysed using Image Analysis System for Laundry stain removal testing before and after the wash.

SBL2004 test soil strips supplied by WFK Testgewebe GmbH are used to simulate consumer soil levels (mix of body soil, food, dirt etc.). Every 1 SBL2004 strip is loaded with 8g soil. The SBL2004 test soil strips were cut into 5 × 5 cm squares for use in the test.

Additional ballast (background fabric swatches) is also used to simulate a fabric load and provide mechanical

energy during the real laundry process. Ballast loads are comprised of knitted cotton swatches at 5 × 5 cm size.

The desired amount of detergent is fully dissolved by mixing with 1L water (at defined hardness) in each tergotometer pot. 60 total grams of fabrics including stains (2 internal replicates of each stain in each pot), defined amount of 5 × 5 cm SBL2004 and ballast are washed and rinsed in the tergotometer pot under defined conditions. The test is repeated for 4 times (4 external replicates).

All stains are tumbled dried between 60-65°C until dry, then stains are measured again using Image Analysis System for Laundry stain removal testing.

Stain Removal Index (SRI) are automatically calculated from the L, a, b values using the formula shown below. The higher the SRI, the better the stain removal.

$$SRI = 100*((\Delta E_b - \Delta E_a) / \Delta E_b)$$

$$\Delta E_b = \sqrt{((L_c-L_b)^2 + (a_c-a_b)^2 + (b_c-b_b)^2)}$$

$$\Delta E_a = \sqrt{((L_c-L_a)^2 + (a_c-a_a)^2 + (b_c-b_a)^2)}$$

Subscript 'b' denotes data for the stain before washing
Subscript 'a' denotes data for the stain after washing
Subscript 'c' denotes data for the unstained fabric

Method for Evaluating Flash Suds

The suds profile of a laundry detergent is a very important property to consumers. The detergent must deliver enough suds to serve as a signal to consumers to show effective cleaning but not too much that extra rinse effort are required to remove excess suds. The initial bloom of suds which generated at the start of a wash cycle upon mechanical agitation in a washing machine or in a basin when consumer is washing using their hands, so-called "flash suds," constitutes the first suds touch point for consumer, is a critical signal which consumer view as a sign of an effective laundry detergent.

The flash suds of comparative and inventive composition are evaluated using automatic Tergotometer with 10 pots for laundry formulation testing.

SBL2004 test soil strips supplied by WFK Testgewebe GmbH are used to simulate consumer soil levels (mix of body soil, food, dirt etc.). Every 1 SBL2004 strip is loaded with 8g soil. The SBL2004 test soil strips were cut into 5 × 5 cm squares for use in the test.

2500ppm of detergent is fully dissolved by mixing with 1L water at 7gpg in each tergotometer pot with 5 pieces 5×5cm SBL2004 at 25°C for 1 minute. A one minute suds generation cycle is then carried out, suds are allowed to stabilize for one minute after which time a photograph is taken of each tergotometer pot at same distance and position with flash enabled. 4 external replicates are required, and pots are rotated between runs.

In order to determine % suds coverage of pot ImageJ imaging process software is used:

- Image Is opened in Image J
- Image is coverted to 8-bit picture
- Image is adjusted via Auto Threshold feature, under Default method, with 'White objects on black background' checked
- Wand outline tool is selected, and Tolerance changed to 22.
- Outline of inner tergotemeter pot is selected using wand.
- Result is analysed using Analyze particle feature this calculates % of white pixels in the area selected. Areas not covered by suds will be black, areas with suds will be white. This calculation corresponds to the suds coverage of the tergtometer pot.

Synthesis of graft polymer.

The following inventive graft polymer Example 1 was synthesized according to procedure described below.

Graft polymer Example 1

*graft polymerization of vinyl acetate in a ratio of polyalkylene oxide / VAc (60 / 40), wherein the polyalkylene oxide is triblock copolymer ($PO_{13}$-$EO_{24}$-$PO_{13}$).*

A polymerization vessel equipped with stirrer and reflux condenser was initially charged with 600 g of triblock copolymer ($PO_{13}$-$EO_{24}$-$PO_{13}$) under nitrogen atmosphere and melted at 90°C.

Feed 1 containing 4.0 g of tert-butyl peroxy-2-ethylhexanoate, dissolved in 33.0 g of tripropylene glycol, was dosed to the stirred vessel in 6:10 h, at 90°C. 5.56% of Feed 1 were dosed in the first 10 min and the rest was dosed with constant feed rate for 6:00 h. 10 minutes after the start of Feed 1, Feed 2 (400 g of vinyl acetate) was started and dosed within 6:00 h at constant feed rate and 90°C. Upon completion of the Feeds 1 and 2, the temperature was increased to 95°C and Feed 3 consisting of 2.55 g of tert-butyl peroxy-2-ethylhexanoate, dissolved in 21.0 g of tripropylene glycol, were dosed within 56 min with constant flow rate at 95 °C. The mixture was stirred for one hour at 95°C upon complete addition of the feed.

Residual amounts of monomer were removed by vacuum distillation for 1 h at 95°C and 500 mbar. The resulting graft polymer had a mean molecular weight $M_w$ of 3 640 g/mol and a polydispersity of 1.5.

Graft polymer Example 2

*graft polymerization of vinyl acetate in a ratio of polyalkylene oxide / VAc (60 / 40), wherein the polyalkylene oxide is triblock copolymer ($PO_{6.5}$-$EO_{48}$-$PO_{6.5}$).*

Instead of using triblock copolymer *($PO_{13}$-$EO_{24}$-$PO_{13}$)* as backbone, triblock copolymer ($PO_{6.5}$-$EO_{48}$-$PO_{6.5}$) was used to make graft polymer Example 2 following similar procedure.

The resulting graft polymer had a mean molecular weight $M_w$ of 5 190 g/mol and a polydispersity of 1.5.

Other inventive graft polymer examples 3-24 can be synthesized following similar procedure. The structure details of graft polymer 1-24 is summarized in Table 5 below:

Table 5.

| | Backbone | Mn | EO | Polymeric sidechains (B) | SUB | Biodegradability (%, 28 days) |
|---|---|---|---|---|---|---|
| 1 | A2 | 2650 | 0.46 | VAc | 0.40 | 59.3 |
| 2 | A2 | 2634 | 0.80 | VAc | 0.40 | 60.0 |
| 3 | A1 | 2900 | 0.46 | VAc | 0.40 | 39.6 |
| 4 | A1 | 2450 | 0.34 | VAc | 0.20 | 46.3 |
| 5 | A2 | 3100 | 0.24 | VAc | 0.40 | 47.0 |
| 6 | A2 | 2150 | 0.26 | VAc | 0.40 | 49.3 |
| 7 | A1 | 1750 | 0.44 | VAc | 0.40 | 49.6 |
| 8 | A1 | 2900 | 0.46 | VAc | 0.20 | 49.8 |
| 9 | A2 | 1950 | 0.55 | VAc | 0.30 | 52.1 |
| 10 | A2 | 2650 | 0.46 | VAc | 0.20 | 56.8 |
| 11 | A1 | 1000 | 0.19 | VAc | 0.40 | 70.0 |
| 12 | A1 | 2000 | 0.16 | VAc | 0.40 | 73.3 |
| 13 | A1 | 2900 | 0.40 | VAc (0.30) / VP (0.20) | 0.50 | 42.0 |
| 14 | C | 600 | 1.00 | VAc | 0.50 | 54 |
| 15 | C | 600 | 1.00 | VAc | 0.30 | 64 |
| 16 | C | 1500 | 1.00 | VAc | 0.30 | 47 |
| 17 | C | 1500 | 1.00 | VAc | 0.25 | 61 |
| 18 | C | 1500 | 1.00 | VAc | 0.20 | 65 |
| 19 | C | 1500 | 1.00 | VAc | 0.15 | 72 |
| 20 | C | 1500 | 1.00 | VAc (0.20) / VLa (0.05) | 0.25 | 59 |
| 21 | D | 2500 | 0.90 | VAc | 0.40 | 47 |

(continued)

| | Backbone | Mn | EO | Polymeric sidechains (B) | SUB | Biodegradability (%, 28 days) |
|---|---|---|---|---|---|---|
| 22 | D | 2500 | 0.75 | VAc | 0.40 | 47 |
| 23 | D | 2500 | 0.20 | VAc | 0.40 | 48 |
| 24 | C | 2407 | 1.00 | VAc | 0.40 | 59 |
| VAc = Vinyl acetate; VP = Vinyl pyrrolidone; VLa = Vinyl Laurate<br>A1: EO/PO/EO triblock backbone; A2: PO/EO/PO tri-block backbone; C: PEG; D: EO/PO random<br>"$M_n$" is the number average molecular weight of the block copolymer backbone (A);<br>"EO" is the molar ratio of ethylene oxide moieties to total alkylene oxide moieties present in the backbone (A)<br>"SUB" is the weight percentage, by weight of the polymer, of polymeric sidechains (B); | | | | | | |

Synthesis of propoxylated polyol.

*Propoxylated polyol example IE 1: meso-Erythritol, propoxylated with 8 moles propylene oxide per hydroxy group*

Example 1a: meso-Erythritol, propoxylated with 3 moles propylene oxide per hydroxy group

In a 21 autoclave 122.1 g meso-erythritol and 1.6 g potassium tert-butoxide were placed and the mixture was heated to 130°C. The vessel was purged three times with nitrogen and the mixture was heated to 140°C. 696.9 g propylene oxide was added within 13 hours. To complete the reaction, the mixture was allowed to post-react for additional 10 hours at 140°C. The reaction mixture was stripped with nitrogen and volatile compounds were removed in vacuo at 80°C. After filtration 815.0 g of a light brown oil was obtained.

Example 1b: meso-Erythritol, propoxylated with 8 moles propylene oxide per hydroxy group

In a 2 l autoclave 245.7 g meso-erythritol, propoxylated with 3 moles propylene oxide per hydroxy group (example 1 a) and 0.7 g potassium tert-butoxide were placed and the mixture was heated to 80°C. The vessel was purged three times with nitrogen and the mixture was heated to 140°C. 348.5 g propylene oxide was added within 5 hours. To complete the reaction, the mixture was allowed to post-react for additional 7 hours at 140°C. The reaction mixture was stripped with nitrogen and volatile compounds were removed in vacuo at 80°C. After filtration 592.0 g of a light brown oil was obtained. Elemental composition was 60.6 % carbon, 29.2 % oxygen, 10.4 % hydrogen.

*Synthesis of propoxylated polyol IE 10: Polyglycerol, propoxylated with 4 moles propylene oxide per hydroxy group*

Example 1a: Polyglycerol, propoxylated with 4 moles propylene oxide per hydroxy group

In a 2 1 autoclave 150.0 g polyglycerol (polyglycerol HT, obtained from Solvay chemicals international, hydroxy value: 1148 mg KOH/g, this resembles 48.9 g per mole hydroxy group), and 1.7 g potassium tert-butoxide were placed and the mixture was heated to 130°C. The vessel was purged three times with nitrogen and the mixture was heated to 140°C. 713.1 g propylene oxide was added within 13 hours. To complete the reaction, the mixture was allowed to post-react for additional 10 hours at 140°C. The reaction mixture was stripped with nitrogen and volatile compounds were removed in vacuo at 80°C. After filtration 860.0 g of a light yellow oil was obtained. Elemental analysis: carbon = 59.0%, oxygen= 31.5%, hydrogen = 10.2%

Other inventive polymer examples were synthesized follow similar procedure by adjusting the type of polyol core and the amount of propylene oxide. The chemistry of IE1 to IE19 are summarized in Table 6.

Table 6. inventive propoxylated polyol samples.

| Example | Chemistry |
|---|---|
| IE1 | $(meso\text{-}Erythritol)_1/(PO/OH)_8$ |
| IE2 | $(meso\text{-}Erythritol)_1/(PO/OH)_{10}$ |
| IE3 | $(meso\text{-}Erythritol)_1/(PO/OH)_{15}$ |
| IE4 | $(meso\text{-}Erythritol)_1/(PO/OH)_{17.5}$ |
| IE5 | $(meso\text{-}Erythritol)_1/(PO/OH)_{20}$ |

(continued)

| Example | Chemistry |
|---|---|
| IE6 | $(meso\text{-}Erythritol)_1/(PO/OH)_{25}$ |
| 1E7 | $(Diglycerol)_1/(PO/OH)_8$ |
| IE8 | $(Diglycerol)_1/(PO/OH)_{15}$ |
| IE9 | $(Pentaerythrit)_1/(PO/OH)_9$ |
| IE10 | $(Polyglycerol\ HT)_1/(PO/OH)_4$ |
| IE11 | $(Polyglycerol\ HT)_1/(PO/OH)_8$ |
| IE12 | $(Polyglycerol\ HT)_1/(PO/OH)_{10}$ |
| IE13 | $(Polyglycerol\ HT)_1(PO/OH)_{12}$ |
| IE14 | $(Xylitol)_1/(PO/OH)_8$ |
| IE15 | $(Triglycerol)_1/(PO/OH)_8$ |
| IE16 | $(Triglycerol)_1/(PO/OH)_{15}$ |
| IE17 | $(Glycerol)_1/(PO/OH)_{10}$ |
| IE18 | $(Glycerol)_1/(PO/OH)_{15}$ |
| IE19 | $(Glycerol)_1/(PO/OH)_4$ |

The polymer biodegradability test results according to method described above, the calculated F for Formula (I) and Formula (II) for inventive polymers IE1-IE19 are summarized in Table 7. Inventive polymers IE1-IE19 show improved biodegradability.

Table 7. Biodegradability test results, and calculated F for Formula (I) and Formula (II).

| Example | # -OH per Core (Q) | # PO per - OH (X) | Ether linkages in Core (P) | Biodegradability (%) | F for Formula (I) [a] | F for Formula (II) [b] |
|---|---|---|---|---|---|---|
| IE1 | 4 | 8 | 0 | 75 | 2,216 | 0,106 |
| IE2 | 4 | 10 | 0 | 75 | 1,996 | 0,092 |
| IE3 | 4 | 15 | 0 | 80 | 1,446 | 0,056 |
| IE4 | 4 | 17,50 | 0 | 81 | 1,171 | 0,038 |
| IE5 | 4 | 20 | 0 | 79 | 0,896 | 0,020 |
| IE6 | 4 | 25 | 0 | 55 | 0,346 | -0,016 |
| IE7 | 4 | 8 | 1 | 82 | 0,832 | 0,051 |
| IE8 | 4 | 15 | 1 | 87 | 0,062 | 0,000 |
| IE9 | 4 | 9 | 0 | 82 | 2,106 | 0,099 |
| IE10 | 4,5 | 4 | 1,5 | 65 | 2,501 | 0,037 |
| IE11 | 4,5 | 8 | 1,5 | 70 | 1,643 | 0,013 |
| IE12 | 4,5 | 10 | 1,5 | 72 | 1,214 | 0,002 |
| IE13 | 4,5 | 12 | 1,5 | 50 | 0,785 | -0,010 |
| IE14 | 5 | 8 | 0 | 53 | 1,068 | -0,081 |
| IE15 | 5 | 8 | 2 | 79 | 3,838 | 0,032 |
| IE16 | 5 | 15 | 2 | 60 | 1,605 | 0,001 |
| IE17 | 3 | 10 | 0 | 85 | 3,562 | 0,274 |
| IE18 | 3 | 15 | 0 | 90 | 4,057 | 0,225 |

(continued)

| Example | # -OH per Core (Q) | # PO per -OH (X) | Ether linkages in Core (P) | Biodegradability (%) | F for Formula (I) [a] | F for Formula (II) [b] |
|---|---|---|---|---|---|---|
| IE19 | 3 | 4 | 0 | 77 | 2,968 | 0,333 |
| a. corresponding to biodegradability >40% in OECD 301F test<br>b. corresponding to biodegradability >60% in OECD 301F test. | | | | | | |

Stain Removal and Suds Performance in Liquid Detergent:

Liquid detergent composition E, F1-F4 below are prepared by traditional means known to those of ordinary skill in the art by mixing the listed ingredients (Table 8).

The stain removal performance of the inventive polymers is evaluated according to the method for evaluating stain removal benefit of polymers in laundry detergent above. The Liquid detergent concentration is 2500ppm, fabrics are washed at 30°C for 12 minutes at 7gpg hardness, followed by 5 minute rinse at 15°C. 11 SBL squares were added as soil to simulate consumer soil levels.

The suds coverage is evaluated according to the method of evaluating suds.

By directly comparing the stain removal and suds coverage of composition E, F1-F4 using composition E as reference (Table 8), Inventive composition F3 and F4 show both improved cleaning and suds profile.

Table 8.

| Ingredients (wt%) | E (comparative) | F1 (comparative) | F2 (comparative) | F3 (Inventive) | F4 (Inventive) |
|---|---|---|---|---|---|
| LAS | 9.7 | 9.7 | 9.7 | 9.7 | 9.7 |
| AES | 7.0 | 7.0 | 7.0 | 7.0 | 7.0 |
| $C_{12-14}$ $EO_9$ nonionic surfactant | 6.1 | 6.1 | 6.1 | 6.1 | 6.1 |
| Propylene glycol | 6.0 | 6.0 | 6.0 | 6.0 | 6.0 |
| Sodium Lauryl Sulfate | 5.2 | 5.2 | 5.2 | 5.2 | 5.2 |
| Ethanolamine | 3.9 | 3.9 | 3.9 | 3.9 | 3.9 |
| Monoethanolamine | 3.9 | 3.9 | 3.9 | 3.9 | 3.9 |
| Graft Polymer Example 1 | 0 | 4.7 | 0 | 2.7 | 3.3 |
| Propoxylated polyol IE1 | 0 | 0 | 4.7 | 1.2 | 1.4 |
| Citric acid | 2.4 | 2.4 | 2.4 | 2.4 | 2.4 |
| Boron sodium oxide | 2.2 | 2.2 | 2.2 | 2.2 | 2.2 |
| Fatty acids | 2.0 | 2.0 | 2.0 | 2.0 | 2.0 |
| Ethanol | 1.9 | 1.9 | 1.9 | 1.9 | 1.9 |
| Perfume | 0.75 | 0.75 | 0.75 | 0.75 | 0.75 |
| Chelant | 0.34 | 0.34 | 0.34 | 0.34 | 0.34 |
| Suds Suppressor | 0.2 | 0.2 | 0.2 | 0.2 | 0.2 |
| Enzyme (including Protease, Amylase, Mannanase, Pectawash) | 0.11 | 0.11 | 0.11 | 0.11 | 0.11 |
| Sodium cumene sulfonate | 0.1 | 0.1 | 0.1 | 0.1 | 0.1 |
| Hydrogenated Castor Oil | 0.082 | 0.082 | 0.082 | 0.082 | 0.082 |
| Water / minors | Balance | Balance | Balance | Balance | Balance |
| Performance (ΔSRI Dust Sebum on poly cotton) | reference | +5.8 | +9.2s | +9.9s | +9.9s |

(continued)

| Ingredients (wt%) | E (comparative) | F1 (comparative) | F2 (comparative) | F3 (Inventive) | F4 (Inventive) |
|---|---|---|---|---|---|
| (ΔSRI Discriminating Sebum on poly cotton) | reference | +2.6 | +4.2 | +7.6s | +3.5 |
| Flash Suds (% suds coverage) | reference | -0.5% | -9.5%s | -1.3% | -3.1% |
| Chelant = DETA + GLDA<br>Perfume = Free perfume + PMC (Perfume Micro Capsule)<br>s: statistically significant versus reference. | | | | | |

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

## Claims

1. A fabric and home care composition comprising, a fabric and home care ingredient, a graft polymer and a propoxylated polyol, wherein

   The graft polymer comprises:

   (A) a polyalkylene oxide backbone (A) which comprises at least one structural unit derived from the group of monomers consisting of ethylene oxide, 1,2-propylene oxide, 1,2-butylene oxide, 2,3-butylene oxide, 1,2-pentene oxide and 2,3-pentene oxide, and
   (B) polymeric sidechains (B) grafted onto the polyalkylene oxide backbone (A), wherein said polymeric sidechains (B) comprise at least one vinyl ester monomer (B1) and optionally N-vinylpyrrolidone as further monomer (B2).
   and

   The propoxylated polyol comprises a polyol core comprising from three to five -OH groups, wherein at least one of the -OH groups is modified to form a polypropylene oxide branch, wherein the propoxylated polyol comprises polypropylene oxide branches comprising on average at least four polypropylene oxide units.

2. The composition according to claim 1, wherein the

   (A) polyalkylene oxide backbone (A) is a block copolymer backbone as a graft base, wherein said block copolymer backbone (A) comprises structural units derived from at least two monomers selected from the group of ethylene oxide, 1,2 propylene oxide, 1,2 butylene oxide, 2,3 butylene oxide, 1,2-pentene oxide or 2,3 pentene oxide, the units being arranged in in at least two blocks being structurally different to each other.

3. The composition according to any preceding claim, wherein the graft polymer comprises 20 to 95% by weight of polyalkylene oxide backbone (A) and 5 to 80% by weight of the polymeric sidechains (B) (in relation to the total weight of the graft polymer). Preferably the graft polymer comprises 40 to 85% by weight, more preferably 50 to 75% by weight of the polyalkylene oxide backbone (A), and preferably 15 to 60% by weight, more preferably 25 to 50% by weight of the polymeric sidechains (B) (in relation to the total weight of the graft polymer).

4. The composition according to any preceding claim, wherein the polyalkylene oxide backbone (A) is a block copolymer obtainable by polymerization of

   i) at least two monomers selected from the group of ethylene oxide, 1,2-propylene oxide or 1,2-butylene oxide, preferably by polymerization of ethylene oxide and 1,2-propylene oxide as monomers, and/or
   ii) one of the at least two monomers employed is ethylene oxide, preferably the second monomer employed is 1,2-propylene oxide, and/or

wherein, the number (x) of individual blocks within the block copolymer backbone (A) is an integer, wherein x has a value from 2 to 10, preferably x has a value from 3 to 5, more preferably x is 3 or 5, most preferably x is 3.

**5.** The composition according to any preceding claim, wherein

i) the graft polymer has a mean molecular weight $M_w$ of from 1 000 to 100 000 g/mol, preferably from 2 000 to 45 000 g/mol and more preferably from 3 000 to 30 000 g/mol, and/or
ii) the graft polymer has a polydispersity $M_w/M_n$ of < 3, preferably < 2.5, more preferably < 2.3, and most preferably in the range from 1.0 to 2.2 (with $M_w$ = mean molecular weight and $M_n$ = mean molecular mass [$^g/_{mol}$ / $^g/_{mol}$]), and/or
iii) the polyalkylene oxide backbone (A) is optionally capped at one or both endgroups, preferably the block copolymer backbone (A) is not capped at both endgroups or, if the block copolymer backbone (A) is capped, the capping is done by $C_1$-$C_{25}$-alkyl groups, and/or
iv) the polyalkylene oxide backbone (A) is a triblock copolymer of polyethylene oxide (PEG) and polypropylene oxide (PPG).

**6.** The composition according to any preceding claim, wherein the polyalkylene oxide backbone (A) has the structure according to formula (A1) or formula (A2) with

formula (A1) is defined as follows:

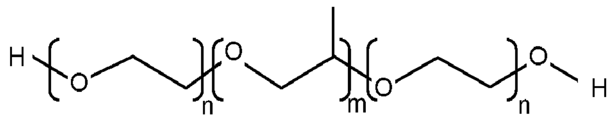

(A1)

with

n is an integer in the range of 2 to 100, preferably of 3 to 80, and
m is an integer in the range of 2 to 100, preferably of 10 to 70, more preferably of 14 to 54, or

formula (A2) is defined as follows:

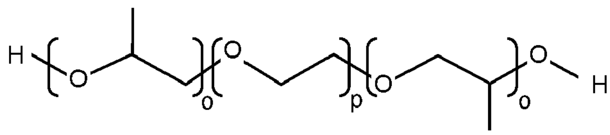

(A2)

with

o is an integer in the range of 2 to 100, preferably of 5 to 50, more preferably of 8 to 27, and
p is an integer in the range of 2 to 100, preferably of 5 to 50, more preferably of 7 to 24.

**7.** The composition according to claim 1, wherein in the graft polymerthe polyalkylene oxide backbone (A) is a copolymer backbone as a graft base and comprises at least two types of monomers selected from the group of ethylene oxide, 1,2-propylene oxide, 1,2-butylene oxide, 2,3-butylene oxide, 1,2-pentene oxide or 2,3-pentene oxide,

a. wherein the distribution of the alkylene oxide moieties within the copolymer backbone is in random order, and
b. wherein the molecular weight of the copolymer backbone Mn in g/mol is within 500 to 7000, preferably not more than 6000, more preferably not more than 5000, even more preferably not more than 4500, even more preferably not more than 4000, even more preferably not more than 3500 and most preferably not more than 3000, and preferably at least 1000, more preferably at least 1200,
and

(B) polymeric sidechains grafted onto the copolymer backbone, wherein said polymeric sidechains (B) are obtainable by polymerization of at least one vinyl ester monomer (B 1), and optionally at least one other monomer (B2), wherein - if present - the weight ratio of monomer (B2) to monomer (B1) is less than 0.5, preferably less than 0.4, more preferably

less than 0.3, even more preferably less than 0.2, and most preferably less than 0.1, comprising in percent by weight in relation to the total weight of the graft polymer 25 to 85%, preferably 30 to 80%, more preferably 35 to 80%, even more preferably 40 to 75%, and most preferably 55 to 75%, of the copolymer backbone (A), And
15 to 75%, preferably 20 to 70%, more preferably 20 to 65 %, even more preferably 25 to 60%, most preferably 25 to 45%, of the polymeric sidechains (B).

**8.** The composition according to claim 1, wherein the graft polymer comprises:

(A) 20 to 95%, preferably 30 to 90%, more preferably 40 to 85%, most preferably 50 to 80% of a polyalkylene oxide backbone (A) as a graft base ("polymer backbone"), which is obtainable by polymerization of ethylene oxide, wherein the molecular weight of the polymer backbone Mn in g/mol is within 500 to 5000, preferably not more than 3500, more preferably not more than 3000, even more preferably not more than 2500, and most preferably not more than 2000, such as not more than 1800,
and
(B) 5 to 80%, preferably 10 to 70%, more preferably 15 to 60 %, most preferably 20 to 50%, of polymeric sidechains (B) grafted onto the polymer backbone, wherein said polymeric sidechains (B) are obtainable by polymerization of at least one vinyl ester monomer (B1), and optionally at least one other monomer (B2), wherein - if present - the weight ratio of monomer (B2) to monomer (B1) is less than 0.5, preferably less than 0.4, more preferably less than 0.3, even more preferably less than 0.2, and most preferably less than 0.1

(with all percentages as weight percent in relation to the total weight of the graft polymer).

**9.** The composition according to claims 1 and 8, wherein

i) the polymer backbone (A) may be bare as the two end-groups one or two hydroxygroups or may be capped on one end or both ends with $C_1$ to $C_{22}$-alkyl groups, preferably $C_1$ to $C_4$-alkyl groups, and/or
ii) the graft polymer has a polydispersity Mw/Mn of < 5, preferably < 3.5, more preferably < 3, and most preferably in the range from 1.0 to 2.5 (with Mw = weight average molecular weight and Mn = number average molecular weight [g/mol / g/mol]), and/or
iii) essentially no monomer (B2) is employed for the polymerization to obtain the side chains (B).

**10.** The composition according to claims 1 and 8-9, wherein at least 10 weight percent of the total amount of vinyl ester monomer (B1) is selected from vinyl acetate, vinyl propionate and vinyl laurate, more preferably from vinyl acetate and vinyl laurate, and most preferably vinyl acetate, and wherein the remaining amount of vinyl ester may be any other known vinyl ester, wherein preferably at least 60, more preferably at least 70, even more preferably at least 80, even more preferably at least 90 weight percent, and most preferably essentially only (i.e. about 100wt.% or even 100 wt.%) vinyl acetate is employed as vinyl ester (weight percent being based on the total weight of vinyl ester monomers B1 being employed).

**11.** The composition according to any preceding claim, wherein the polyol core of the propoxylated polyol is a monomer, oligomer or polymer, wherein each of the oligomer and the polymer comprise a plurality of subunits, preferably the oligomer is a homooligomer or the polymer is a heteropolymer.

**12.** The composition according to any preceding claim, wherein the propoxylated polyol comprises polypropylene oxide branches comprising on average at least at least 5 polypropylene oxide units (POs), preferably at least 6 POs and more preferably at least 8 POs.

**13.** The composition according to any preceding claim, wherein the propoxylated polyol comprises polypropylene oxide branches comprising on average not more than 30 POs, preferably not more than 25 POs and more preferably not more than 22 POs.

**14.** The composition according to any preceding claim, wherein the propoxylated polyol has a structure such that F is 0 or greater than 0 for Formula (I) and/or Formula (II), wherein:

Formula (I) is:

$$F = 2.769\ PQ - 12.46\ P - 0.209\ QX + 0.524\ Q + 0.726\ X + 1;$$

and
Formula (II) is:

$$F = 0.1123\ PQ - 0.505\ P + 0.0027\ QX - 0.209\ Q - 0.018\ X + 1;$$

wherein:

X = the average number of POs per propylene oxide branch;
P = the average number of ether linkages in the polyol core; and
Q = the average number of -OH groups in the polyol core.

**15.** The composition according to any preceding claim, wherein the polyol core is selected from the group consisting of glycerol, meso-Erythritol, D-threitol, L-threitol, 1,2,5,6-hexanetetrol, pentaerythritol, xylitol, ribitol, arabitol, pentitol, diglycerol, triglycerol, and polyglycerol and wherein the polyglycerol preferably consists of two to three subunits of glycerol.

Europäisches Patentamt
European Patent Office
Office européen des brevets

# EUROPEAN SEARCH REPORT

Application Number
EP 23 18 1577

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D<br>Y | EP 3 298 120 B1 (PROCTER & GAMBLE [US]) 20 January 2021 (2021-01-20)<br>* paragraphs [0040], [0042]-[0045], [0143], [0158]; table 9 * | 1,3,5, 11,13-15<br>2,4-10, 12,15 | INV.<br>C11D3/37<br>C08G65/26<br>C08F218/04<br>C08F226/10<br>C08F283/06<br>C08L51/08 |
| Y | WO 2021/160795 A1 (BASF SE [DE]) 19 August 2021 (2021-08-19)<br>* page 6, lines 20-36; page 9, line 1 to page 11, line 35; page 21, lines 5-22; claims 1, 3, 4, 5 * | 2,4-6 | |
| Y | EP 4 134 420 A1 (PROCTER & GAMBLE [US]) 15 February 2023 (2023-02-15)<br>* claims 1-5 * | 7-10 | |
| Y | GB 2 205 578 A (KAO CORP) 14 December 1988 (1988-12-14)<br>* claim 1; page 9, line 10 to page 10, line 9 * | 12 | |
| Y | US 2022/356416 A1 (SIVIK MARK ROBERT [US] ET AL) 10 November 2022 (2022-11-10)<br>* paragraphs [0024]-[0026] * | 15 | TECHNICAL FIELDS SEARCHED (IPC) |
| Y | US 2016/222319 A1 (GOODWIN MAHZAD [GB] ET AL) 4 August 2016 (2016-08-04)<br>* paragraphs [0005], [0008], [0018], [0019]-[0024], [0028] * | 12 | C11D<br>C09J<br>C08G<br>C08F<br>C08L |

The present search report has been drawn up for all claims

1

| Place of search | Date of completion of the search | Examiner |
|---|---|---|
| The Hague | 8 December 2023 | Engelskirchen, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 18 1577

This annex lists the patent family members relating to the patent documents cited in the above-mentioned European search report. The members are as contained in the European Patent Office EDP file on
The European Patent Office is in no way liable for these particulars which are merely given for the purpose of information.

08-12-2023

| Patent document cited in search report | Publication date | Patent family member(s) | Publication date |
|---|---|---|---|
| EP 3298120 B1 | 20-01-2021 | EP 3298120 A1 | 28-03-2018 |
| | | JP 6640248 B2 | 05-02-2020 |
| | | JP 6961659 B2 | 05-11-2021 |
| | | JP 2018517028 A | 28-06-2018 |
| | | JP 2020033565 A | 05-03-2020 |
| | | US 2016340619 A1 | 24-11-2016 |
| | | WO 2016191238 A1 | 01-12-2016 |
| WO 2021160795 A1 | 19-08-2021 | BR 112022015987 A2 | 11-10-2022 |
| | | BR 112022016120 A2 | 18-10-2022 |
| | | CA 3167483 A1 | 19-08-2021 |
| | | CN 115103862 A | 23-09-2022 |
| | | CN 115698097 A | 03-02-2023 |
| | | EP 4103625 A1 | 21-12-2022 |
| | | EP 4103626 A1 | 21-12-2022 |
| | | JP 2023513554 A | 31-03-2023 |
| | | JP 2023515384 A | 13-04-2023 |
| | | US 2022389143 A1 | 08-12-2022 |
| | | US 2023087697 A1 | 23-03-2023 |
| | | WO 2021160795 A1 | 19-08-2021 |
| | | WO 2021160851 A1 | 19-08-2021 |
| EP 4134420 A1 | 15-02-2023 | EP 4134420 A1 | 15-02-2023 |
| | | WO 2023019152 A1 | 16-02-2023 |
| GB 2205578 A | 14-12-1988 | GB 2205578 A | 14-12-1988 |
| | | HK 40493 A | 07-05-1993 |
| | | JP H0441718 B2 | 09-07-1992 |
| | | JP S63277300 A | 15-11-1988 |
| | | MY 103274 A | 29-05-1993 |
| | | SG 14593 G | 16-04-1993 |
| US 2022356416 A1 | 10-11-2022 | EP 4097205 A1 | 07-12-2022 |
| | | US 2022356416 A1 | 10-11-2022 |
| | | WO 2021154570 A1 | 05-08-2021 |
| US 2016222319 A1 | 04-08-2016 | BR 112016005935 A2 | 05-09-2017 |
| | | CN 105555938 A | 04-05-2016 |
| | | DE 112014002769 T5 | 03-03-2016 |
| | | EP 3047012 A1 | 27-07-2016 |
| | | ES 2743613 T3 | 20-02-2020 |
| | | JP 2016535153 A | 10-11-2016 |
| | | PL 3047012 T3 | 29-11-2019 |
| | | US 2016222319 A1 | 04-08-2016 |
| | | WO 2015040362 A1 | 26-03-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0362688 A
- EP 362688 A
- WO 2021165468 A
- EP 3298120 A
- JP 2022056680 A
- US 7468348 B
- WO 2023057604 A
- WO 2023057531 A
- WO 2023057530 A
- WO 2004067737 A
- WO 2015091989 A
- WO 2015091990 A
- WO 2015024739 A
- WO 2015143360 A
- US 6312936 B1
- US 5679630 A
- US 4760025 A
- DE 102006022216 A1
- DE 102006022224 A1
- WO 2015089447 A
- WO 2015089441 A
- WO 2016066756 A
- WO 2016066757 A
- WO 2016069557 A
- WO 2016069563 A
- WO 2016069569 A
- WO 2017089093 A
- WO 2020156419 A
- WO 8906270 A
- WO 05052161 A
- WO 05052146 A
- WO 07044993 A2
- WO 2014194032 A
- WO 2014194054 A
- WO 2014194117 A
- WO 2015193488 A
- WO 2016075078 A
- WO 9217577 A
- US 5352604 A
- US 7153818 B
- WO 9700324 A
- EP 1022334 A
- WO 9402597 A
- WO 9418314 A
- WO 9623874 A
- WO 9743424 A
- US 5856164 A
- WO 9923211 A
- WO 9623873 A
- WO 0060060 A
- WO 06002643 A
- US 6093562 A
- WO 09149130 A
- WO 2016091688 A
- WO 2014099523 A
- WO 2014164777 A
- WO 2009149271 A
- US 6939702 B1
- US 20090217464 A
- WO 2013171241 A
- WO 2011084412 A
- WO 2013033318 A
- WO 2018228880 A
- WO 2018228881 A
- EP 3299457 A
- WO 2018209026 A
- WO 2017036901 A
- WO 2017005798 A
- US 4435307 A
- US 5648263 A
- US 5691178 A
- US 5776757 A
- US 7361736 B
- US 6268197 B
- US 6630340 B
- WO 2002077242 A
- US 7172891 B
- WO 2017162836 A
- WO 2018108865 A
- WO 2018011277 A
- WO 2018178061 A
- WO 2020074499 A
- WO 2018184873 A
- WO 2017186936 A
- WO 2017186937 A
- WO 2017186943 A
- WO 2017207770 A
- WO 2019086520 A
- WO 2019086528 A
- WO 2019086530 A
- WO 2019086532 A
- WO 2019086521 A
- WO 2019086526 A
- WO 2020002604 A
- WO 2020002608 A
- WO 2020007863 A
- WO 2020007875 A
- WO 2020008024 A

- WO 2020070063 A
- WO 2020070249 A
- WO 2020088957 A
- WO 2020088958 A
- WO 2020207944 A
- WO 2015040159 A
- WO 2015185689 A
- WO 2020030760 A
- WO 2020030469 A
- WO 2009061990 A
- WO 2006108857 A
- WO 2021061774 A
- WO 2021239547 A
- EP 3222647 A
- WO 2014019903 A
- WO 2014019658 A
- WO 2014019659 A
- EP 351759 A
- WO 2022100876 A
- WO 2011031599 A
- WO 2009154933 A
- WO 2006117056 A
- WO 2014124872 A
- WO 2015044061 A
- US 20180346846 A
- WO 2019111948 A
- WO 2019111949 A
- WO 2019111946 A
- WO 2019111947 A
- WO 2022060754 A
- WO 2021242942 A
- WO 2020091988 A
- WO 2015144438 A
- EP 0703243 A
- US 6063914 A
- WO 2021194808 A
- WO 2021225837 A
- WO 2021257793 A
- WO 2021257932 A
- WO 2021257786 A
- WO 2018112187 A
- WO 2019246228 A
- WO 2019246171 A
- WO 2021252558 A
- WO 2021252560 A
- WO 2021252561 A
- EP 3922704 A
- WO 2021252569 A
- WO 2021252562 A
- WO 2021252559 A
- WO 2021252575 A
- WO 2021252563 A
- US 20190274943 A
- US 20180119055 A
- US 20210115358 A
- WO 2019243072 A
- WO 2019243108 A
- WO 2021156093 A
- US 8450261 B
- US 8389458 B
- WO 2010024468 A
- WO 2014032267 A
- WO 2019197188 A
- WO 2019197187 A
- WO 2019197185 A
- WO 2019197186 A
- WO 2019105938 A
- WO 2019105939 A
- WO 2019096942 A
- JP 2015105373 B
- US 5576282 A
- US 5597936 A
- US 5595967 A
- US 7445644 B
- US 7585376 B
- US 20090176684 A1
- WO 0887497 A
- WO 2016049389 A
- WO 2009043709 A
- US 3915903 A
- EP 19219568
- US 88059418
- US 88059918
- US 88060418

**Non-patent literature cited in the description**

- Production of propylene oxide from propylene glycol. **ABRAHAM, D. S.** Master's Thesis. University of Missouri-Columbia, 2007, 75
- *CHEMICAL ABSTRACTS*, 51274-37-4